# EUROPEAN PATENT APPLICATION

(11) **EP 2 628 475 A1**
(43) Date of publication of application: **21.08.2013**
(21) Application number: 11832555.4
(22) Date of filing: 12.10.2011
(51) Int. Cl.: A61J 3/00

(54) **MEDICINE BOX DISPENSING APPARATUS**

(30) Priority: 16.12.2010 JP 2010280109; 14.10.2010 JP 2010231583
(71) Applicant: Yuyama Mfg. Co., Ltd., Toyonaka-shi Osaka 561-0841 (JP)
(72) Inventor: YUYAMA, Shoji, Toyonaka-shi Osaka 561-0841 (JP); KOIKE,Naoki, Toyonaka-shi Osaka 561-0841 (JP); SHIGEYAMA, Yasuhiro, Toyonaka-shi Osaka 561-0841 (JP); ITO, Koji, Toyonaka-shi Osaka 561-0841 (JP); TSUDA, Hiromichi, Toyonaka-shi Osaka 561-0841 (JP); FUKADA, Masao, Toyonaka-shi Osaka 561-0841 (JP); KAWAKAMI, Kei, Toyonaka-shi Osaka 561-0841 (JP); KADOSAKA, Masahiro, Toyonaka-shi Osaka 561-0841 (JP)
(74) Representative: Einsel, Martin
(86) International application number: PCT/JP2011/073406
(87) International publication number: WO 2012/050120

(57) **Abstract**

Provided is a medicine box delivering apparatus capable of replenishing medicine boxes in a state of being arranged in parallel. A medicine box delivering apparatus (10) includes: an accommodating and delivering apparatus (20) capable of accommodating medicine boxes, and delivering the medicine boxes for each prescription; a loading apparatus (30) capable of loading the medicine boxes into the accommodating and delivering apparatus (20); and a replenishing apparatus (70) capable of replenishing the medicine boxes into the loading apparatus (30). The replenishing apparatus (70) includes: a replenishing-object medicine box placing portion on which the medicine boxes are placeable in a parallel state; and a transfer mechanism capable of transferring the medicine boxes, which are placed on the replenishing-object medicine box placing portion, to the loading rack while maintaining the parallel state. The loading rack (32) includes: a loading-object medicine box placing portion on which the medicine boxes conveyed from the replenishing apparatus (70) are placeable in the parallel state; and a loading mechanism capable of loading the medicine boxes by conveying, toward the medicine box paths, each of the medicine boxes placed on the loading-object medicine box placing portion.

## Description

### Technical Field

The present invention relates to a medicine box delivering apparatus capable of delivering medicine boxes each containing medicines in accordance with prescription.

### Background Art

Conventionally, there have been provided medicine supply apparatus as disclosed in Patent Literatures 1 and 2 below. The medicine supply apparatus disclosed in Patent Literature 1 below is capable of delivering medicines such as unpacked tablets and capsules in accordance with prescription into vials and then supplying the medicines. Further, the medicine supply apparatus disclosed in Patent Literature 2 below is capable of packaging medicines such as unpacked tablets and capsules, and medicinal powder for each prescription and supplying the medicines.

### Citation List

### Patent Literature

[PTL 1] JP 2007-75178 A
[PTL 2] JP 2007-246114 A

### Summary of Invention

### Technical Problem

In recent years, there have been a demand and practice to directly supply medicines such as tablets packaged with a paper box (hereinafter referred to also as "medicine box") as in a case of commercially available medicines in accordance with prescription for patients in a hospital, a pharmacy, and the like, instead of charging unpacked tablets and capsules, medicinal powder, and the like into separately prepared vials, and instead of packaging those kinds of medicines with packaging sheets. Therefore, there has been a demand to provide an apparatus suited to such a form of supply. Further, there has been a demand that work of provision of the medicines in such a supply method be performed as automatically and efficiently as possible.

In order to meet such demand, the inventors of the present invention have conducted extensive studies. As a result, there has been found that, regarding automation of the above-mentioned work, time and effort are involved with work performed by an operator, specifically, replenishment work for medicine boxes with respect to a medicine box accommodating portion for stocking the medicine boxes. In addition, there has been found that erroneous replenishment is involved, which impairs efficiency of a delivery task for the medicine boxes. As a result, there has been found that, when efficiency regarding factors of the replenishment work for the medicine boxes is mainly enhanced in the medicine box delivering apparatus for performing the delivery task for the medicine boxes, the efficiency of the entire delivery task for the medicine boxes may further be enhanced.

In many cases, the medicine boxes are delivered to a hospital and a pharmacy under a state in which a predetermined number of medicine boxes of the same type are arranged in parallel and accommodated in a packing box such as a cardboard box or packed with a packing sheet made of paper or a resin film. Therefore, when the medicine boxes arranged in parallel can directly be replenished after the medicine boxes are unpacked from the packing box or the packing sheet, the efficiency of replenishment work for the medicine boxes may further be enhanced.

Therefore, based on such finding described above, the present invention has an object to provide a medicine box delivering apparatus capable of replenishing the medicine boxes in a state of being arranged in parallel.

### Solution to Problem

In order to solve the above-mentioned problem, according to the present invention, there is provided a medicine box delivering apparatus, including: an accommodating and delivering apparatus capable of accommodating a large number of medicine boxes containing medicines, and delivering the large number of medicine boxes for each prescription; a loading apparatus capable of loading the large number of medicine boxes into the accommodating and delivering apparatus; and a replenishing apparatus capable of replenishing the large number of medicine boxes into the loading apparatus. The accommodating and delivering apparatus includes a plurality of medicine box paths capable of accommodating the large number of medicine boxes under a state in which the large number of medicine boxes are arranged in series, and sequentially delivering the large number of medicine boxes. Further, the loading apparatus includes a loading rack movable at a position adjacent to a medicine box input side of the plurality of medicine box paths. The replenishing apparatus includes: a replenishing-object medicine box placing portion on which the large number of medicine boxes are placeable in a parallel state; and a transfer mechanism capable of transferring the large number of medicine boxes, which are placed on the replenishing-object medicine box placing portion, to the loading rack while maintaining the parallel state. The loading rack includes: a loading-object medicine box placing portion on which the large number of medicine boxes conveyed from the replenishing apparatus are placeable in the parallel state; and a loading mechanism capable of loading the large number of medicine boxes by conveying, toward the plurality of medicine box paths, each of the large number of medicine boxes placed on the loading-object medicine box placing portion.

In the medicine box delivering apparatus of the present invention, the medicine boxes are placed in a parallel state on the replenishing-object medicine box placing portion of the replenishing apparatus, and the transfer mechanism is actuated so that the medicine boxes can be transferred to the loading-object medicine box placing portion on the loading rack side while maintaining the parallel state of the medicine boxes. Further, the loading mechanism provided to the loading rack is actuated so that each of the medicine boxes placed in the parallel state can be conveyed toward and loaded into the medicine box path. Thus, the medicine box delivering apparatus of the present invention is capable of loading the medicine boxes into an appropriate medicine box path by placing the medicine boxes on the replenishing-object medicine box placing portion under the state in which the medicine boxes are arranged in parallel.

In the medicine box delivering apparatus of the present invention, it is preferred that the loading mechanism includes: a conveying apparatus including a conveying surface capable of coming into contact with a side surface of the each of the large number of medicine boxes placed on the loading-object medicine box placing portion, the conveying apparatus being capable of sliding the each of the large number of medicine boxes in contact with the conveying surface in a direction crossing a direction in which the large number of medicine boxes are arranged on the loading-object medicine box placing portion; and a push-out apparatus capable of moving, toward the conveying surface, the each of the large number of medicine boxes placed on the loading-object medicine box placing portion, and sequentially bringing the large number of medicine boxes into contact with the conveying surface, and that the each of the large number of medicine boxes in contact with the conveying surface be conveyed from the loading-object medicine box placing portion to an outside.

With this structure, each of the medicine boxes placed on the loading-object medicine box placing portion can reliably be conveyed toward and loaded into the medicine box path.

Further, in the medicine box delivering apparatus of the present invention, it is preferred that the conveying apparatus include: an endless belt serving as the conveying surface configured to move in a direction along the side surface of the each of the large number of medicine boxes placed on the loading-object medicine box placing portion; and an abutment portion movable integrally with the conveying surface of the endless belt, and protruding from the conveying surface, and that, when the conveying surface is moved in the direction along the side surface of the each of the large number of medicine boxes under a state in which the each of the large number of medicine boxes placed on the loading-object medicine box placing portion is moved toward the conveying surface, the abutment portion abut on an end surface of one of the large number of medicine boxes on an upstream side in a conveying direction, the one of the large number of medicine boxes being located at a position adjacent to the endless belt, and the one of the large number of medicine boxes located at the position adjacent to the endless belt be conveyed to the accommodating and delivering apparatus.

With this structure, when the conveying surface formed of the endless belt is moved in the direction along the side surface of the medicine box under the state in which the medicine box placed on the loading-object medicine box placing portion is moved toward the conveying surface, the abutment portion abuts on the end surface of the medicine box located at the position adjacent to the endless belt, and the medicine box is pushed and slid toward the accommodating and delivering apparatus by the abutment portion. Thus, according to the medicine box delivering apparatus of the present invention, each of the medicine boxes placed on the loading-object medicine box placing portion can more reliably be conveyed toward and loaded into the medicine box path.

In the medicine box delivering apparatus of the present invention, it is desired that the conveying apparatus include a loading region width adjusting member movable in the direction in which the large number of medicine boxes are arranged on the loading-object medicine box placing portion, the loading region width adjusting member being capable of delimiting a loading-object medicine box placing region of the loading-object medicine box placing portion, in which the large number of medicine boxes are to be placed. Further, it is desired that the replenishing apparatus include a replenishing region width adjusting member capable of delimiting a replenishing-object medicine box placing region of the replenishing-object medicine box placing portion, in which the large number of medicine boxes are to be placed. Still further, it is desired that the medicine box delivering apparatus of the present invention further include: a control apparatus capable of controlling an operation of the loading apparatus; and position detecting means for detecting a position of the replenishing region width adjusting member of the replenishing apparatus, and that the control apparatus be configured to: grasp the replenishing-object medicine box placing region based on the position of the replenishing region width adjusting member that is grasped based on a detection result from the position detecting means, and operate the loading apparatus so that the loading-object medicine box placing region reaches a position adjacent to the replenishing-object medicine box placing region.

With this structure, the placing region of the replenishing-object medicine box placing portion, in which the medicine boxes are placed, is grasped based on the position of the replenishing region width adjusting member, and the loading apparatus is operated so that the loading-object medicine box placing region reaches the position adjacent to the placing region. Thus, the medicine boxes can smoothly be transferred from the replenishing apparatus side to the loading apparatus side under the state in which the medicine boxes are arranged in parallel.

In the medicine box delivering apparatus of the present invention, the position detecting means may include a sensor mounted to the loading rack, the sensor being capable of detecting the replenishing region width adjusting member. Further, the control apparatus may be capable of grasping the position of the replenishing region width adjusting member by causing the position detecting means to detect the replenishing region width adjusting member at a position adjacent to the replenishing apparatus.

With this structure, the control apparatus can smoothly and accurately grasp the position of the replenishing region width adjusting member and the position of the placing region of the replenishing-object medicine box placing portion. Thus, according to the above-mentioned structure, it is possible to operate the loading apparatus so that the medicine boxes can smoothly be transferred from the replenishing apparatus side to the loading apparatus side.

In the medicine box delivering apparatus of the present invention, the replenishing region width adjusting member may be freely movable in a direction in which the large number of medicine boxes are arranged on the replenishing-object medicine box placing portion, and the position detecting means may include a sensor capable of detecting a moving distance of the replenishing region width adjusting member. Further, the control apparatus may be capable of grasping the position of the replenishing region width adjusting member based on the moving distance of the replenishing region width adjusting member that is detected by the position detecting means.

Also with this structure, the control apparatus can smoothly and accurately grasp the position of the replenishing region width adjusting member and the position of the placing region of the replenishing-object medicine box placing portion.

When the replenishing region width adjusting member is not positioned appropriately, the medicine boxes replenished on the replenishing-object medicine box placing portion may fall down. Further, the replenishing region width adjusting member delimits the replenishing-object medicine box placing region, and hence, when the position of the loading apparatus is, for example, adjusted with reference to the position of the replenishing region width adjusting member as described above, it is also expected that the accuracy of the position of the loading apparatus may decrease and the medicine boxes may fail to be transferred from the replenishing apparatus side to the loading apparatus side. Thus, when the replenishing region width adjusting member is provided to the replenishing-object medicine box placing portion, it is desired that the replenishing region width adjusting member can be positioned and fixed.

On the other hand, in order to enable efficient replenishment of the plurality of medicine boxes, it is preferred that an operator who performs the replenishment work can place the plurality of medicine boxes arranged in parallel on the replenishing-object medicine box placing portion while holding the medicine boxes between the hands. Thus, when the replenishing region width adjusting member is provided to the replenishing-object medicine box placing portion so that the replenishing region width adjusting member can be positioned and fixed as described above, it is desired that the replenishing region width adjusting member can easily be unfixed and moved even under the state in which the medicine boxes are held between the hands.

Based on the finding described above, in the medicine box delivering apparatus of the present invention, it is desired that the replenishing apparatus include: an opposing wall arranged so as to be opposed to the replenishing region width adjusting member; and positioning means capable of positioning and fixing the replenishing region width adjusting member at an arbitrary position, the positioning means including an unfixing piece for bringing the replenishing region width adjusting member into an unfixed state, that the unfixing piece be integrally mounted to the replenishing region width adjusting member, and that the replenishing region width adjusting member be capable of coming into the unfixed state by pressing the unfixing piece in a direction in which the replenishing-object medicine box placing region is enlarged.

With this structure, the positioning means can position and fix the replenishing region width adjusting member, and can therefore prevent the medicine boxes from falling down in the replenishing-object medicine box placing portion. Further, when the position of the loading apparatus is, for example, adjusted with reference to the replenishing region width adjusting member, the loading apparatus can be adjusted to an appropriate position, and thus the failure in transferring the medicine boxes from the replenishing apparatus side to the loading apparatus side can be prevented more reliably.

In a case of conveying each of the medicine boxes replenished in the replenishing-object medicine box placing region formed between the replenishing region width adjusting member and the opposing wall in the replenishing apparatus, the operation of conveying the medicine boxes may become difficult under a state in which the medicine boxes are placed at such a high density that the medicine boxes are brought into close contact with each other. Further, under a state in which the medicine boxes replenished in the replenishing-object medicine box placing region are excessively pressed by the replenishing region width adjusting means, there may arise such problems that the medicine boxes are deformed or damaged, and that the medicine boxes fail to be loaded. In particular, those problems tend to arise conspicuously when the plurality of medicine boxes are placed in the replenishing-object medicine box placing region. Thus, when the replenishing region width adjusting member is provided to the replenishing apparatus, it is preferred that an appropriate gap be formed between the medicine boxes arranged in parallel even if the operator who performs the replenishment work moves the replenishing region width adjusting member to a position in close contact with the medicine box.

Based on such finding, in the above-mentioned medicine box delivering apparatus of the present invention, it is further preferred that the unfixing piece be provided so as to protrude toward the replenishing-object medicine box placing region by biasing means, that the replenishing region width adjusting member come into the unfixed state when the unfixing piece is pressed against a biasing force of the biasing means, and that, when the unfixed state is achieved by pressing the unfixing piece and a force of the pressing is released after the unfixing piece comes into contact with one of the large number of medicine boxes placed in the replenishing-object medicine box placing region, the biasing force of the biasing means act on the unfixing piece so as to move the unfixing piece and the replenishing region width adjusting member in the direction in which the replenishing-object medicine box placing region is enlarged, and then the unfixing piece protrude so as to bring the replenishing region width adjusting member into a fixed state.

In the medicine box delivering apparatus of the present invention, the unfixing piece is pressed to bring the replenishing region width adjusting member into the unfixed state and therefore into contact with the side surface of the medicine box placed in the replenishing-object medicine box placing region, with the result that the width of the replenishing-object medicine box placing region can be adjusted to an appropriate width for placing the medicine boxes. Further, when the pressing of the unfixing piece is released after the width of the replenishing-object medicine box placing region is adjusted, the unfixing piece is restored to the state of protruding toward the replenishing-object medicine box placing region due to the biasing force of the biasing means, and comes into contact with the side surface of the medicine box placed in the replenishment region so that the replenishing region width adjusting member moves in the direction in which the replenishing-object medicine box placing region is enlarged. Thus, in the medicine box delivering apparatus of the present invention, a gap is securely formed between the replenishing region width adjusting member and the medicine box placed in the replenishing-object medicine box placing region, and appropriate gaps are formed also between the medicine boxes placed in the replenishing-object medicine box placing region. Thus, according to the medicine box delivering apparatus of the present invention, it is possible to smoothly transfer the medicine boxes from the replenishing apparatus toward the loading apparatus, and to prevent such problems that the medicine boxes are deformed or damaged, and that the medicine boxes fail to be loaded.

The medicine box delivering apparatus of the present invention provided based on the finding described above has features in that the replenishing apparatus includes: a medicine box accommodating box having the replenishing-object medicine box placing portion and the replenishing region width adjusting member arranged inside; a shutter capable of opening and closing the medicine box accommodating box, an opposing wall arranged so as to be opposed to the replenishing region width adjusting member; and a movable piece to be actuated in association with opening and closing of the shutter, that, when the shutter is in an opened state, the movable piece protrudes from the opposing wall, and the replenishing-object medicine box placing region is formed between the movable piece and the replenishing region width adjusting member, and that, when the shutter is brought into a closed state, the movable piece becomes flush with the opposing wall or retreats in a direction farther away from the replenishing region width adjusting member with respect to the opposing wall.

With this structure, when the shutter is brought into the closed state after the medicine boxes are placed in the parallel state in the region formed between the movable piece and the replenishing region width adjusting member, the movable piece moves in the direction away from the replenishing region width adjusting member, and the movable piece becomes flush with the opposing wall or retreats in the direction farther away from the replenishing region width adjusting member with respect to the opposing wall. Thus, even if the operator who performs the replenishment work for the medicine boxes positions the replenishing region width adjusting member to come into close contact with the medicine box, when the shutter is then brought into the closed state, appropriate gaps are formed, for example, between the medicine boxes arranged in parallel and between the medicine box and the replenishing region width adjusting member. As a result, the medicine boxes can smoothly be transferred from the replenishing apparatus toward the loading apparatus.

Further, the medicine box delivering apparatus of the present invention further includes: stock management means for managing a stock of the large number of medicine boxes in the accommodating and delivering apparatus; delivery count detecting means capable of detecting a delivery count of the large number of medicine boxes for each of the plurality of medicine box paths; and loading count detecting means capable of detecting a loading count of the large number of medicine boxes loaded into the each of the plurality of medicine box paths of the accommodating and delivering apparatus based on an actuation state of the loading mechanism, and has a feature in that the stock management means is configured to derive a stock count of the large number of medicine boxes in the each of the plurality of medicine box paths based on the loading count of the large number of medicine boxes loaded into the each of the plurality of medicine box paths that is detected by the loading count detecting means, and the delivery count of the large number of medicine boxes in the each of the plurality of medicine box paths that is detected by the delivery count detecting means.

As described above, the medicine box delivering apparatus of the present invention is configured to input (load) each of the medicine boxes from the loading apparatus to the accommodating and delivering apparatus, and hence the number of the loaded medicine boxes can be grasped easily and accurately by the loading count detecting means. Further, in the medicine box delivering apparatus of the present invention, the number of the medicine boxes delivered from the accommodating and delivering apparatus can be grasped accurately by the delivery count detecting means. Thus, in the medicine box delivering apparatus of the present invention, the stock count of the medicine boxes can be grasped accurately based on the delivery count and the loading count of the medicine boxes.

In the above-mentioned medicine box delivering apparatus of the present invention, it is preferred that the stock management means be configured to: recognize, as a medicine box path group, a plurality of medicine box paths provided so as to accommodate and deliver medicine boxes of the same type in the accommodating and delivering apparatus; and derive a stock count of the medicine boxes in the medicine box path group by deriving and summing stock counts of the medicine boxes in the plurality of medicine box paths of the medicine box path group.

With this structure, in the case where the plurality of medicine box paths are provided so as to accommodate and deliver the medicine boxes of the same type, those medicine box paths are recognized as the medicine box path group, and thus the stock count of the medicine boxes in the entire medicine box path group can be derived and managed.

It is preferred that the above-mentioned medicine box delivering apparatus of the present invention further include preparation count deriving means capable of deriving a preparation count of the large number of medicine boxes to be prepared in the replenishing apparatus, and that the preparation count deriving means be configured to: recognize, as a medicine box path group, a plurality of medicine box paths provided so as to accommodate and deliver medicine boxes of the same type in the accommodating and delivering apparatus; and when a type of the large number of medicine boxes to be prepared in the replenishing apparatus is a type of the medicine boxes corresponding to the medicine box path group, derive a number obtained by summing numbers of medicine boxes loadable into the plurality of medicine box paths of the medicine box path group as a preparation count of the large number of medicine boxes to be prepared in the replenishing apparatus.

In the medicine box delivering apparatus of the present invention, when preparing the medicine boxes corresponding to the medicine box path group in the replenishing apparatus, the number obtained by summing the numbers of medicine boxes loadable into the respective medicine box paths can be grasped as the preparation count. Accordingly, in the case where the plurality of medicine box paths are provided so as to accommodate the medicine boxes of the same type, there is no need to grasp the preparation quantity of the medicine boxes for each medicine box path, and thus the preparation work for the medicine boxes can further be facilitated.

It is preferred that the medicine box delivering apparatus of the present invention further include loading control means for controlling a loading operation for loading the large number of medicine boxes into the accommodating and delivering apparatus by the loading apparatus, and that the loading control means be configured to: recognize, as the medicine box path group, the plurality of medicine box paths provided so as to accommodate and deliver the medicine boxes of the same type in the accommodating and delivering apparatus; and when medicine boxes of a type corresponding to the medicine box path group are prepared in the replenishing apparatus, distribute the medicine boxes prepared in the replenishing apparatus to the plurality of medicine box paths of the medicine box path group by the loading apparatus.

In the medicine box delivering apparatus of the present invention, when loading the medicine boxes corresponding to the medicine box path group, it is only necessary that the medicine boxes corresponding to a loading quantity of the entire medicine box path group be prepared collectively in the replenishing apparatus, and hence there is no need to prepare the medicine boxes separately for the respective medicine box paths. Thus, according to the medicine box delivering apparatus of the present invention, the efficiency of the preparation work for the medicine boxes can further be enhanced, and the preparation work can further be simplified.

It is desired that the medicine box delivering apparatus of the present invention further include delivery control means capable of controlling a delivery operation for the large number of medicine boxes in the medicine box delivering apparatus, and that the delivery control means be configured to: recognize, as the medicine box path group, the plurality of medicine box paths provided so as to accommodate and deliver the medicine boxes of the same type in the accommodating and delivering apparatus; and when delivering medicine boxes corresponding to the medicine box path group, switch the plurality of medicine box paths for delivering the medicine boxes in a predetermined order.

According to this structure, the medicine boxes can be delivered substantially evenly from the respective medicine box paths of the medicine box path group. Accordingly, the medicine boxes can be delivered in an order from the medicine boxes previously loaded into the accommodating and delivering apparatus.

In the medicine box delivering apparatus of the present invention, it is preferred that the replenishing apparatus include a plurality of replenishing apparatus, that the medicine box delivering apparatus further include: preparation count deriving means capable of deriving a preparation count J of the large number of medicine boxes to be prepared in the plurality of replenishing apparatus; and maximum placement count deriving means for deriving, as a maximum placement count M, a number of medicine boxes maximally placeable on the replenishing-object medicine box placing portion in one of the plurality of replenishing apparatus, and that n+1 of the plurality of replenishing apparatus be used for replenishment of the large number of medicine boxes when the preparation count J is larger than the maximum placement count M and a relationship of J=n·M+α is established, where "n" and "α" represent natural numbers.

According to this structure, even when the preparation count J is larger than the number of medicine boxes maximally placeable on the replenishing-object medicine box placing portion, the medicine boxes can be prepared in the replenishing apparatus without separately performing a plurality of times of preparation work. Thus, according to the present invention, the efficiency of the preparation work for the medicine boxes can further be enhanced.

It is desired that the medicine box delivering apparatus of the present invention further include a medicine box identifying apparatus capable of identifying a type of the large number of medicine boxes, that the medicine box identifying apparatus include: a photographing apparatus capable of photographing one of the large number of medicine boxes; and medicine box identifying means for identifying the large number of medicine boxes based on an image obtained by the photographing apparatus, that the photographing apparatus include: a photographing stage having light transmissive properties and having a placement surface on which the one of the large number of medicine boxes is placeable; and a camera capable of photographing the one of the large number of medicine boxes placed on the photographing stage from a region opposite to the placement surface across the photographing stage, that the medicine box identifying means include a medicine box information database that accumulates, for each type of the large number of medicine boxes, size information on a size of each of the large number of medicine boxes, and color information on a color contained in a surface of the each of the large number of medicine boxes, and that the medicine box identifying means is capable of identifying the type of the large number of medicine boxes through: a size-based narrowing step of recognizing, based on the image obtained by the camera, a size of a medicine box image region corresponding to the one of the large number of medicine boxes placed on the photographing stage as the size of the each of the large number of medicine boxes, and narrowing down candidates for the large number of medicine boxes based on the medicine box information database; and a color-based narrowing step of performing matching between information on a color contained in the medicine box image region and the color information on the each of the large number of medicine boxes which are narrowed down as the candidates in the size-based narrowing step, and further narrowing down the candidates for the large number of medicine boxes.

According to this structure, even for the medicine box having no identification indicator such as a so-called barcode, the type of the medicine box can be identified by arranging, on the photographing stage, the medicine box prepared for the replenishment in the replenishing apparatus or the like. Thus, according to the medicine box delivering apparatus of the present invention, the identification work for the medicine boxes can be performed more easily and accurately.

Further, in the medicine box delivering apparatus of the present invention, the types of the medicine box are first narrowed down from the viewpoint of the size in the size-based narrowing step based on the image obtained by photographing the medicine box, and hence the matching of the color information in the color-based narrowing step can be performed highly smoothly. Thus, in the medicine box delivering apparatus of the present invention, the period of time required from the photography until the narrowing of the types of the medicine box can be shortened significantly, and the load on the medicine box identifying means can be minimized.

In the above-mentioned medicine box delivering apparatus of the present invention, it is desired that the photographing apparatus include: a camera-side region on the camera side; and a box arrangement-side region on a side on which the one of the large number of medicine boxes to be photographed is arranged, the camera-side region and the box arrangement-side region being separated from each other across the photographing stage as a boundary, that the photographing apparatus further include brightness adjusting means capable of adjusting a brightness of the camera-side region and a brightness of the box arrangement-side region independently, that the photographing apparatus be capable of acquiring: an image A to be obtained by photographing the one of the large number of medicine boxes under a state in which the camera-side region is brighter than the box arrangement-side region; and an image B to be obtained by photographing the one of the large number of medicine boxes under a state in which the box arrangement-side region is brighter than the camera-side region, that, in the size-based narrowing step, the medicine box identifying means be capable of recognizing the size of the each of the large number of medicine boxes based on a size of a shadow of the one of the large number of medicine boxes that is contained in the image B, and that, in the color-based narrowing step, the medicine box identifying means be capable of narrowing down the large number of medicine boxes based on information on a color contained in a region of the image A corresponding to the shadow of the one of the large number of medicine boxes that is contained in the image B.

In the medicine box delivering apparatus of the present invention, the image B shows the medicine box as a shadow, and shows the other part brighter than the medicine box. Therefore, the size of the medicine box can be grasped smoothly and accurately in the size-based narrowing step. Further, the region of the image A corresponding to the shadow of the medicine box that is contained in the image B (hereinafter referred to also as "shadow region") is a region showing the medicine box, and the color information contained in the region of the image A corresponding to the above-mentioned shadow region is assumed to be the color information of the medicine box in the color-based narrowing step. In the medicine box delivering apparatus of the present invention, the medicine boxes are narrowed down based on the information on the color contained in the region of the image A corresponding to the shadow region of the image B. Therefore, in the medicine box delivering apparatus of the present invention, the color information of the part different from the medicine box is not erroneously recognized as the color information of the medicine box, and hence the accuracy of narrowing of the types of the medicine box is high. Further, according to the present invention, the image region to be subjected to the matching of the color information in the color-based narrowing step can be narrowed down, with the result that the period of time required for the color-based narrowing step can be shortened significantly and the load on the medicine box identifying means can be suppressed significantly.

In the above-mentioned medicine box delivering apparatus of the present invention, it is preferred that the brightness adjusting means include: a camera-side illumination apparatus provided in the camera-side region; and a box arrangement region-side illumination apparatus provided on the box arrangement region side, that the photographing apparatus be capable of acquiring the image B by photographing the one of the large number of medicine boxes with the camera under an ON state of the box arrangement region-side illumination apparatus and an OFF state of the camera-side illumination apparatus, and that the photographing apparatus be capable of acquiring the image A by photographing the one of the large number of medicine boxes with the camera under an OFF state of the box arrangement region-side illumination apparatus and an ON state of the camera-side illumination apparatus.

With this structure, a clear image A and a clear image B can be acquired, and hence the accuracy of the identification of the type of the medicine box can further be enhanced.

It is preferred that the medicine box delivering apparatus of the present invention further include: a photographing apparatus capable of photographing one of the large number of medicine boxes; image processing means for processing an image obtained by the photographing apparatus; and preparation-object medicine box displaying means capable of displaying an image corresponding to the type of the large number of medicine boxes to be prepared in the replenishing apparatus, that the photographing apparatus include: a camera-side region on the camera side; and a box arrangement-side region on a side on which the one of the large number of medicine boxes to be photographed is arranged, the camera-side region and the box arrangement-side region being separated from each other across the photographing stage as a boundary, that the photographing apparatus further include brightness adjusting means capable of adjusting a brightness of the camera-side region and a brightness of the box arrangement-side region independently, that the photographing apparatus be capable of acquiring: an image A to be obtained by photographing the one of the large number of medicine boxes under a state in which the camera-side region is brighter than the box arrangement-side region; and an image B to be obtained by photographing the one of the large number of medicine boxes under a state in which the box arrangement-side region is brighter than the camera-side region, that the image processing means be capable of acquiring an image of the one of the large number of medicine boxes by clipping, out of the image A, a region corresponding to a shadow of the one of the large number of medicine boxes that is contained in the image B, and that the preparation-object medicine box displaying means be capable of displaying the image of the one of the large number of medicine boxes that is obtained by the image processing means.

In the medicine box delivering apparatus of the present invention, the image B obtained by the photographing apparatus shows the medicine box as a shadow, and shows the other part brighter than the medicine box. Therefore, the image of the medicine box can be clipped easily and accurately by clipping the region of the image A corresponding to the region of the shadow contained in the image B (shadow region). Further, in the medicine box delivering apparatus of the present invention, the image of the medicine box created in the above-mentioned manner can be displayed on the preparation-object medicine box displaying means as the image corresponding to the type of the medicine box to be prepared in the replenishing apparatus, and hence, for example, misidentification of the medicine box to be prepared in the replenishing apparatus can be prevented reliably.

In the medicine box delivering apparatus of the present invention, it is desired that the brightness adjusting means include: a camera-side illumination apparatus provided in the camera-side region; and a box arrangement region-side illumination apparatus provided on the box arrangement region side, that the photographing apparatus be capable of acquiring the image B by photographing the one of the large number of medicine boxes with the camera under an ON state of the box arrangement region-side illumination apparatus and an OFF state of the camera-side illumination apparatus, and that the photographing apparatus be capable of acquiring the image A by photographing the one of the large number of medicine boxes with the camera under an OFF state of the box arrangement region-side illumination apparatus and an ON state of the camera-side illumination apparatus.

With this structure, a clear image A and a clear image B can be acquired, and hence the image of the medicine box can be acquired more easily and accurately.

It is desired that the medicine box delivering apparatus of the present invention further include: a medicine box information database in which the image of the one of the large number of medicine boxes is registered for the each type of the large number of medicine boxes; indicator assigning means for assigning an indicator to a predetermined region of the image of the one of the large number of medicine boxes; and preparation-object medicine box displaying means capable of displaying an image corresponding to the type of the large number of medicine boxes to be prepared in the replenishing apparatus, and that, when the type of the large number of medicine boxes to be prepared in the replenishing apparatus is a type assigned with the indicator by the indicator assigning means, the preparation-object medicine box displaying means display the image of the one of the large number of medicine boxes in a state of being assigned with the indicator.

According to this structure, when there are any medicine boxes having similar exteriors, for example, the user can accurately recognize the medicine box to be prepared in the replenishing apparatus.

It is desired that the medicine box delivering apparatus of the present invention further include a calibration member having a calibration surface capable of covering the photographing stage, the calibration surface having at least one of a lightness, a saturation, and a hue which is uniform over an entire range of the calibration surface, and that the at least one of the lightness, the saturation, and the hue is calibrated with reference to an image obtained by photographing the one of the large number of medicine boxes with the camera under a state in which the photographing stage is covered by the calibration surface.

According to this structure, the unevenness of the image obtained by the camera can be eliminated, and the type of the medicine box can be identified more accurately.

In the medicine box delivering apparatus of the present invention, it is preferred that the photographing stage include a placement portion provided to a frame thereof, the placement portion having light transmissive properties and being configured so that the one of the large number of medicine boxes is placeable thereon, that the frame include a color calibration member having a reference color, the color calibration member being provided on a surface of the frame on the camera side, that the camera be capable of performing photography so that a single image contains the color calibration member and the one of the large number of medicine boxes placed on the photographing stage, and that a color of the single image obtained through the photography be corrected with reference to the reference color of the color calibration member that is contained in the single image.

According to this structure, the color of the image obtained through the photography can be maintained at constant quality. Further, when the processing such as the narrowing of the types of the medicine box is performed by using the image obtained through the photography as described above, decrease in accuracy of the processing due to the image quality can be prevented.

In the medicine box delivering apparatus of the present invention, it is desired that the photographing stage include a placement portion provided to a frame thereof, the placement portion having light transmissive properties and being configured so that the one of the large number of medicine boxes is placeable thereon, that the frame include a light transmissive hole that allows light to pass from a region opposite to the camera toward a region on the camera side through the photographing stage, and that an illuminance of the image obtained by photographing the one of the large number of medicine boxes be corrected with reference to an illuminance of a region corresponding to the light transmissive hole that is contained in an image obtained by photographing the one of the large number of medicine boxes under the ON state of the box arrangement region-side illumination apparatus.

According to this structure, the image obtained through the photography can be maintained at constant quality in terms of the illuminance. Further, when the processing such as the narrowing of the types of the medicine box is performed by using the image obtained through the photography as described above, decrease in accuracy of the processing due to unevenness in illuminance can be prevented.

Further, in the medicine box delivering apparatus of the present invention, it is preferred that the photographing stage include a placement portion provided to a frame thereof, the placement portion having light transmissive properties and being configured so that the one of the large number of medicine boxes is placeable thereon, that the frame include a field angle adjusting indicator provided at a position adjacent to a corner of the placement portion, and that calibration of the camera be executable by using a coordinate value of the field angle adjusting indicator that is set through measurement.

With this structure, the calibration of the camera can be executed easily and accurately. Accordingly, the accuracy of the acquisition of the image of the medicine box and the accuracy of the identification of the type of the medicine box can further be enhanced.

In the medicine box delivering apparatus of the present invention, it is preferred that the each of the plurality of medicine box paths include discharge regulating means provided on an outlet side thereof, that the discharge regulating means include: a push-up piece for pushing up the each of the large number of medicine boxes from a bottom surface side of the each of the plurality of medicine box paths; and a receiving piece configured to operate in association with the push-up piece, that, under a delivery standby state of the each of the large number of medicine boxes, the receiving piece protrude upward from the bottom surface side of the each of the plurality of medicine box paths so that the each of the large number of medicine boxes is retained in the each of the plurality of medicine box paths, that, when discharging the each of the large number of medicine boxes, the push-up piece be actuated to push up the each of the large number of medicine boxes, and the receiving piece retreat toward the bottom surface of the each of the plurality of medicine box paths, that the receiving piece include: an opposing portion to be opposed to the each of the large number of medicine boxes in the delivery standby state in the each of the plurality of medicine box paths; a back portion located opposite to the opposing portion; and a roller provided at a distal end of the receiving piece, that the opposing portion include: a contact portion on a proximal end side of the receiving piece; and a non-contact portion on the distal end side of the receiving piece, the contact portion and the non-contact portion being provided across a middle portion of the receiving piece as a boundary, the non-contact portion being further inclined toward the back portion than the contact portion, and that, under a state in which the contact portion is held in surface contact with the each of the large number of medicine boxes in the delivery standby state, a gap be formed between the each of the large number of medicine boxes and the non-contact portion.

In the medicine box delivering apparatus of the present invention, the receiving piece of the discharge regulating means includes the opposing portion to be opposed to the medicine box in the delivery standby state, and the opposing portion includes the contact portion on the proximal end side, and the non-contact portion on the distal end side. Thus, the medicine box in the standby state can be brought into surface contact with the contact portion. Therefore, it is possible to prevent such a situation that a significant impact is locally applied to the medicine box moved down along the medicine box path along with the delivery of the medicine box, and the medicine box is deformed due to the impact. Further, it is possible to prevent such a situation that the medicine box is caught on the discharge regulating means in an unexpected manner due to the deformation of the medicine box or the like, and discharge failure occurs along with this situation. In addition, the non-contact portion located on the distal end side of the receiving piece is further inclined toward the back portion than the contact portion. Therefore, under the state in which the receiving piece retreats downward and the push-up piece protrudes upward when delivering the medicine box, the medicine box retained by the receiving piece can be delivered smoothly along the inclination of the non-contact portion.

Further, it is preferred that the medicine box delivering apparatus of the present invention further include long-term remaining item detecting means capable of deriving a remaining period of the each of the large number of medicine boxes in the accommodating and delivering apparatus, and detecting a type of medicine boxes corresponding to the remaining period which is a predetermined period or longer.

According to this structure, the medicine box delivering apparatus of the present invention can stop handling the medicine boxes corresponding to the long-term remaining items that are less frequently delivered, and provide effective information for determining such a measure that the medicine box path allocated for the long-term remaining items is to be used for handling medicine boxes of a different type. Accordingly, it is possible to achieve higher efficiency of the delivery task for the medicine boxes and effective use of the accommodating and delivering apparatus in the medicine box delivering apparatus.

### Advantageous Effects of Invention

According to the present invention, it is possible to provide the medicine box delivering apparatus capable of replenishing the medicine boxes in the state of being arranged in parallel, and smoothly executing the operation of transferring the replenished medicine boxes to the loading apparatus and the operation of loading the medicine boxes from the loading apparatus to each medicine box path.

### Brief Description of Drawings

FIG. 1 is a perspective view illustrating a medicine box delivering apparatus as seen from a rear surface side thereof according to an embodiment of the present invention.
FIG. 2 is a sectional view illustrating the medicine box delivering apparatus of FIG. 1 as seen in a lateral direction thereof.
FIGS. 3 are enlarged views of a medicine box path on an outlet side thereof. FIG. 3(a) is a view illustrating a state before delivering a medicine box, and FIG. 3(b) is a view illustrating a state at the time of delivering the medicine box.
FIG. 4 is a perspective view illustrating a loading apparatus.
FIG. 5 is a conceptual perspective view illustrating a main structure of the loading apparatus.
FIG. 6 is a conceptual plan view illustrating the main structure of the loading apparatus.
FIG. 7 is a perspective view illustrating a replenishing apparatus.
FIG. 8 is a conceptual perspective view illustrating a main structure of the replenishing apparatus.
FIG. 9 is a conceptual plan view illustrating the main structure of the replenishing apparatus.
FIGS. 10 are plan views illustrating positioning means. FIG. 10(a) illustrates a state in which a replenishing region width adjusting member is fixed, and FIG. 10(b) illustrates a state in which the replenishing region width adjusting member is unfixed by pressing an unfixing piece.
FIGS. 11 are explanatory views illustrating a relationship between a meshing member and a rack plate of the positioning means. FIG. 11(a) illustrates a state in which the replenishing region width adjusting member is fixed, and FIG. 11(b) illustrates a state in which the replenishing region width adjusting member is unfixed by pressing the unfixing piece.
FIG. 12 is an exploded perspective view illustrating the meshing member and the rack plate that form the positioning means.
FIG. 13 is a conceptual plan view illustrating states of the replenishing apparatus and the loading apparatus at the time of transferring the medicine boxes in a preparatory operation.
FIG. 14 is a conceptual plan view illustrating a state at the time of loading the medicine boxes from the loading apparatus into the medicine box path in the preparatory operation.
FIG. 15 is a block diagram illustrating a configuration of a control apparatus according to a modification example of the present invention.
FIG. 16(a) is a conceptual view illustrating a medicine box identifying apparatus, and FIG. 16(b) is a perspective view illustrating a photographing apparatus.
FIG. 17 is a sectional view of the photographing apparatus illustrated in FIGS. 16.
FIGS. 18 are perspective views illustrating a photographing stage. FIG. 18(a) illustrates a state of the photographing stage as seen from a front surface side of a frame, and FIG. 18 (b) illustrates a state of the photographing stage as seen from a back surface side of the frame.
FIG. 19(a) is an explanatory conceptual diagram illustrating an image B, and FIG. 19(b) is an explanatory conceptual diagram illustrating an image A.
FIG. 20 is a block diagram illustrating a configuration of the control apparatus in a case where the medicine identifying apparatus is provided.
FIG. 21 is a flow chart illustrating an operation to be performed in the medicine box delivering apparatus including the medicine box identifying apparatus.
FIGS. 22 are diagrams illustrating images of an interface that displays a charging list of the medicine boxes.
FIGS. 23(a) to 23(c) are diagrams each illustrating an image of a charging guide interface.
FIG. 24 is a diagram illustrating an image of a type confirmation interface.
FIG. 25 is a flow chart illustrating a method of constructing a medicine box information database in a case where the medicine identifying apparatus is provided.
FIG. 26 is a diagram illustrating an image of a registration interface for medicine box information.
FIGS. 27(a) and 27(b) are diagrams each illustrating an image of a display image registration interface.
FIG. 28 is a diagram illustrating an image of a guidance interface at the time of acquiring a package image of the medicine box.
FIGS. 29 are diagrams illustrating images of a display image edit interface. FIG. 29(a) illustrates a state before editing, and FIG. 29(b) illustrates a state after the editing.
FIG. 30 is a perspective view illustrating a main part of a loading apparatus according to a modification example of the present invention.
FIG. 31(a) is a plan view of the loading apparatus illustrated in FIG. 30, FIG. 31 (b) is a side view of the loading apparatus, and FIG. 31(c) is an enlarged view of the vicinity of an abutment piece of FIG. 31(b).
FIG. 32(a) is a perspective view illustrating a structure of the loading apparatus of FIGS. 31 in the vicinity of a loading region width adjusting member, and FIG. 32(b) is a side view illustrating a state in which the medicine box is arranged.
FIG. 33 (a) is an enlarged front view of the vicinity of positioning means under a state in which an unfixing piece is not pressed in a replenishing apparatus according to a modification example of the present invention, and FIG. 33 (b) is a front view illustrating a state in which the medicine box is placed.
FIG. 34 (a) is an enlarged front view of the vicinity of the positioning means under a state in which the unfixing piece is pressed in the replenishing apparatus according to the modification example, and FIG. 34(b) is a front view illustrating the state in which the medicine box is placed.
FIG. 35(a) is a perspective view illustrating medicine box paths according to a modification example of the present invention, and FIG. 35(b) is a plan view illustrating the medicine box paths.
FIG. 36 (a) is a plan view illustrating an inlet-side slide promoting member, FIG. 36(b) is a sectional view illustrating the inlet-side slide promoting member, and FIG. 36(c) is a side view illustrating the inlet-side slide promoting member.
FIG. 37(a) is a side view illustrating a receiving piece of discharge regulating means according to a modification example of the present invention, FIG. 37(b) is a front view illustrating the receiving piece, and FIG. 37(c) is a perspective view illustrating the receiving piece.
FIGS. 38 are enlarged views illustrating a state in which the discharge regulating means including the receiving piece illustrated in FIGS. 37 is provided on the outlet side of the medicine box path. FIG. 38(a) is a view illustrating a state before delivering the medicine box, and FIG. 38 (b) is a view illustrating a state at the time of delivering the medicine box.
FIG. 39 is a side view illustrating an example in which bounce suppressing means is provided on a top surface side of the medicine box path.
FIGS. 40(a) to 40(c) are diagrams each illustrating an image of an example of an interface to be displayed when performing work of increasing and decreasing the quantity of medicine box paths.
FIG. 41(a) is a diagram illustrating an image of an example of an interface for allowing an operator to view at a glance an installation status of each medicine box rack, and a usage status (registration status) of the medicine box paths in each medicine box rack, and FIG. 41 (b) is a diagram illustrating an image of an example of an interface to be displayed for registering or changing information on a total path count and the like of a newly installed medicine box rack when any medicine box rack is replaced, for example.
FIG. 42 is a diagram illustrating an image of an example of an interface for confirming presence and absence of a long-term remaining item.
FIGS. 43 are examples of diagrams each illustrating an image of the charging list. FIG. 43(a) is a diagram illustrating an image to be displayed at a phase before work of sorting or filtering listed medicine boxes based on presence and absence of barcodes, and FIG. 43(b) is a diagram illustrating an image to be displayed when executing this work.

### Description of Embodiments

Detailed description is made of a medicine box delivering apparatus 10 according to embodiments of the present invention with reference to the drawings. Note that, in the following description, a vertical direction, a lateral direction, a depth direction, and a width direction are defined, unless otherwise noted, with reference to a state in which the medicine box delivering apparatus 10 is seen from a rear surface side thereof. In the following, the medicine box delivering apparatus 10 is described in a separate manner from the aspects of an apparatus structure and an operation thereof.

### <Apparatus structure of medicine box delivering apparatus 10>

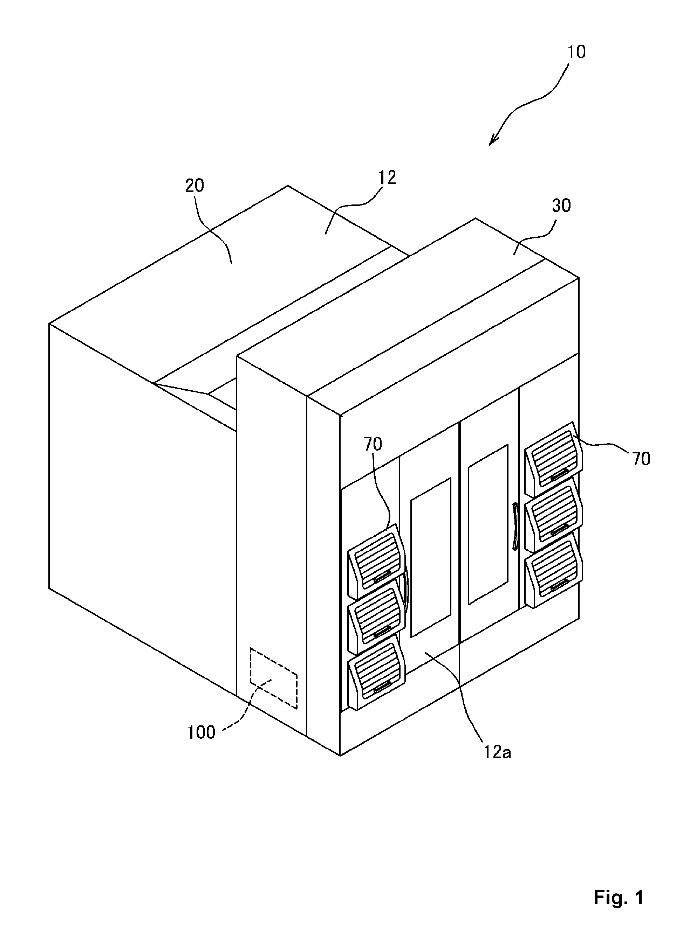

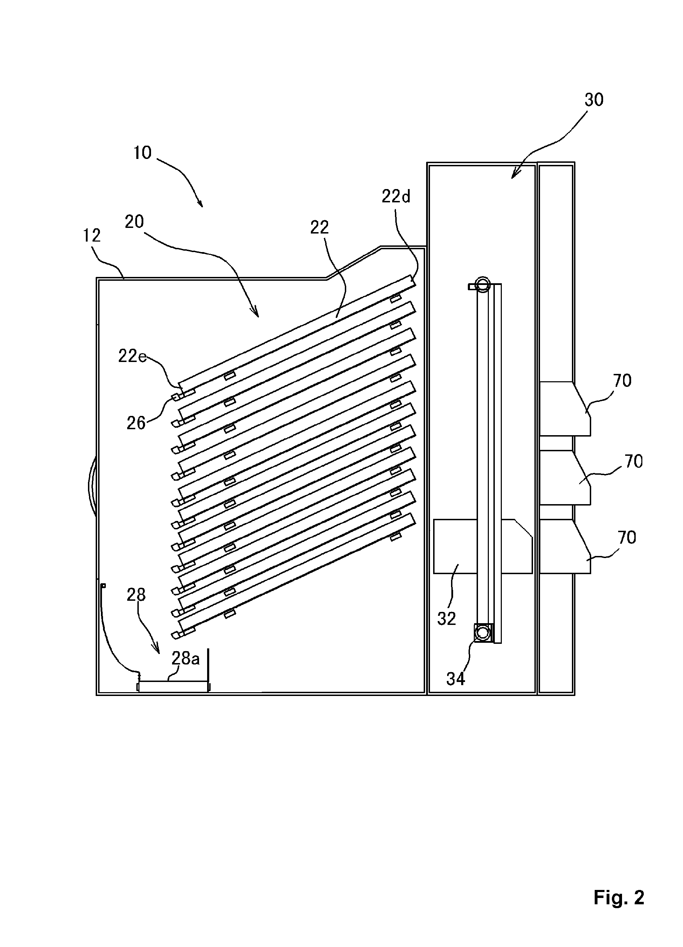

The medicine box delivering apparatus 10 is an apparatus for delivering medicine boxes MB containing medicines, which are appropriately selected in accordance with prescription from among a large number of medicine boxes MB prepared in advance. Specifically, the medicine box delivering apparatus 10 includes an accommodating and delivering apparatus 20, a loading apparatus 30, replenishing apparatus 70, and a control apparatus 100. The medicine box delivering apparatus 10 is capable of preparing the medicine boxes MB by the loading apparatus 30 configured to load, into the accommodating and delivering apparatus 20, the medicine boxes MB replenished in the replenishing apparatus 70, and delivering the prepared medicine boxes MB from the accommodating and delivering apparatus 20 in accordance with prescription. As illustrated in FIGS. 1 and 2, the accommodating and delivering apparatus 20, the loading apparatus 30, and the replenishing apparatus 70 are arranged in an order from the front surface side to the rear surface side of the medicine box delivering apparatus 10. In the following, the accommodating and delivering apparatus 20, the loading apparatus 30, and the replenishing apparatus 70 are described.

### «Accommodating and delivering apparatus 20»

The accommodating and delivering apparatus 20 is an apparatus capable of accommodating a large number of medicine boxes MB under a state in which the medicine boxes MB are sorted by type, and delivering appropriate medicine boxes MB in accordance with prescription. The accommodating and delivering apparatus 20 includes a plurality of medicine box paths 22 provided in the vertical direction and the lateral direction in front view. Each of the medicine box paths 22 is formed of a member such as a so-called channel member having a gutter-like shape and having two open end portions in a longitudinal direction thereof.

As illustrated in FIG. 2, the medicine box paths 22 are arranged so that the longitudinal direction thereof corresponds to the depth direction of the medicine box delivering apparatus 10, that is, arranged to extend from the front surface side to the rear surface side. An open part of each medicine box path 22 which is located on the rear surface side functions as an inlet 22d for loading the medicine boxes MB therethrough, and an open part of each medicine box path 22 which is located on the front surface side functions as an outlet 22e for delivering the medicine boxes MB therethrough. The medicine box path 22 is obliquely installed with a falling gradient from the inlet 22d side to the outlet 22e side. Further, the width of the medicine box path 22 is equal to or slightly larger than the thickness of each medicine box MB to be prepared. Thus, the medicine box path 22 is capable of moving the medicine boxes MB smoothly from the inlet 22d side to the outlet 22e side by a free fall.

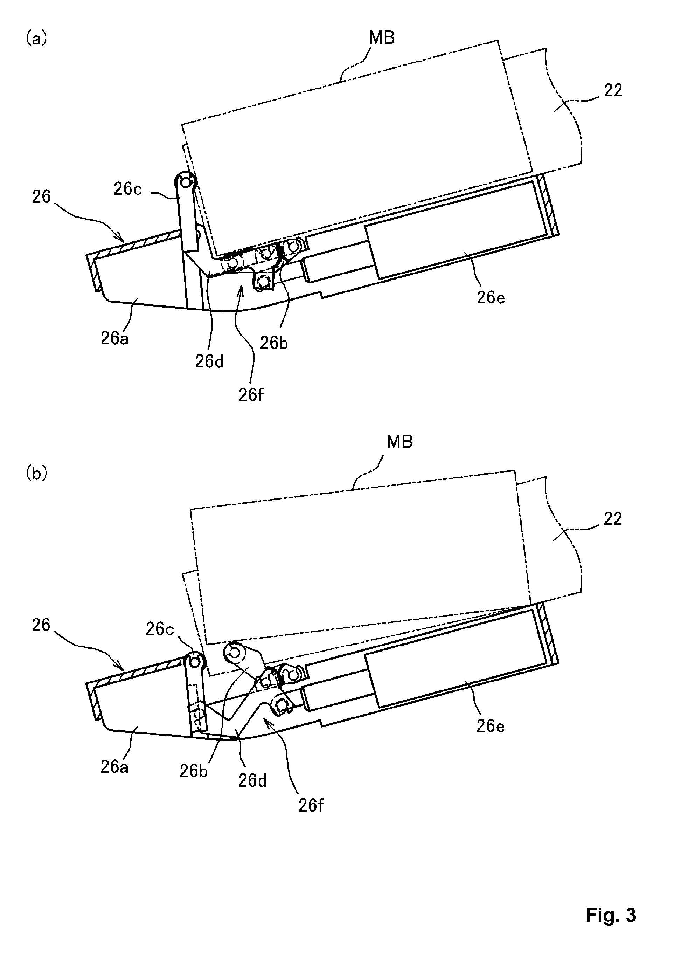

As illustrated in FIGS. 2 and 3, discharge regulating means 26 is mounted on the outlet 22e side of the medicine box path 22. The discharge regulating means 26 is capable of normally retaining the medicine box MB prepared in the medicine box path 22 on the outlet 22e side and, when delivering the medicine box MB, bouncing the medicine box MB upward from a bottom side of the medicine box path 22, to thereby discharge the medicine box MB.

Specifically, as illustrated in FIGS. 3, the discharge regulating means 26 includes a push-up piece 26b, a receiving piece 26c, a coupling piece 26d, and a power source 26e that are provided to a main body portion 26a mounted to the outlet 22e of the medicine box path 22. The discharge regulating means 26 includes a link mechanism 26f formed by coupling the push-up piece 26b and the receiving piece 26c through an intermediation of the coupling piece 26d, thereby providing such a structure that the push-up piece 26b and the receiving piece 26c are actuated in association with each other through actuation of the power source 26e. As illustrated in FIG. 3(a), in a normal state of the discharge regulating means 26, the push-up piece 26b is substantially flush with the bottom surface of the medicine box path 22, and the receiving piece 26c is lifted substantially perpendicular to the bottom surface of the medicine box path 22. In this manner, the medicine box MB prepared in the medicine box path 22 can be retained at the outlet 22e by the receiving piece 26c.

When the power source 26e is actuated, on the other hand, as illustrated in FIG. 3(b), the push-up piece 26b is flipped upward from the bottom surface of the medicine box path 22, and the receiving piece 26c is retreated toward the bottom surface of the medicine box path 22. Therefore, through the actuation of the power source 26e, the medicine box MB prepared on the outlet 22e side of the medicine box path 22 can be pushed up by the push-up piece 26b and delivered outside the medicine box path 22.

As illustrated in FIG. 2, the accommodating and delivering apparatus 20 includes medicine box collecting means 28 on the front surface side with respect to the above-mentioned medicine box paths 22. The medicine box collecting means 28 is configured to collect the medicine boxes MB discharged from the medicine box paths 22, and deliver the medicine boxes MB outside the accommodating and delivering apparatus 20. The medicine box collecting means 28 includes a belt conveyor, and is capable of collecting, on a conveying surface 28a, the medicine boxes MB delivered from the medicine box paths 22, and discharging the medicine boxes MB through an outlet provided in a side surface of the accommodating and delivering apparatus 20.

### «Loading apparatus 30»

The loading apparatus 30 is configured to load the medicine boxes MB into the respective medicine box paths 22 from their inlet 22d side. As illustrated in FIG. 2, the loading apparatus 30 is provided at a position adjacent to the inlet 22d side with respect to the large number of medicine box paths 22 that form the accommodating and delivering apparatus 20. The loading apparatus 30 includes a loading rack 32 and a drive apparatus 34. Through the actuation of the drive apparatus 34 of the loading apparatus 30, the loading rack 32 can be freely moved into the vertical and the lateral directions within a region on the inlet 22d sides of the respective medicine box paths 22.

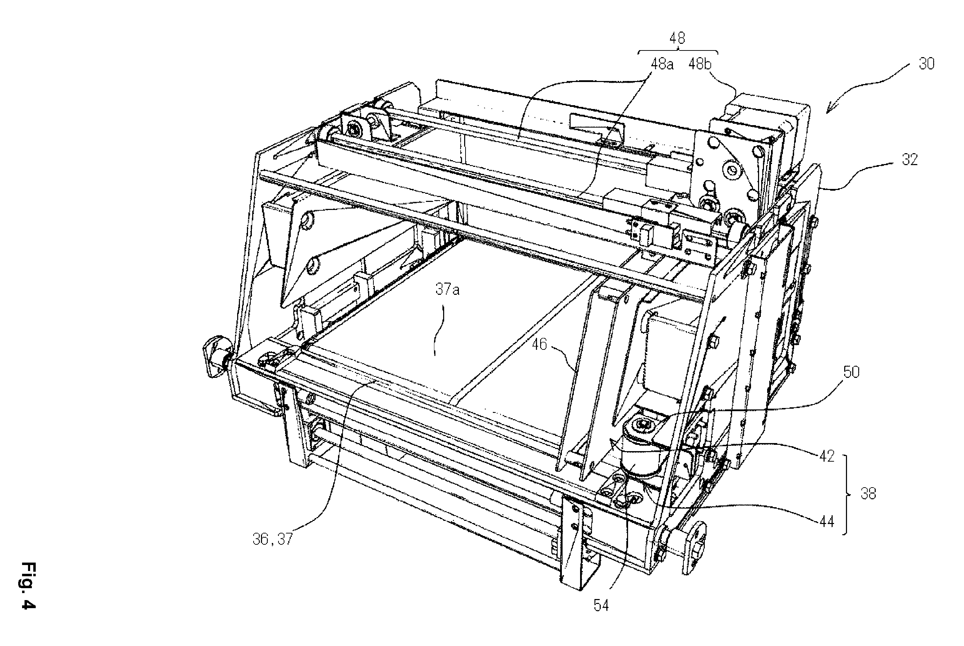

As illustrated in FIGS. 4 to 6, the loading rack 32 includes a loading-object medicine box placing portion 36, a loading mechanism 38, and position detecting means 40. The loading-object medicine box placing portion 36 is configured to place thereon the medicine boxes MB conveyed from the replenishing apparatus 70 side described in detail later under a state in which the medicine boxes MB are arranged in parallel in a width direction of the loading apparatus 30. The loading-object medicine box placing portion 36 is formed of a conveying surface 37a of a belt conveyor 37, and is capable of placing thereon the medicine boxes MB by drawing the medicine boxes MB inward from the replenishing apparatus 70 side through movement of the conveying surface 37a in a direction from the rear surface side to the front surface side of the medicine box delivering apparatus 10 (direction from the replenishing apparatus 70 side to the accommodating and delivering apparatus 20 side).

The loading mechanism 38 is configured to load the medicine boxes MB by conveying each of the medicine boxes MB placed on the loading-object medicine box placing portion 36 toward the medicine box path 22 of the accommodating and delivering apparatus 20. Specifically, the loading mechanism 38 includes a push-out apparatus 42 and a conveying apparatus 44. With the loading mechanism 38, the medicine boxes MB placed on the loading-object medicine box placing portion 36 can be moved by the push-out apparatus 42 sequentially toward the conveying apparatus 44 provided at a position adjacent in the width direction to the loading-object medicine box placing portion 36 so that the medicine box MB is brought into contact with an endless belt 54 described in detail later. In addition, each of the medicine boxes MB thus brought into contact with the endless belt 54 can be conveyed by the conveying apparatus 44 toward the medicine box path 22.

More specifically, the push-out apparatus 42 includes a loading region width adjusting member 46 and a drive mechanism 48. The loading region width adjusting member 46 is configured to divide the loading-object medicine box placing portion 36 into two regions in the width direction of the loading apparatus 30, to thereby form the loading-object medicine box placing region α, in which the medicine boxes MB are to be placed. That is, the loading region width adjusting member 46 is a partition-like member for delimiting the loading-object medicine box placing region α, and is capable of adjusting a width of the loading-object medicine box placing region α by changing the position of the loading region width adjusting member 46.

The drive mechanism 48 is configured to move the loading region width adjusting member 46 in the width direction of the loading apparatus 30. The drive mechanism 48 includes two support beams 48a and 48a provided on a top surface side of the loading rack 32, and a power source 48b formed of a motor. The support beam 48a is mounted to extend substantially over the entire width of the loading rack 32, and supports the above-mentioned loading region width adjusting member 46 on the top surface side of the loading rack 32. Further, the drive mechanism 48 actuates the power source 48b to move the loading region width adjusting member 46 along the support beams 48a and 48a, thereby being capable of adjusting the width of the loading-object medicine box placing region α.

The conveying apparatus 44 is provided at a side portion of the belt conveyor that forms the loading-object medicine box placing portion 36. The conveying apparatus 44 includes a pair of pulleys 50 and 52, the endless belt 54 looped around the pulleys 50 and 52, and a power source 56 formed of a motor. The pulleys 50 and 52 are provided on a front side and a rear side of the loading apparatus 30 (on the rear surface side and the front surface side of the medicine box delivering apparatus 10), and are supported to be freely rotatable about support shafts 50a and 52a that are installed in a substantially perpendicular direction, respectively. Further, the pulley 52 is rotatable due to power received from the power source 56.

The endless belt 54 extends in a depth direction of the loading apparatus 30, and has a conveying surface 54a provided substantially perpendicular to the conveying surface 37a serving as the bottom surface of the loading-object medicine box placing portion 36. Further, the endless belt 54 includes abutment pieces 54b (abutment portions) protruding from the surface of the endless belt 54. The abutment pieces 54b are block-like pieces with a substantially rectangular parallelepiped exterior, and two abutment pieces 54b are provided in a circumferential direction of the endless belt 54 at regular intervals. Therefore, through actuation of the power source 56, the endless belt 54 is rotated around the pulleys 50 and 52 so that the abutment pieces 54b can sequentially appear on the loading-object medicine box placing portion 36 side.

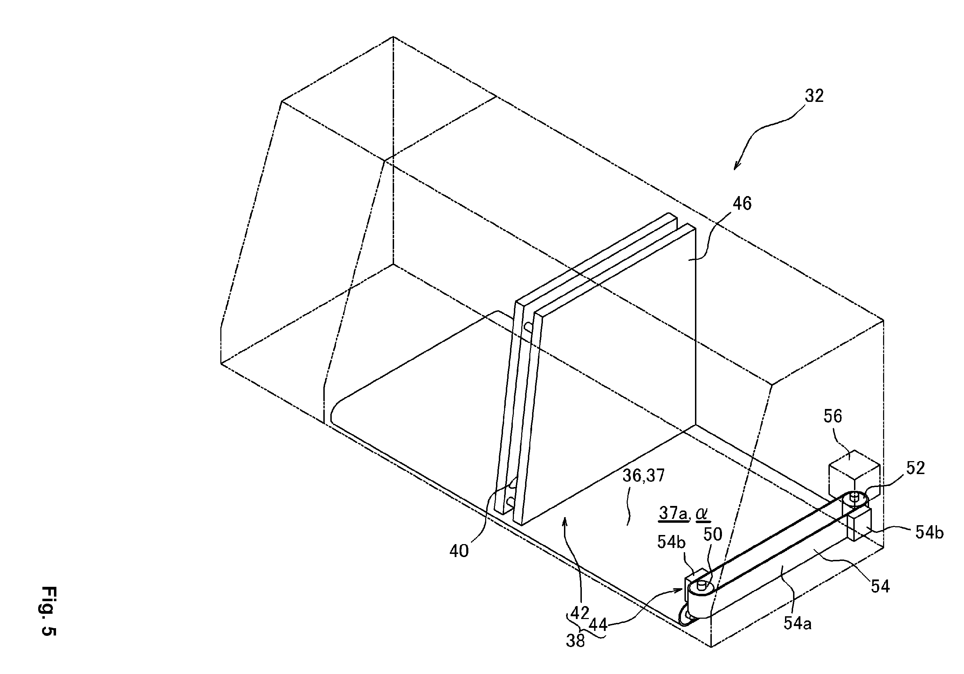

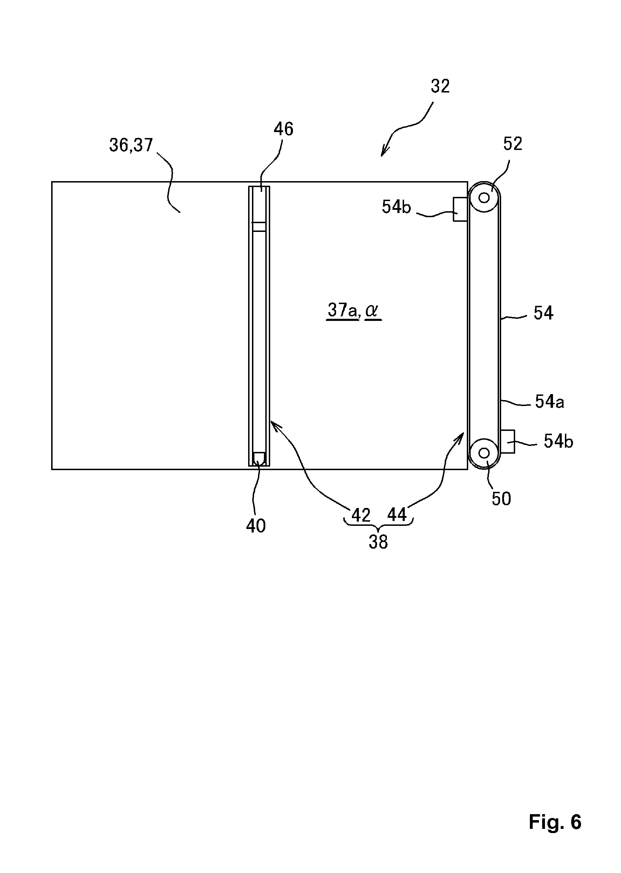

The position detecting means 40 is a sensor for detecting a replenishing region width adjusting member 76 of the replenishing apparatus 70 described in detail later. As illustrated in FIGS. 5 and 6, the position detecting means 40 is mounted to the loading region width adjusting member 46 (not shown in FIG. 4). The position detecting means 40 is capable of detecting the replenishing region width adjusting member 76 through the movement of the loading region width adjusting member 46 in the width direction (lateral direction) under a state in which the loading rack 32 is moved to a position adjacent to the replenishing apparatus 70.

### «Replenishing apparatus 70»

The replenishing apparatus 70 is an apparatus for replenishing the medicine boxes MB into the above-mentioned loading apparatus 30. As illustrated in FIGS. 1 and 2, a plurality of replenishing apparatus 70 are provided on a rear surface 12a side of a casing 12 that forms the medicine box delivering apparatus 10. Specifically, as illustrated in FIG. 1, three replenishing apparatus 70 are installed vertically in line in each of the right and left regions of the rear surface 12a.

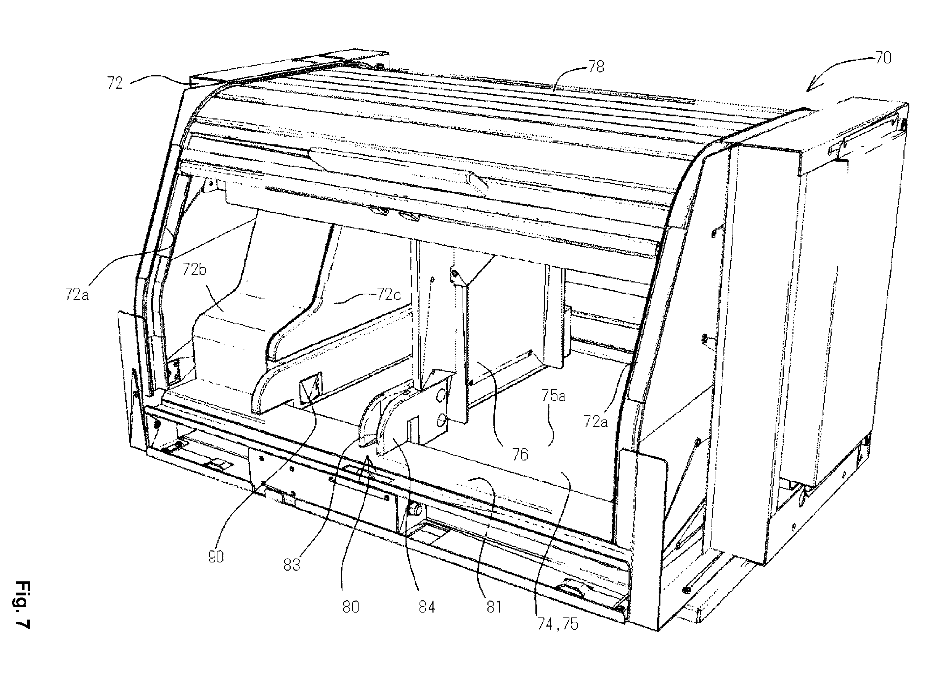

As illustrated in FIGS. 7 to 9, the replenishing apparatus 70 includes a replenishing-object medicine box placing portion 74, the replenishing region width adjusting member 76, and other components that are built into a medicine box accommodating box 72. The medicine box accommodating box 72 is a box member having openings formed on a front side (rear surface side of the medicine box delivering apparatus 10) and a rear side (front surface side of the medicine box delivering apparatus 10), and includes a shutter 78 mounted thereon so that the front and rear opening portions are closable. Further, a series of guides 72a and 72a extending from the front side to the rear side of the medicine box accommodating box 72 via a top surface portion thereof is provided on both side surfaces of the medicine box accommodating box 72. With this structure, the shutter 78 is slidable along the guides 72a and 72a.

When the shutter 78 is brought into an opened state, the medicine boxes MB are chargeable into the replenishing apparatus 70 through the front opening portion, and the rear opening is closed by the shutter 78. When the shutter 78 is brought into a closed state, on the other hand, the front opening of the replenishing apparatus 70 is closed so that the medicine boxes MB cannot be charged. In addition, the rear opening is opened, and the medicine boxes MB accommodated inside are dischargeable toward the loading apparatus 30.

Similarly to the above-mentioned loading-object medicine box placing portion 36, the replenishing-object medicine box placing portion 74 is a portion formed of a conveying surface 75a of a belt conveyor 75, and is capable of placing a plurality of medicine boxes MB on the conveying surface 75a under a state in which the medicine boxes MB are arranged in parallel. Under the state in which the medicine boxes MB are placed on the replenishing-object medicine box placing portion 74 (conveying surface 75a), the belt conveyor 75 is actuated so as to move the conveying surface 75a in a direction from the rear surface side to the front surface side of the medicine box delivering apparatus 10 (direction from the replenishing apparatus 70 side to the loading apparatus 30 side), thereby being capable of transporting the medicine boxes MB toward the loading apparatus 30 while maintaining their parallel state. That is, the belt conveyor 75 functions as a transfer mechanism for transferring the medicine boxes MB to the loading apparatus 30.

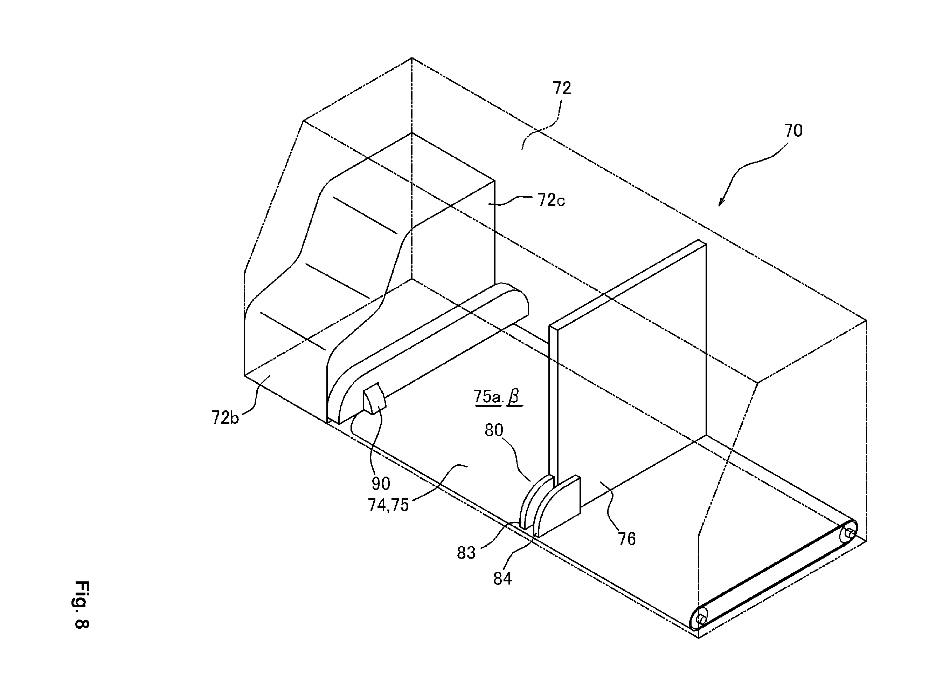

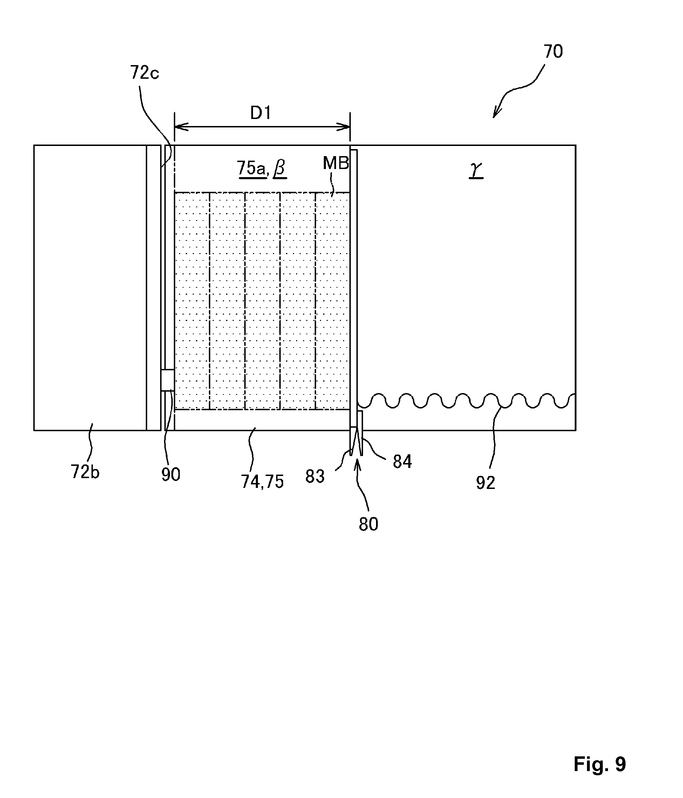

The replenishing region width adjusting member 76 is a plate-like member provided substantially perpendicular to the conveying surface 75a that forms the replenishing-object medicine box placing portion 74. The replenishing region width adjusting member 76 is provided so as to be opposed to a side wall 72c (opposing wall) of a mechanism accommodating portion 72b that is provided on one end side of the medicine box accommodating box 72 in the width direction (on the left side in the state illustrated in the figures). The replenishing region width adjusting member 76 is a partition-like member for delimiting a region of the replenishing-object medicine box placing portion 74 in which the medicine boxes MB are to be placed (replenishing-object medicine box placing region β), and is capable of preventing the medicine boxes MB placed in the parallel state from falling down. Further, the replenishing region width adjusting member 76 is slidable in a width direction of the replenishing-object medicine box placing portion 74. Therefore, the position of the replenishing region width adjusting member 76 is adjusted in accordance with the quantity of the medicine boxes MB to be replenished so that the replenishing-object medicine box placing region β is adjusted to a size appropriate for arranging the medicine boxes MB in parallel. Note that, in order not to place the medicine boxes MB erroneously in a region γ that is located opposite to the placing region β across the replenishing region width adjusting member 76, it is preferred to close the region γ through use of, as illustrated in FIG. 9, a shielding member 92 such as an accordion curtain that is coupled to the replenishing region width adjusting member 76 (not shown in FIGS. 7 and 8).

The replenishing apparatus 70 includes positioning means 80 for positioning and fixing the replenishing region width adjusting member 76. The replenishing region width adjusting member 76 in a normal state is positioned and fixed by the positioning means 80. When the replenishing region width adjusting member 76 is unfixed by operating an unfixing piece 83 provided to the positioning means 80, the replenishing region width adjusting member 76 becomes freely slidable in the width direction.

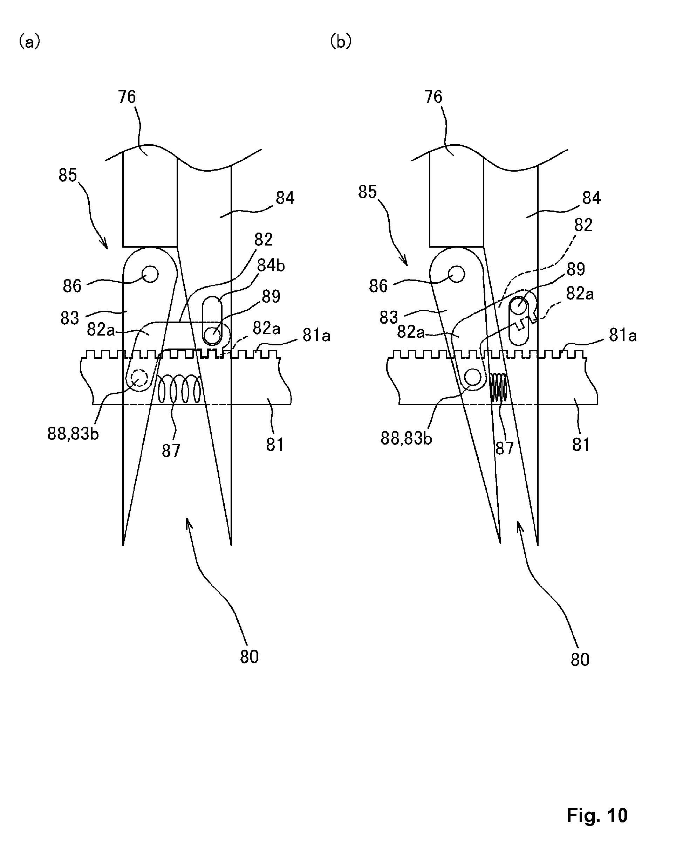

More specifically, as illustrated in FIGS. 10, the positioning means 80 includes a rack plate 81, a meshing member 82 meshable with the rack plate 81, the unfixing piece 83 connected to the meshing member 82, and an arm piece 84 fixed to the replenishing region width adjusting member 76. Further, the positioning means 80 includes a link mechanism 85 formed of the meshing member 82, the unfixing piece 83, and the arm piece 84. Through the operation of the unfixing piece 83 of the positioning means 80, the replenishing region width adjusting member 76 is unfixed so that the replenishing region width adjusting member 76 is freely movable in the width direction (lateral direction).

The components of the positioning means 80 are described even more specifically. As illustrated in FIGS. 10 to 12, the rack plate 81 is a plate-like member having a large number of teeth 81a formed in a longitudinal direction thereof at regular intervals. In the replenishing apparatus 70, the rack plate 81 is mounted at a position on the front side (rear surface side of the medicine box delivering apparatus 10) with respect to the replenishing-object medicine box placing portion 74 in such a posture that the teeth 81a are oriented to the rear side (front surface side of the medicine box delivering apparatus 10).

As illustrated in FIGS. 10, the unfixing piece 83 is pivotably supported onto the replenishing region width adjusting member 76 with a pin 86 provided at a proximal end portion of the unfixing piece 83. Further, the arm piece 84 is an arm-like member mounted to the replenishing region width adjusting member 76 in a cantilever manner at a position adjacent to the unfixing piece 83 on an opposite side of the side wall 72c. The arm piece 84 is mounted so as to protrude from the replenishing region width adjusting member 76 to the front side (rear surface side of the medicine box delivering apparatus 10). A spring 87 is provided between the unfixing piece 83 and the arm piece 84, and hence, in a normal state, the unfixing piece 83 is spaced away from the arm piece 84 due to a biasing force of the spring 87.

The unfixing piece 83 and the arm piece 84 have pinholes 83b and 84b for inserting pins 88 and 89 to be used for the connection to the meshing member 82, respectively, as well as an opening and a cutout for mounting the meshing member 82. The pinhole 83b is a round hole that passes through the unfixing piece 83 in the vertical direction and is sized to receive the pin 88 substantially without a gap. The pinhole 84b is an elongated hole that passes through the arm piece 84 in the vertical direction and extends in a longitudinal direction of the arm piece 84, that is, in a depth direction of the replenishing apparatus 70. Therefore, the pin 89 is movable inside the pinhole 84b.

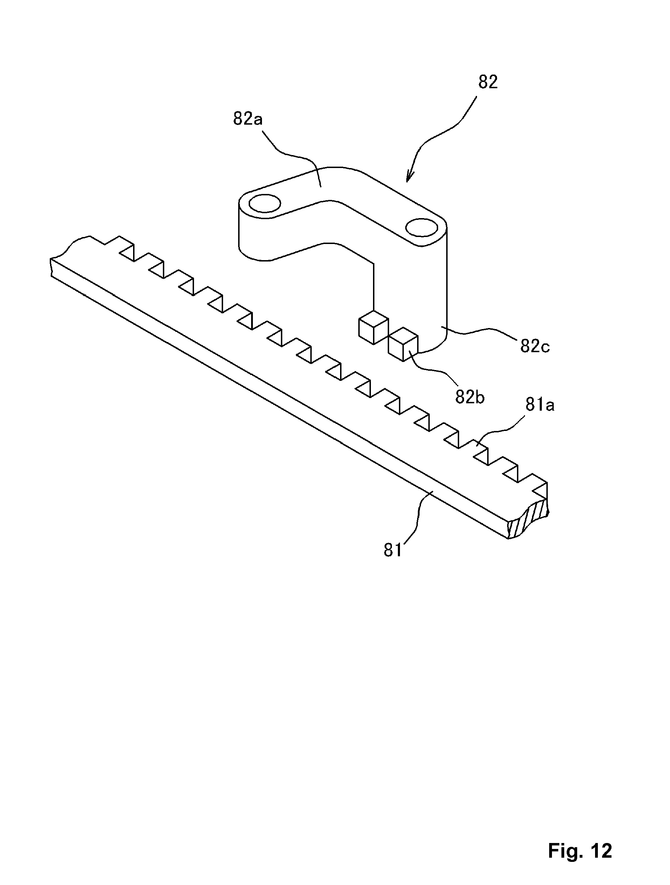

As illustrated in FIG. 12, the meshing member 82 is a member including a link portion 82a that functions as a link for connecting the unfixing piece 83 and the arm piece 84 in the link mechanism 85, and a meshing portion 82c having teeth 82b meshable with the rack plate 81. The meshing portion 82c is formed at a lower part on one end side of the link portion 82a. The meshing member 82 is arranged so that a portion on one end side of the link portion 82a and the meshing portion 82c are received in the cutout formed in the arm piece 84 and a portion on the other end side of the link portion 82a is received in the opening formed in the unfixing piece 83. The meshing member 82 is freely pivotably coupled to the unfixing piece 83 and the arm piece 84 with the pins 88 and 89 inserted through the pinholes 83b and 84b, respectively.

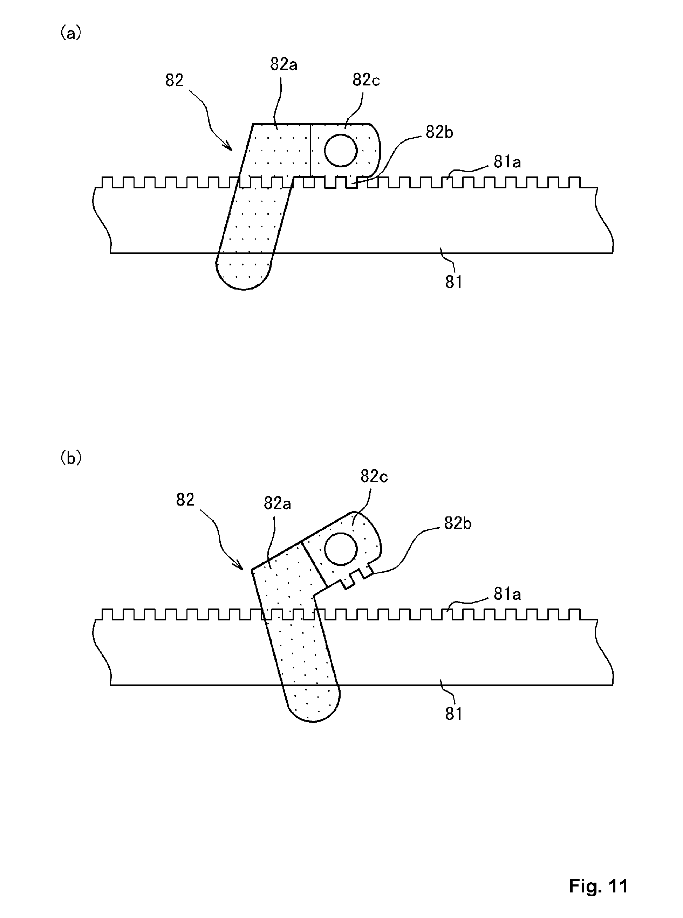

In the normal state of the positioning means 80, the unfixing piece 83 is biased by the spring 87 in a direction away from the arm piece 84. Therefore, as illustrated in FIGS. 10 (a) and 11(a), due to an action of the link mechanism 85, the meshing member 82 is located at a position on the rack plate 81 side, and the teeth 82b provided to the meshing portion 82c mesh with the teeth 81a of the rack plate 81. Thus, the replenishing region width adjusting member 76 in the normal state is fixed so that the replenishing region width adjusting member 76 is immovable in the width direction of the replenishing-object medicine box placing portion 74.

When the unfixing piece 83 is pressed toward the arm piece 84 against the biasing force of the spring 87, on the other hand, as illustrated in FIGS. 10(b) and 11(b), due to the action of the link mechanism 85, the meshing member 82 retreats in a direction away from the rack plate 81 (depth direction of the replenishing apparatus 70), and the teeth 82b of the meshing portion 82c are unmeshed from the teeth 81a of the rack plate 81. Accordingly, the replenishing region width adjusting member 76 is brought into an unfixed state so that the replenishing region width adjusting member 76 is freely movable in the width direction of the replenishing-object medicine box placing portion 74.

Further, as illustrated in FIGS. 7 and 8, the replenishing apparatus 70 includes a movable piece 90 on one end side of the medicine box accommodating box 72 in the width direction. The movable piece 90 is actuated in association with the operation of the shutter 78 through use of a mechanism (not shown) accommodated in the mechanism accommodating portion 72b. Specifically, when the shutter 78 is in the opened state, the movable piece 90 protrudes from the side wall 72c toward the replenishing-object medicine box placing portion 74, and when the shutter 78 is in the closed state, the movable piece 90 becomes flush with the side wall 72c or retreats to an inner side of the mechanism accommodating portion 72b (in a direction away from the replenishing region width adjusting member 76). Accordingly, appropriate gaps are formed between the medicine boxes MB that are arranged in parallel on the replenishing-object medicine box placing portion 74.

### «Control apparatus 100»

The control apparatus 100 is formed of a conventionally known personal computer and the like. Based on prescription data input from the outside, the control apparatus 100 controls the operations of the accommodating and delivering apparatus 20, the loading apparatus 30, and the replenishing apparatus 70 described above, and causes the accommodating and delivering apparatus 20 to execute a delivery operation for the medicine boxes MB, and causes the replenishing apparatus 70 and the loading apparatus 30 to execute a preparatory operation for loading the replenished medicine boxes MB into the accommodating and delivering apparatus 20.

### <Operation of medicine box delivering apparatus 10>

In the following, the operation of the medicine box delivering apparatus 10 is described. The operation of the medicine box delivering apparatus 10 is roughly classified into the delivery operation for the medicine boxes MB to be performed by the accommodating and delivering apparatus 20, and the preparatory operation for the medicine boxes MB to be performed on the accommodating and delivering apparatus 20. In the following, the operation of the medicine box delivering apparatus 10 is described from the aspects of the respective operations.

### «Delivery operation»

In a case where the medicine box delivering apparatus 10 performs the delivery operation, the types and quantities of the medicine boxes MB to be dispensed and the medicine box paths 22 that accommodate the medicine boxes MB to be dispensed are identified based on prescription data input from the outside to the control apparatus 100. When the identification of the types and quantities of the medicine boxes MB and the medicine box paths 22 is completed, the discharge regulating means 26 provided to the medicine box paths 22 that accommodate the medicine boxes MB to be delivered are actuated based on a command from the control apparatus 100. Accordingly, the medicine boxes MB to be dispensed are collected onto the medicine box collecting means 28 through the outlets 22e of the medicine box paths 22. When the medicine boxes MB for one prescription are collected, the belt conveyor that forms the medicine box collecting means 28 is actuated based on a command from the control apparatus 100. Accordingly, the medicine boxes MB for one prescription are delivered from the accommodating and delivering apparatus 20, and the delivery operation is completed.

### «Preparatory operation»

The medicine box delivering apparatus 10 is capable of performing an operation of transferring the medicine boxes MB, which are replenished in the replenishing apparatus 70, from the replenishing apparatus 70 to the loading apparatus 30, and then loading into the medicine box path 22 corresponding to the medicine boxes MB (preparatory operation). When the shutter 78 is brought into the opened state at the time of replenishing the medicine boxes MB in the replenishing apparatus 70, the mechanism (not shown) inside the mechanism accommodating portion 72b that is provided on one end side of the medicine box accommodating box 72 in the width direction (on the left side in the state illustrated in the figures) is actuated so that the movable piece 90 protrudes from the side wall 72c toward the replenishing region width adjusting member 76 (see FIG. 9).

In the replenishing-object medicine box placing portion 74, the medicine boxes MB may be placed in the region formed between the movable piece 90 and the replenishing region width adjusting member 76 described above (replenishing-object medicine box placing region β). When a width "d" necessary to arrange the medicine boxes MB to be replenished in the replenishing apparatus 70 in the parallel state is equal to or larger than a width D1 of the replenishing-object medicine box placing region β, a user may replenish the medicine boxes MB in the replenishing-object medicine box placing region β while holding the medicine boxes MB arranged in parallel between the hands. When the width "d" necessary to arrange the medicine boxes MB in the parallel state is smaller than the width D1 of the replenishing-object medicine box placing region β, on the other hand, the user needs to operate the unfixing piece 83 of the positioning means 80 so as to slide the replenishing region width adjusting member 76 in a direction away from the side wall 72c and the movable piece 90.

As described above, the unfixing piece 83 is provided so as to protrude to the front side at the position closer to the side wall 72c with respect to the arm piece 84, and the replenishing region width adjusting member 76 can be brought into the unfixed state by pressing the unfixing piece 83 in the direction away from the side wall 72c. Further, the positioning means 80 is integrally mounted to the replenishing region width adjusting member 76, and hence the replenishing region width adjusting member 76 is slidable in the direction away from the side wall 72c by pressing the unfixing piece 83. Thus, even when the width "d" necessary to arrange the medicine boxes MB in the parallel state is smaller than the width D1 of the replenishing-object medicine box placing region β, under the state in which the medicine boxes MB arranged in parallel are held between the hands, the user presses the unfixing piece 83 with the back of the hand or the finger to unfix the replenishing region width adjusting member 76, and accordingly the user may slide the replenishing region width adjusting member 76 in the direction away from the side wall 72c and the movable piece 90.

After the medicine boxes MB are placed in the parallel state in the replenishing-object medicine box placing region β of the replenishing-object medicine box placing portion 74 in the manner described above, the replenishing region width adjusting member 76 is slid in a direction approaching the side wall 72c and the movable piece 90 to come into contact with the side surface of the medicine box MB. In this state, the replenishment of the medicine boxes MB in the replenishing apparatus 70 is completed. When the shutter 78 is closed in this state, the movable piece 90 protruding from the side wall 72c toward the replenishing region width adjusting member 76 retreats, and becomes flush with the side wall 72c or retreats toward the mechanism accommodating portion 72b. Accordingly, small gaps are formed between the medicine boxes MB placed in the parallel state in the replenishing-object medicine box placing region β, between the side wall 72c and the medicine box MB, between the replenishing region width adjusting member 76 and the medicine box MB, and between the medicine box MB and the endless belt 54.

When it is confirmed that the shutter 78 is brought into the closed state, the control apparatus 100 moves the loading rack 32 of the loading apparatus 30 to a position adjacent to the replenishing apparatus 70. When the loading rack 32 reaches the position adjacent to the replenishing apparatus 70, the control apparatus 100 slides the loading region width adjusting member 46 in the width direction while actuating the position detecting means 40, to thereby attempt detection of the replenishing region width adjusting member 76. Based on a detection signal from the position detecting means 40, the control apparatus 100 grasps the position of the replenishing region width adjusting member 76 of the replenishing apparatus 70.

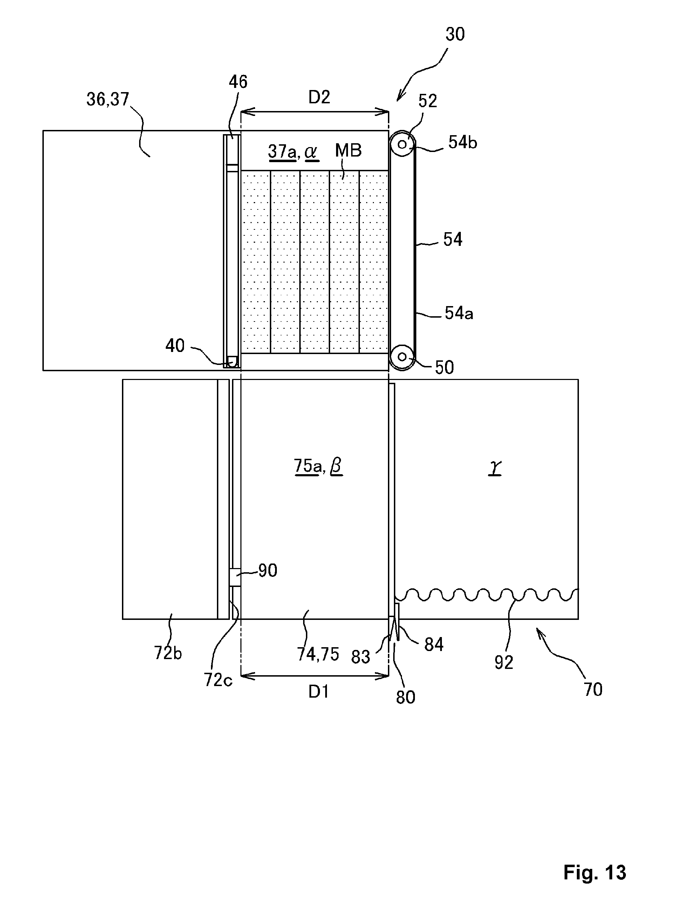

The control apparatus 100 adjusts the position of the loading region width adjusting member 46 so that the position of the loading region width adjusting member 46 matches with the position of the replenishing region width adjusting member 76 (see FIG. 13). Accordingly, a width D2 of the region of the loading-object medicine box placing portion 36 in which the medicine boxes MB are to be placed (loading-object medicine box placing region α) and the width D1 of the replenishing-object medicine box placing portion are adjusted to be substantially equal to each other, and in this state, the loading-object medicine box placing region α is formed at a position adjacent to the replenishing-object medicine box placing region α in the depth direction.

When the loading-object medicine box placing region α of the loading-object medicine box placing portion 36 becomes adjacent to the replenishing-object medicine box placing region β of the replenishing-object medicine box placing portion 74 in their positional relationship in the manner described above, the control apparatus 100 actuates the belt conveyor 75 on the replenishing apparatus 70 side and the belt conveyor 37 on the loading apparatus 30 side to move the conveying surface 75a and the conveying surface 37a in the depth direction, respectively. Accordingly, the medicine boxes MB placed in the replenishing-object medicine box placing region β are drawn and transferred into the loading-object medicine box placing region α while maintaining the parallel state of the medicine boxes MB.

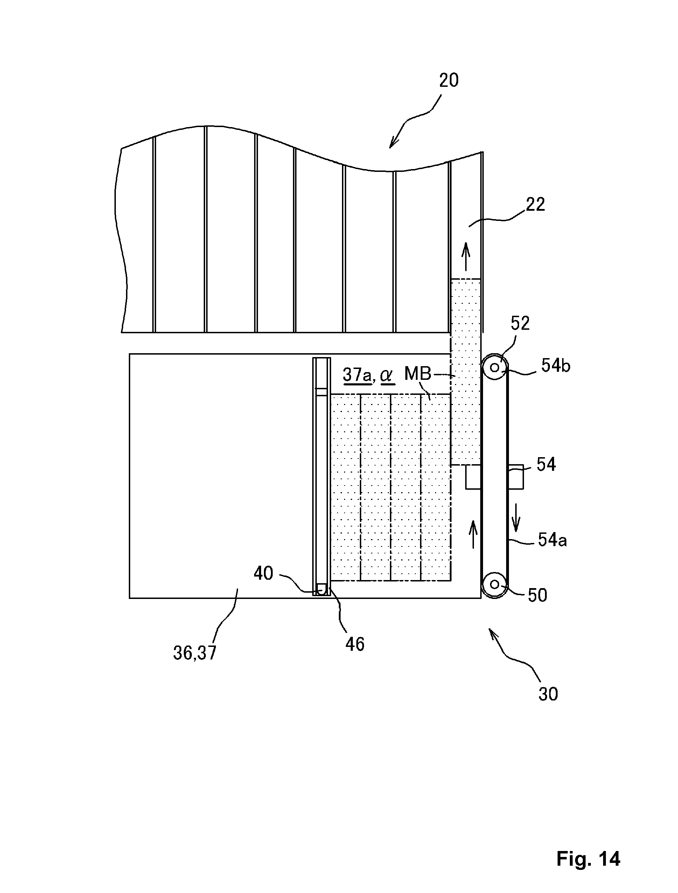

When the transfer of the medicine boxes MB is completed, the control apparatus 100 moves the loading rack 32 to a position adjacent to the medicine box path 22 to which the medicine boxes MB are to be loaded (see FIG. 14). When the movement of the loading rack 32 is completed, the control apparatus 100 actuates the push-out apparatus 42 and the conveying apparatus 44 to load each of the medicine boxes MB into the medicine box path 22. Specifically, the control apparatus 100 actuates the power source 48b of the push-out apparatus 42 to sequentially move the loading region width adjusting member 46 toward the conveying apparatus 44, thereby bringing the side surface of the medicine box MB, which is located at the position adjacent to the endless belt 54 of the conveying apparatus 44, into contact with the conveying surface 54a of the endless belt 54.

Further, the control apparatus 100 actuates the power source 56 of the conveying apparatus 44 so that the part of the conveying surface 54a in contact with the medicine box MB moves from the front side to the rear side (to the medicine box path 22 side). Along with this, a stress acts on the side surface of the medicine box MB in a direction from the front side to the rear side. Further, the abutment piece 54b provided to the endless belt 54 abuts on an end surface 94 of the medicine box MB, and the medicine box MB is pushed from the front side to the rear side. Accordingly, each of the medicine boxes MB is conveyed toward the medicine box path 22. Note that, a sensor (not shown) may be provided on the inlet 22d side of the medicine box path 22 so that the sensor can detect each loading operation of the medicine box MB. With this structure, the quantity of the loaded medicine boxes MB can be determined.

As described above, in the medicine box delivering apparatus 10 of this embodiment, the medicine boxes MB are placed in parallel on the replenishing-object medicine box placing portion 74 of the replenishing apparatus 70, and the belt conveyor 75 is actuated so that the medicine boxes MB can be transferred to the loading-object medicine box placing portion 36 on the loading rack 32 side while maintaining the parallel state of the medicine boxes MB. Further, the loading rack 32 is moved to the position adjacent to the medicine box path 22 corresponding to the medicine boxes MB, and then the loading mechanism 38 provided to the loading rack 32 is actuated so that each of the medicine boxes MB placed in the parallel state can be conveyed toward and loaded into the medicine box path 22. Thus, the medicine box delivering apparatus 10 of this embodiment is capable of loading the medicine boxes MB prepared in the replenishing apparatus 70 into an appropriate medicine box path 22 by only placing the medicine boxes on the replenishing-object medicine box placing portion 74 under the state in which the medicine boxes are arranged in parallel.

In the medicine box delivering apparatus 10 of this embodiment, the loading mechanism 38 includes the conveying apparatus 44 and the push-out apparatus 42, and the push-out apparatus 42 may sequentially bring the side surfaces of the medicine boxes MB, which are placed on the loading-object medicine box placing portion 36, into contact with the conveying surface 54a of the endless belt 54 of the conveying apparatus 44. Further, the endless belt 54 includes the abutment pieces 54b, and each of the abutment pieces 54b is brought into abutment on the end surface 94 of the medicine box MB (surface on the front side in the conveying direction of the medicine box MB in the placed state) through the rotation of the endless belt 54 around the pulleys 50 and 52 so that the medicine box MB can be pushed toward the medicine box path 22 by the abutment piece 54b. Therefore, the medicine box delivering apparatus 10 is capable of reliably conveying each of the medicine boxes MB placed on the loading-object medicine box placing portion 36, and loading the medicine boxes MB into the medicine box path 22. Note that, two abutment pieces 54b are provided on the conveying surface 54a of the endless belt 54, and each of the abutment pieces 54b is brought into contact with the end surface 94 of the medicine box MB at the time of conveying the medicine box MB toward the medicine box path 22. Therefore, the quantity of the loaded medicine boxes MB can be determined based on the number of rotations, the moving distance, and the like of the endless belt 54. Specifically, the quantity of the loaded medicine boxes MB can be determined on the assumption that one medicine box MB is conveyed every time the endless belt 54 moves by an amount corresponding to half rotation.

This embodiment is directed to the example in which the abutment pieces 54b are provided on the conveying surface 54a of the endless belt 54, but the present invention is not limited thereto, and the abutment pieces 54b may be omitted. Further, this embodiment is directed to the example in which two abutment pieces 54b are provided, but one abutment piece 54b or three or more abutment pieces 54b may be provided instead.

Further, the above-mentioned conveying apparatus 44 is configured to convey the medicine boxes MB toward the medicine box path 22 through the contact between the endless belt 54 and the side surfaces of the medicine boxes MB, but the conveying apparatus 44 may be any apparatus which is capable of conveying each of the medicine boxes MB toward the medicine box path 22. Specifically, a plunger or the like which is capable of pressing the medicine boxes MB in the placed state from the front side (replenishing apparatus 70 side) to the rear side (accommodating and delivering apparatus 20 side) may be used instead of the above-mentioned conveying apparatus 44.

In the medicine box delivering apparatus 10 of this embodiment, the loading region width adjusting member 46 is capable of delimiting the loading-object medicine box placing region α of the loading-object medicine box placing portion 36, in which the medicine boxes MB are to be placed, and the replenishing region width adjusting member 76 is capable of delimiting the replenishing-object medicine box placing region β of the replenishing-object medicine box placing portion 74, in which the medicine boxes MB are to be placed. Further, in the preparatory operation of the medicine box delivering apparatus 10, the control apparatus 100 is capable of grasping the position of the replenishing region width adjusting member 76 based on the detection result from the position detecting means 40 that is provided on the loading apparatus 30 side, and operating the loading apparatus 30 so that the loading-object medicine box placing region α reaches the position adjacent to the replenishing-object medicine box placing region β. Therefore, in the preparatory operation of the medicine box delivering apparatus 10, at the phase of transferring the medicine boxes MB from the replenishing apparatus 70 to the loading apparatus 30, the loading-object medicine box placing region α and the replenishing-object medicine box placing region β are adjusted to appropriate sizes and positions. Thus, in the medicine box delivering apparatus 10, the medicine boxes MB prepared in the replenishing apparatus 70 are smoothly transferred toward the loading apparatus 30 while maintaining the parallel state of the medicine boxes MB.

This embodiment is directed to the example in which the position detecting means 40 includes the sensor mounted on the loading apparatus 30 side and is capable of detecting the replenishing region width adjusting member 76 through the movement of the loading rack 32 and the loading region width adjusting member 46, but the present invention is not limited thereto. Specifically, the position detecting means 40 may include a sensor capable of detecting the moving distance of the replenishing region width adjusting member 76. With this structure, the control apparatus 100 can grasp the position of the replenishing region width adjusting member 76 based on the moving distance of the replenishing region width adjusting member 76. When such a structure is employed, there is no need to move the loading rack 32 and the loading region width adjusting member 46 so as to grasp the position of the replenishing region width adjusting member 76 and the size of the replenishing-object medicine box placing region β of the replenishing-object medicine box placing portion 74, and accordingly the period of time required for the preparatory operation can be shortened.

The above-mentioned replenishing apparatus 70 includes the positioning means 80 for positioning and fixing the replenishing region width adjusting member 76. Therefore, after the medicine boxes MB are placed on the replenishing-object medicine box placing portion 74, the replenishing region width adjusting member 76 is moved to a position substantially in contact with the side surface of the medicine box MB, and thus the medicine boxes MB can be supported by the replenishing region width adjusting member 76 so as not to fall down. Further, the loading region width adjusting member 46 is positioned with reference to the replenishing region width adjusting member 76, and hence, with the positioning means 80, the replenishing region width adjusting member 76 can also be moved to an appropriate position.

Further, as described above, the positioning means 80 is capable of bringing the replenishing region width adjusting member 76 into the unfixed state by pressing the unfixing piece 83 in a direction in which the replenishing-object medicine box placing region β is enlarged. Therefore, even under the state in which the operator holds the medicine boxes MB to be replenished between the hands, the operator can move the replenishing region width adjusting member 76 by pressing the unfixing piece 83 with the back of the hand or the finger so that the convenience is excellent.

In the medicine box delivering apparatus 10 of this embodiment, the replenishing apparatus 70 includes the movable piece 90 to be actuated in association with the opening and closing operation of the shutter 78 of the medicine box accommodating box 72. When the shutter 78 is in the opened state, the movable piece 90 protrudes from the side wall 72c. When the shutter 78 is in the closed state, on the other hand, the movable piece 90 becomes flush with the side wall 72c or retreats in a direction farther away from the replenishing region width adjusting member 76 with respect to the side wall 72c. Therefore, even if the operator who performs the replenishment work for the medicine boxes MB positions the replenishing region width adjusting member 76 to come into close contact with the side surface of the medicine box MB, the medicine box MB does not come into excessive contact with the endless belt 54, and the medicine boxes MB do not come into excessive contact with each other. Accordingly, the medicine boxes MB placed in the replenishing-object medicine box placing region β of the replenishing-object medicine box placing portion 74 can smoothly be transferred to the loading apparatus 30. Note that, this embodiment is directed to the example of providing the movable piece 90 to be actuated in association with the opening and closing operation of the shutter 78, but the present invention is not limited thereto, and the movable piece 90 may be omitted. Further, the shape and size of the movable piece 90 are not particularly limited, and instead of the movable piece 90 having the shape of protrusion as illustrated in the figures, there may be employed, for example, a movable piece having a shape of a bar extending from the front side to the rear side of the replenishing apparatus 70.

### «Modification example of control apparatus 100»

The control apparatus 100 not only controls the operations of the accommodating and delivering apparatus 20, the loading apparatus 30, and the replenishing apparatus 70 as described above, but is also capable of, for example, managing a stock of the medicine boxes MB in the respective medicine box paths 22 to calibrate the accommodating and delivering apparatus 20, and deriving the number of the medicine boxes MB to be prepared in the replenishing apparatus 70. In the following, a configuration of the control apparatus 100 and a stock management method to be performed by the control apparatus 100 according to a modification example of the present invention are described in detail with reference to the drawings.

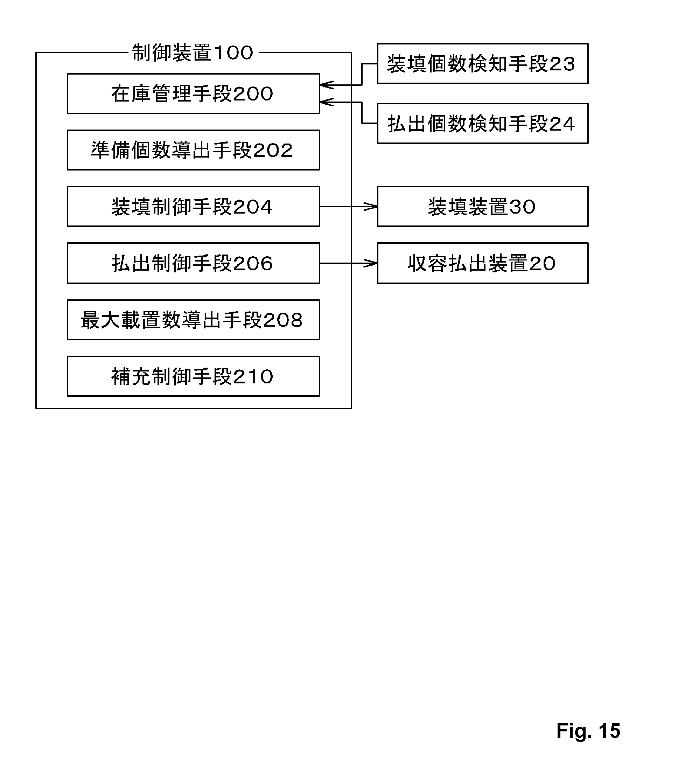

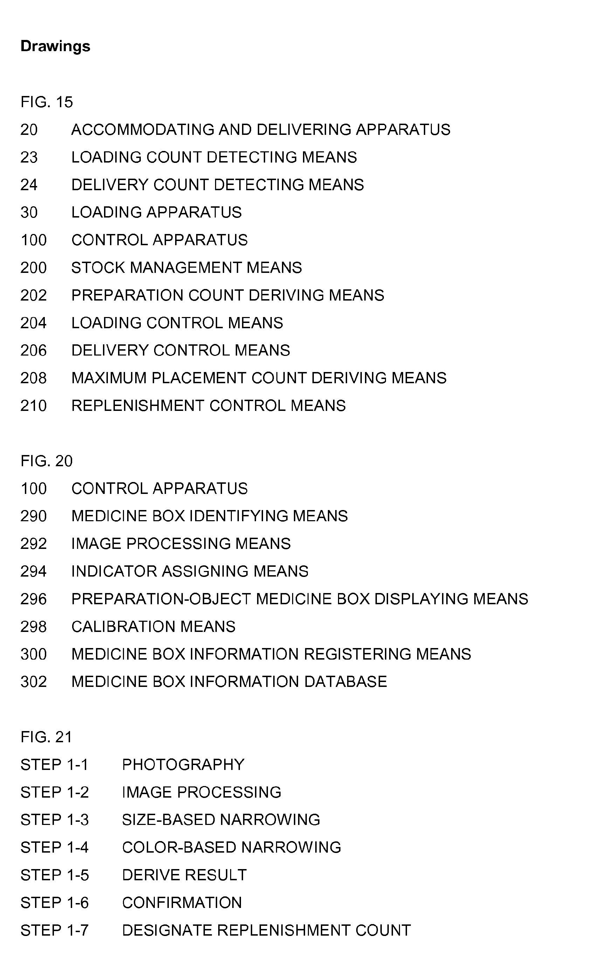

As illustrated in FIG. 15, the control apparatus 100 includes stock management means 200, preparation count deriving means 202, loading control means 204, delivery control means 206, maximum placement count deriving means 208, and replenishment control means 210. The configurations of the stock management means 200 and the like according to this modification example are implemented by, for example, installing an application program in the control apparatus 100.

The stock management means 200 is configured to grasp and manage a stock condition of the medicine boxes MB in the accommodating and delivering apparatus 20. The stock management means 200 is configured to derive a stock count Z of each medicine box path 22 based on a loading count X of the medicine boxes MB loaded into each medicine box path 22 of the accommodating and delivering apparatus 20 by the loading apparatus 30 through the above-mentioned preparatory operation, and a delivery count Y of the medicine boxes MB delivered from each medicine box path 22 after the preparatory operation.

Specifically, the medicine box delivering apparatus 10 includes loading count detecting means 23 provided on the inlet 22d side of each medicine box path 22 or on the outlet side of the loading apparatus 30, and delivery count detecting means 24 provided on the outlet 22e side of each medicine box path 22. Outputs from those detecting means 23 and 24 are input to the stock management means 200, and thus the loading count X and the delivery count Y can be grasped for each medicine box path 22. Further, the stock management means 200 is capable of deriving the stock count Z of the medicine boxes MB in each medicine box path 22 by subtracting the delivery count Y from the loading count X. In a case where a plurality of medicine box paths 22 are provided so as to accommodate and deliver the medicine boxes MB of the same type in the accommodating and delivering apparatus 20, the stock management means 200 is capable of recognizing those medicine box paths 22 as a medicine box path group 22G, and deriving a total stock count ZG of the medicine box path group 22G. Specifically, the stock management means 200 is capable of deriving the total stock count ZG by deriving and summing the stock counts Z of the respective medicine box paths 22 that form the medicine box path group 22G.

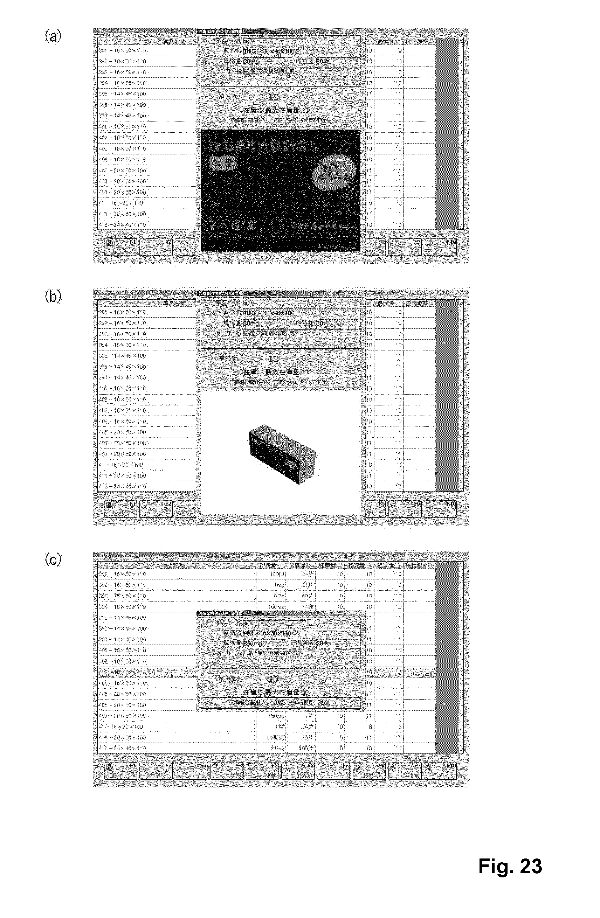

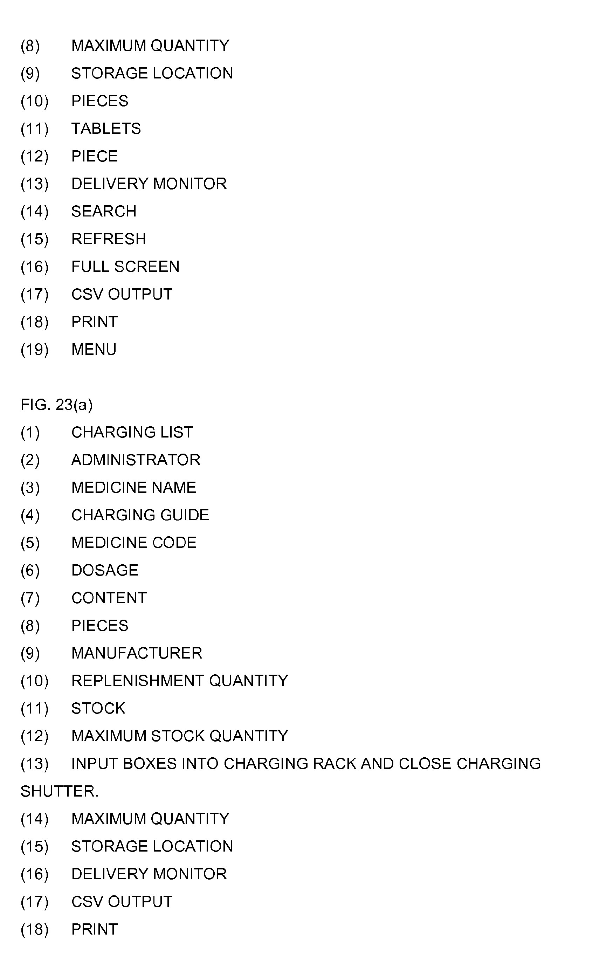

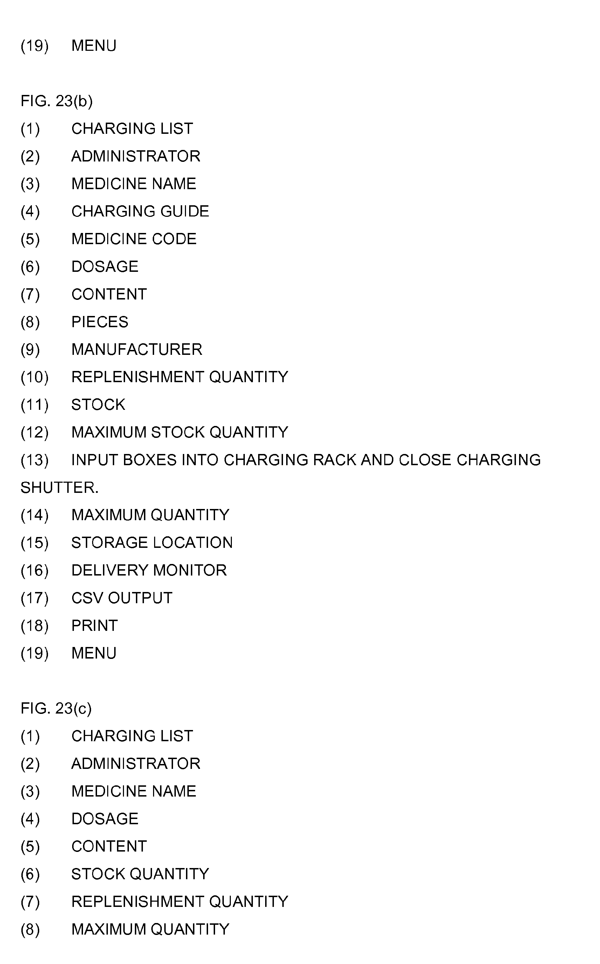

The preparation count deriving means 202 is configured to derive the number of the medicine boxes MB to be prepared in the replenishing apparatus 70 (preparation count J). The preparation count deriving means 202 derives the preparation count J of each medicine box path 22 by subtracting the stock count Z grasped by the stock management means 200 from the quantity of medicine boxes MB maximally stockable in each medicine box path 22 (maximum stockable count Q). Further, the preparation count deriving means 202 is capable of notifying the operator of the medicine box delivering apparatus 10 of the preparation count J through use of a display apparatus such as a display of the personal computer that forms the control apparatus 100. Specifically, the preparation count deriving means 202 is capable of notifying the operator of the preparation count J by displaying a charging guide interface on the display apparatus as illustrated in FIGS. 23 (a) to 23(c). Further, the preparation count deriving means 202 is capable of notifying the operator of the preparation count J with sound to be generated through use of, for example, a loudspeaker of the personal computer that forms the control apparatus 100.

In the case where a plurality of medicine box paths 22 are provided so as to accommodate and deliver the medicine boxes MB of the same type in the accommodating and delivering apparatus 20, the preparation count deriving means 202 is capable of recognizing those medicine box paths 22 as the medicine box path group 22G, and deriving a preparation count J of the entire medicine box path group G (total preparation count JG). Specifically, the preparation count deriving means 202 is capable of deriving the total preparation count JG by deriving and summing the preparation counts J of the respective medicine box paths 22 that form the medicine box path group G. When preparing the medicine boxes MB corresponding to the medicine box path group G in the replenishing apparatus 70, the preparation count deriving means 202 is capable of notifying the operator of the medicine box delivering apparatus 10 of the total preparation count JG through use of the display apparatus such as the display of the personal computer that forms the control apparatus 100. Also in this case, the preparation count deriving means 202 is capable of notifying the operator of the preparation count J by displaying the charging guide interface on the display apparatus as illustrated in FIGS. 23(a) to 23(c), or by generating sound through use of the loudspeaker or the like.

The loading control means 204 is configured to control the operation of the loading apparatus 30. Similarly to the stock management means 200 and the preparation count deriving means 202, the loading control means 204 recognizes, as the medicine box path group 22G, the plurality of medicine box paths 22 provided so as to accommodate and deliver the medicine boxes MB of the same type. When the medicine boxes MB of the type corresponding to the medicine box path group 22G are prepared in the replenishing apparatus 70, the loading control means 204 is capable of distributing the medicine boxes MB prepared in the loading apparatus 30 to the respective medicine box paths 22 that form the medicine box path group 22G. Therefore, even when the medicine boxes MB corresponding to the total preparation count JG are collectively prepared in the replenishing apparatus 70, the medicine box delivering apparatus 10 can load the medicine boxes MB into the respective medicine box paths 22 in a distributed manner by actuating the loading apparatus 30 under the control of the loading control means 204.

The delivery control means 206 is configured to control the delivery operation for the medicine boxes MB to be performed by the accommodating and delivering apparatus 20. Similarly to the above-mentioned stock management means 200 and the like, the delivery control means 206 recognizes, as the medicine box path group 22G, the medicine box paths 22 provided so as to accommodate and deliver the medicine boxes MB of the same type. The delivery control means 206 predefines an order of the delivery operation for the respective medicine box paths 22 that form the medicine box path group 22G. When delivering the medicine boxes MB corresponding to the medicine box path group 22G, the delivery control means 206 actuates the discharge regulating means 26 of the respective medicine box paths 22 in the predefined order to deliver the medicine boxes MB. Accordingly, it is possible to prevent such a situation that only the medicine boxes MB accommodated in particular medicine box paths 22 of the medicine box path group 22G are delivered while the medicine boxes MB in the other medicine box paths 22 are not delivered but left inside. Thus, it is possible to substantially evenly deliver the medicine boxes MB in the respective medicine box paths 22, and therefore prevent an unbalanced stock condition of the respective medicine box paths 22. Specifically, there is no such unbalanced stock condition that the medicine boxes MB of the same type assigned with different lot numbers or manufacture dates remain in the medicine box paths 22.

The maximum placement count deriving means 208 derives, as a maximum placement count M, the number of medicine boxes maximally placeable on the replenishing-object medicine box placing portion 74 in a single replenishing apparatus 70. Specifically, the maximum placement count deriving means 208 grasps the size (thickness) of the medicine box MB to be prepared in the replenishing apparatus 70, and divides the width of the replenishing-object medicine box placing portion 74 by the thickness of the medicine box MB, to thereby derive the maximum placement count M. For the size (thickness) of the medicine box MB required to derive the maximum placement count M, a database containing information on the size of the medicine box MB may be created in advance, and the size (thickness) may be grasped based on the database. Alternatively, the operator may grasp the size (thickness) with respect to the control apparatus 100.

The replenishment control means 210 is configured to control the operations of the replenishing apparatus 70. In the replenishment operation for the medicine boxes MB, when the preparation count J or the total preparation count JG derived by the preparation count deriving means 202 is equal to or smaller than the maximum placement count M derived by the maximum placement count deriving means 208, the replenishment control means 210 selects one replenishing apparatus 70 having no medicine boxes MB placed on the replenishing-object medicine box placing portion 74, and brings the shutter 78 of the replenishing apparatus 70 into the opened state to enable the replenishment of the medicine boxes MB.

When the preparation count J or the total preparation count JG is equal to or larger than the maximum placement count M, on the other hand, the replenishment control means 210 sets a plurality of replenishing apparatus 70 into a usable state for the replenishment of the medicine boxes MB. Specifically, when a relationship of J=n·M+α (n, α: natural numbers) is established between the preparation count J and the maximum placement count M, the replenishment control means 210 sets n+1 replenishing apparatus 70 into a usable state for the replenishment of the medicine boxes MB. Further, when the type of the medicine boxes MB to be replenished corresponds to the medicine box path group 22G, the replenishment control means 210 performs arithmetic operation by a mathematical expression of JG=n·M+α (n, α: natural numbers) based on the relationship between the total preparation count J and the maximum placement count M, and sets n+1 replenishing apparatus 70 into a usable state for the replenishment of the medicine boxes MB.

As described above, the medicine box delivering apparatus 10 of this embodiment is configured to input (load) each of the medicine boxes MB from the loading apparatus 30 to the accommodating and delivering apparatus 20, and hence the number of the loaded medicine boxes MB can be grasped easily and accurately by the loading count detecting means 23. Further, the number of the medicine boxes MB delivered from the accommodating and delivering apparatus 20 can be grasped accurately by the delivery count detecting means 24. Thus, by providing the stock management means 200 as described above, the stock count of the medicine boxes MB can be grasped accurately based on the delivery count and the loading count of the medicine boxes MB.

In the case where the above-mentioned preparation count deriving means 202 is provided, the preparation count deriving means 202 can recognize, as the medicine box path group 22G, the medicine box paths 22 that accommodate the medicine boxes MB of the same type, and grasp and notify the operator of the quantity of the medicine boxes MB to be prepared in the entire medicine box path group 22G. Thus, according to the medicine box delivering apparatus 10 of this embodiment, the efficiency of the preparation work for the medicine boxes MB can further be enhanced, and the preparation work can further be simplified.

In the case where the loading control means 204 is provided as described above, when the medicine boxes MB of the type corresponding to the medicine box path group 22G are prepared in the replenishing apparatus 70, the loading control means 204 can control the loading apparatus 30 to distribute the medicine boxes MB prepared in the replenishing apparatus 70 to the respective medicine box paths 22 that form the medicine box path group 22G. Thus, the medicine boxes MB corresponding to a loading quantity of the entire medicine box path group 22G can be prepared collectively in the replenishing apparatus 70, and hence there is no need to prepare the medicine boxes MB separately for the respective medicine box paths 22.

In the case where the maximum placement count deriving means 210 is provided, when the number of the medicine boxes MB to be prepared in the replenishing apparatus 70 exceeds the quantity of the medicine boxes MB replenishable in a single replenishing apparatus 70, a plurality of replenishing apparatus 70 can be used for the replenishment of the medicine boxes MB. Thus, by providing the maximum placement count deriving means 210, even when preparing more medicine boxes MB than those maximally placeable in the replenishing apparatus 70, the medicine boxes MB can be prepared without separately performing a plurality of times of preparation work, and hence the work efficiency can further be enhanced.

In the case where the above-mentioned delivery control means 206 is provided, when delivering the medicine boxes MB corresponding to the medicine box path group 22G, the medicine box paths 22 for delivering the medicine boxes MB are switched in a predetermined order so that the medicine boxes MB can be delivered substantially evenly from the respective medicine box paths 22. Accordingly, the medicine boxes MB can be delivered in an order from medicine boxes MB previously loaded into the accommodating and delivering apparatus 20.

Note that, in the configuration of this modification example, the stock management means 200, the preparation count deriving means 202, the loading control means 204, the delivery control means 206, the preparation count deriving means 202, and the maximum placement count deriving means 210 are provided as the control apparatus 100, but a part or all of those components may be implemented by another control apparatus such as a personal computer. Further, all of the stock management means 200 and the like described in this modification example do not need to be provided necessarily, but a part of those components may be omitted.

### «Medicine box identifying apparatus»

Most medicine boxes MB generally available are assigned with identification indicators such as barcodes defined by type. With the identification indicators, the types of the medicine boxes MB to be replenished can be identified. However, some types of medicine boxes MB are not assigned with barcodes or the like. When replenishing those medicine boxes MB, the type identifying work depends inevitably on visual recognition of the operator or the like, thus leading to a problem of decrease in work efficiency. Further, the intervention of the work involving the visual recognition of the operator may cause, for example, misidentification of the types of the medicine boxes MB. Therefore, to prevent those problems, it is preferred that the type identification for the medicine boxes MB can be performed mechanically. In the following, description is given of an example of a medicine box identifying apparatus that may be used for identifying the types of the medicine boxes MB, and a medicine box delivering apparatus 10 including the medicine box identifying apparatus. Note that, in the following description, the same components as those in the above-mentioned embodiment are represented by the same reference symbols, and detailed description thereof is therefore omitted herein.

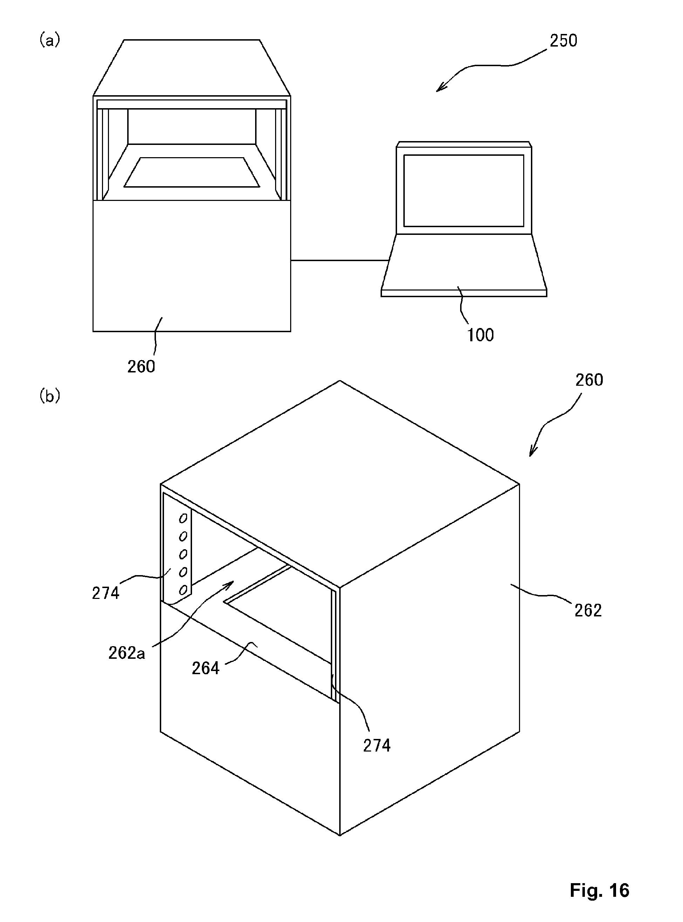

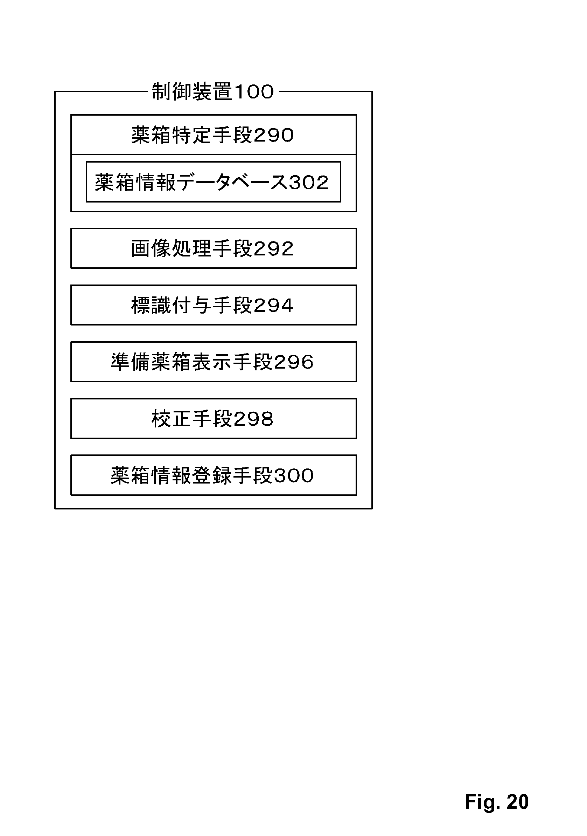

A medicine box identifying apparatus 250 illustrated in FIG. 16(a) is configured to identify the type of each medicine box MB based on a package image obtained by photographing a package of the medicine box MB. The medicine box identifying apparatus 250 is formed of a combination of a photographing apparatus 260 for photographing the medicine box MB, and the control apparatus 100. As illustrated in FIG. 20, the control apparatus 100 includes medicine box identifying means 290, image processing means 292, indicator assigning means 294, preparation-object medicine box displaying means 296, calibration means 298, and medicine box information registering means 300, which are provided by, for example, installing an application program for the medicine box identifying apparatus 250.

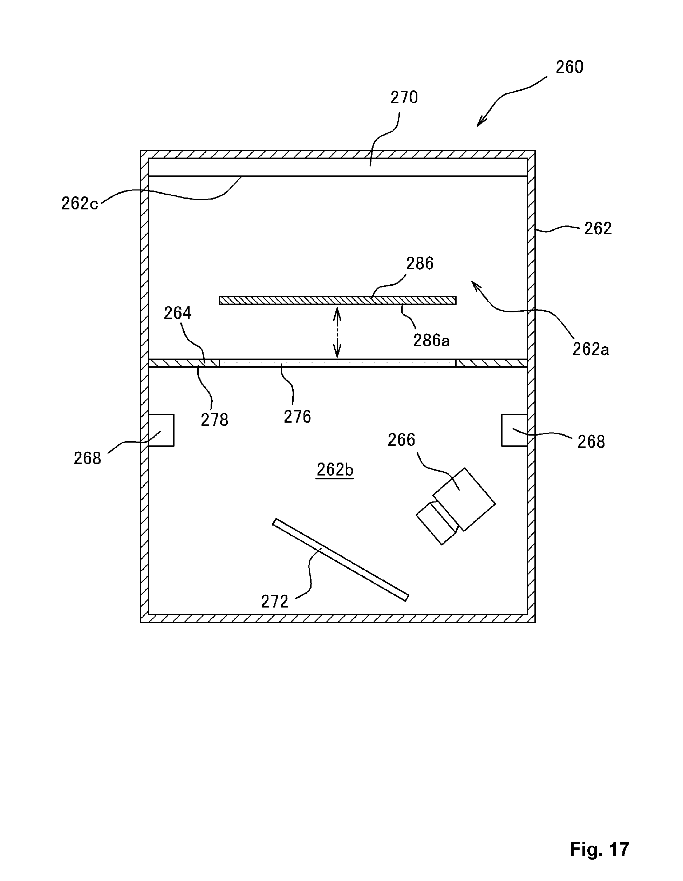

The photographing apparatus 260 illustrated in FIG. 16(b) is an apparatus for photographing the medicine box MB. As illustrated in FIG. 17, the photographing apparatus 260 includes a photographing stage 264, a camera 266, brightness adjusting means 267, a reflection mirror 272, sensors 274, and other components that are built into a casing 262. Further, the photographing apparatus 260 includes a calibration member 286 removably mounted to the photographing stage 264.

As illustrated in FIG. 16(b), the casing 262 is a box member formed into a substantially rectangular parallelepiped shape with an opening portion 262a formed in a side surface thereof. Further, as illustrated in FIG. 17, across the photographing stage 264 as a boundary, the space on the lower side of the casing 262 is defined as a camera-side region 262b, and the space opposite thereto is defined as a box arrangement region 262d for arranging the medicine box MB to be photographed. The apparatus such as the camera 266, camera-side illumination apparatus 268 as a part of the brightness adjusting means 267, and the reflection mirror 272 are accommodated in the camera-side region 262b. A box arrangement region-side illumination apparatus 270 as a part of the brightness adjusting means 267 is built into a top surface 262c of the casing 262. Further, at a middle portion of the casing 262 in its height direction, the photographing stage 264 is installed substantially in parallel to the top surface 262c. Still further, as illustrated in FIG. 16(b), the sensors 274 are provided on side surfaces of the casing 262 which are located on both sides of the opening portion 262a, thereby being capable of detecting insertion of the operator's hand through the opening portion 262a.

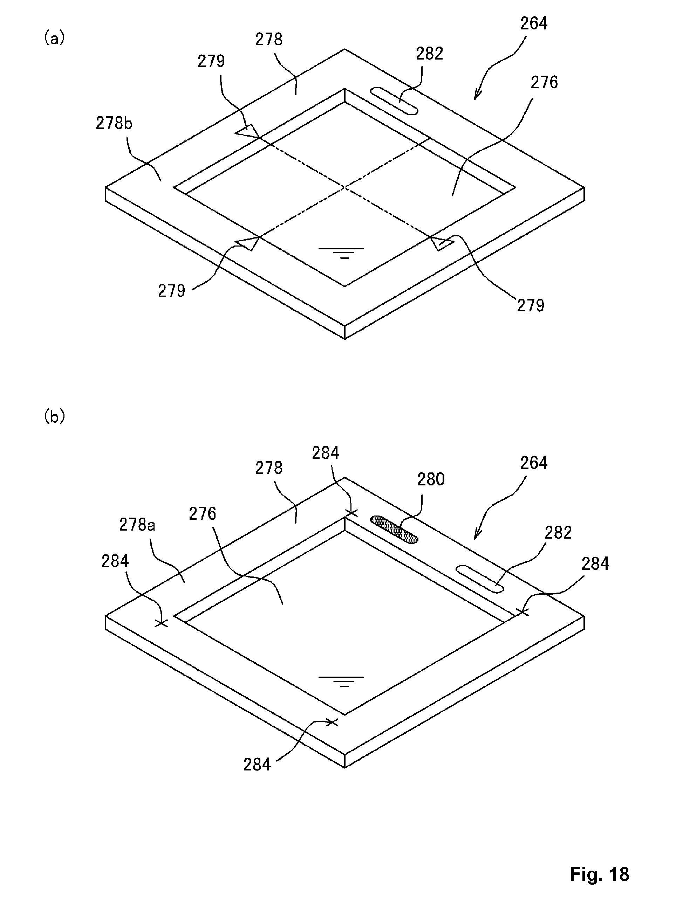

As illustrated in FIGS. 18, the photographing stage 264 is formed of a placement portion 276 fixed to a frame 278. The placement portion 276 is a member formed of a glass plate or a resin plate with light transmissive properties, and the medicine box MB may be placed on the placement portion 276. Placement position indicating marks 279 for indicating the center of the photographing stage 264 are provided on a front surface 278b of the frame 278. The placement position indicating marks 279 are triangular marks provided at adjacent positions of three edges among the four edges of the photographing stage 264. As indicated by the two-dot chain lines of FIG. 18(a), the position of intersection between the extension lines of the placement position indicating marks 279 corresponds substantially to the center of the photographing stage 264, and this intersection point between the extension lines are set as a reference of the position at which the medicine box MB is to be placed.

As illustrated in FIG. 18(b), the frame 278 includes a color calibration member 280 made of a white resin and formed on a surface of the frame 278 on a side on which the camera 266 and the like are provided (back surface 278a). Further, a light transmissive hole 282 passing through the frame 278 in its thickness direction is provided at a position adjacent to the color calibration member 280. Still further, field angle adjusting indicators 284 are provided on the back surface 278a side of the frame 278. The field angle adjusting indicators 284 are marks having a cross shape, and are provided at four corners of the frame 278. An imaginary line connecting intersection points of the respective field angle adjusting indicators 284 is formed at a position offset outward from the edge line of the placement portion 276. Further, each of the field angle adjusting indicators 284 has coordinates which are adjusted and measured at the intersection point of the cross shape when the camera 266 is set. Based on the coordinate values, subsequent calibration is performed for the position of the camera 266 and the like. Note that, when the camera 266 or a lens is replaced or when any problem arises with the accuracy of image recognition, for example, original data for the calibration may be created again by setting the camera 266 and measuring the coordinates of the field angle adjusting indicators 284 again.

The camera 266 is capable of performing photography via the reflection mirror 272 provided substantially immediately below the above-mentioned placement portion 276 so that a single image contains the medicine box MB placed on the placement portion 276, and the color calibration member 280, the light transmissive hole 282, and the field angle adjusting indicators 284 that are provided on the frame 278. Further, the brightness adjusting means 267 is capable of adjusting the brightness of the camera-side region 262b and the brightness of the box arrangement-side region 262d independently. The brightness adjusting means 267 includes the camera-side illumination apparatus 268 and the box arrangement region-side illumination apparatus 270.

Each of the camera-side illumination apparatus 268 is provided on corresponding one of opposing inner wall surfaces that form the camera-side region 262b, and is capable of illuminating the substantially entire placement portion 276 from the camera-side region 262b side (camera 266 side). The box arrangement region-side illumination apparatus 270 is built into the top surface 262c of the casing 262, and is capable of illuminating the medicine box MB placed on the photographing stage 264 from an opposite side of the camera 266. The brightness adjusting means 267 sets the camera-side illumination apparatus 268 into an ON state and the box arrangement region-side illumination apparatus 270 into an OFF state, thereby being capable of adjusting the camera-side region 262b to be brighter than the box arrangement-side region 262d. Further, the brightness adjusting means 267 sets the camera-side illumination apparatus 268 into an OFF state and the box arrangement region-side illumination apparatus 270 into an ON state, thereby being capable of adjusting the box arrangement-side region 262d to be brighter than the camera-side region 262b.

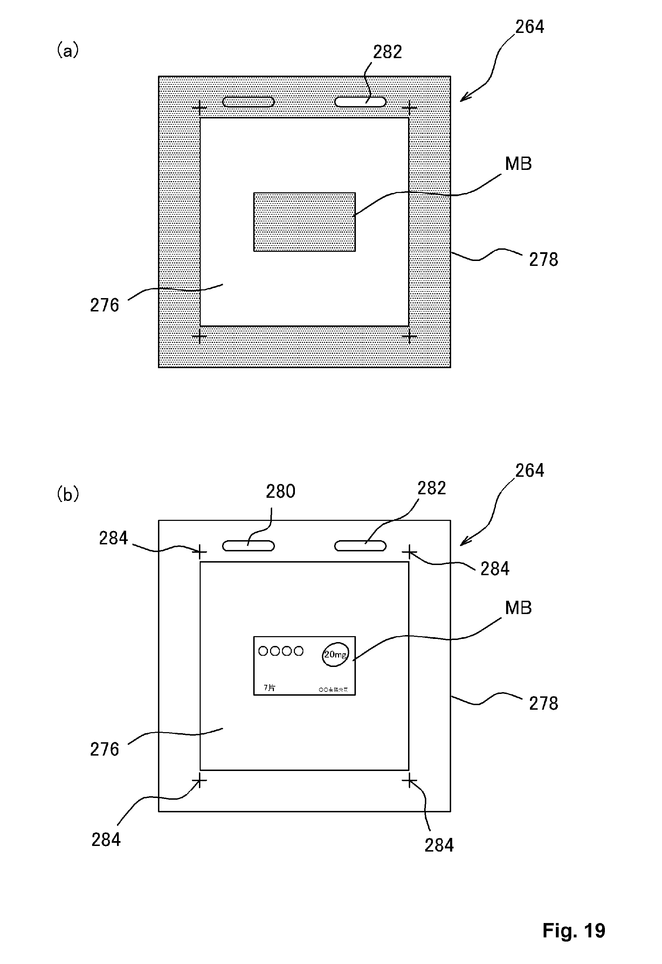

The photographing apparatus 260 performs photography with the camera 266 under the ON state of the box arrangement region-side illumination apparatus 270 and the OFF state of the camera-side illumination apparatus 268, thereby being capable of acquiring an image B as illustrated in FIG. 19(a). The image B shows the medicine box MB placed on the photographing stage 264 as a shadow as indicated by the hatched portion of FIG. 19(a). Further, the photographing apparatus 260 performs photography with the camera 266 under the OFF state of the box arrangement region-side illumination apparatus 270 and the ON state of the camera-side illumination apparatus 268, thereby being capable of acquiring an image A as illustrated in FIG. 19(b). The image A shows the medicine box MB placed on the photographing stage 264 in a state in which the package of the medicine box MB can be identified as illustrated in FIG. 19 (b) .

The photographing apparatus 260 turns ON and OFF the camera-side illumination apparatus 268 and the box arrangement region-side illumination apparatus 270 and performs photography with the camera 266 under a condition that the sensors 274 detect insertion and withdrawal of the operator's hand through the opening portion 262a provided in the casing 262. Specifically, when it is confirmed with the sensors 274 that the operator's hand is inserted and then withdrawn, at a time point when a predetermined period of time has elapsed thereafter, the image A is acquired with the camera 266 under the ON state of the camera-side illumination apparatus 268 and the OFF state of the box arrangement region-side illumination apparatus 270. Immediately after that, the camera-side illumination apparatus 268 are switched into the OFF state while the box arrangement region-side illumination apparatus 270 is switched into the ON state, and the image B is acquired with the camera 266.

The calibration member 286 is a plate-like member having a calibration surface 286a capable of covering the substantially entire photographing stage 264. The calibration surface 286a is made of a white resin with no color unevenness, that is, with a uniform lightness, saturation, and hue in the entire range. The photographing apparatus 260 is used for calibrating the camera 266, and is removed from the photographing stage 264 when identifying the type of the medicine box MB.

The medicine box identifying means 290 is configured to identify the type of the medicine box MB based on the image obtained by the photographing apparatus 260. The medicine box identifying means 290 includes a medicine box information database 302 that accumulates, for each type of the medicine box MB, information on the size of the medicine box MB, color information on the color of the package image of the medicine box MB, and the package image of the medicine box MB. In addition to the image obtained by the image processing means 292 described in detail later, an image separately prepared by the operator may be registered as the package image in the medicine box information database 302. Further, the information, the package image, and the like on the medicine box MB that are registered in the medicine box information database 302 may be referred to appropriately by using the control apparatus 100.

The image processing means 292 is configured to process the image obtained by the photographing apparatus 260. The image processing means 292 is capable of performing processing of acquiring the package image of the medicine box MB by clipping only a region corresponding to the medicine box MB out of the image A acquired by the photographing apparatus 260.

Specifically, the image processing means 292 recognizes the region of the shadow contained in the image B (shadow region) as a region in which the medicine box MB is arranged. After that, the image processing means 292 recognizes the region corresponding to the above-mentioned shadow region in the image A acquired together with the image B as a region showing the package of the medicine box MB (package image region), and clips the package image region. In this manner, the image processing means 292 acquires the package image of the medicine box MB. The package image obtained by the image processing means 292 is saved for each type of the medicine box MB in the medicine box information database 302.

The indicator assigning means 294 is configured to assign an indicator to the package image of the medicine box MB obtained by the image processing means 292, or to the image separately prepared by the operator. The image assigned with the indicator by the indicator assigning means 294 is sorted by type of the medicine box MB, and is accumulated in the medicine box information database 302.

The preparation-object medicine box displaying means 296 includes the display apparatus such as the display of the personal computer. The preparation-object medicine box displaying means 296 is capable of displaying the package image of the medicine box MB to be prepared in the replenishing apparatus 70 by reading the package image from the medicine box information database 302. When the package image of the medicine box MB to be prepared in the replenishing apparatus 70 is assigned with an indicator by the indicator assigning means 294, the preparation-object medicine box displaying means 296 is capable of displaying the package image in a state of being assigned with the indicator.

The calibration means 298 is configured to calibrate the lightness, the saturation, and the hue based on an image obtained by photographing the calibration member 286 with the camera 266 under a state in which the calibration member 286 is mounted to the photographing stage 264.

The medicine box information registering means 300 is provided so as to register unregistered information on the medicine box MB in the medicine box information database 302. The medicine box information registering means 300 is capable of inputting information and images to be registered, specifically, the information on the size of the medicine box MB and the images on the medicine box MB, and registering the information and images in the medicine box information database 302. As the images on the medicine box MB, for example, the image separately prepared by the operator may be used in addition to the package image of the medicine box MB acquired by the above-mentioned photographing apparatus 260.

### «Operation of medicine box delivering apparatus including medicine box identifying apparatus»

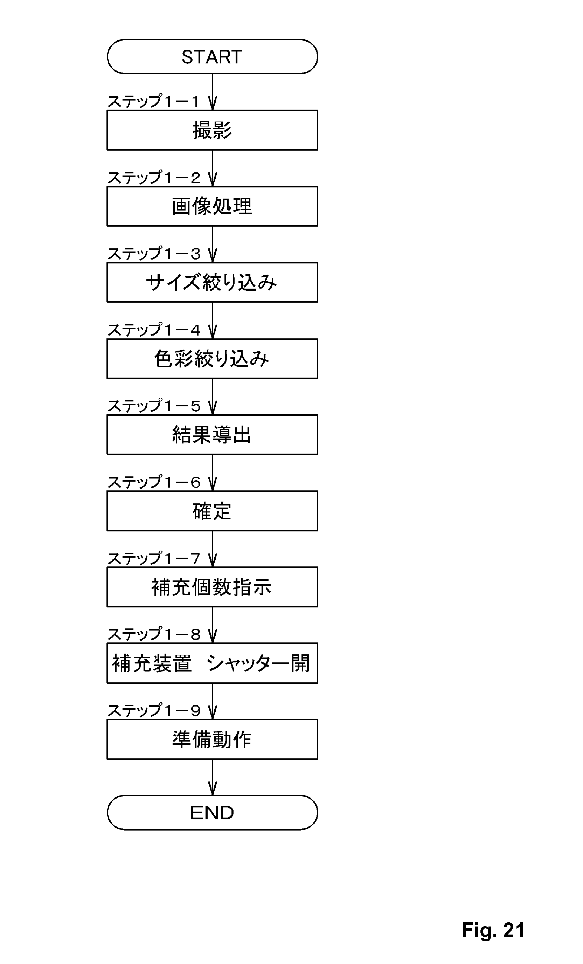

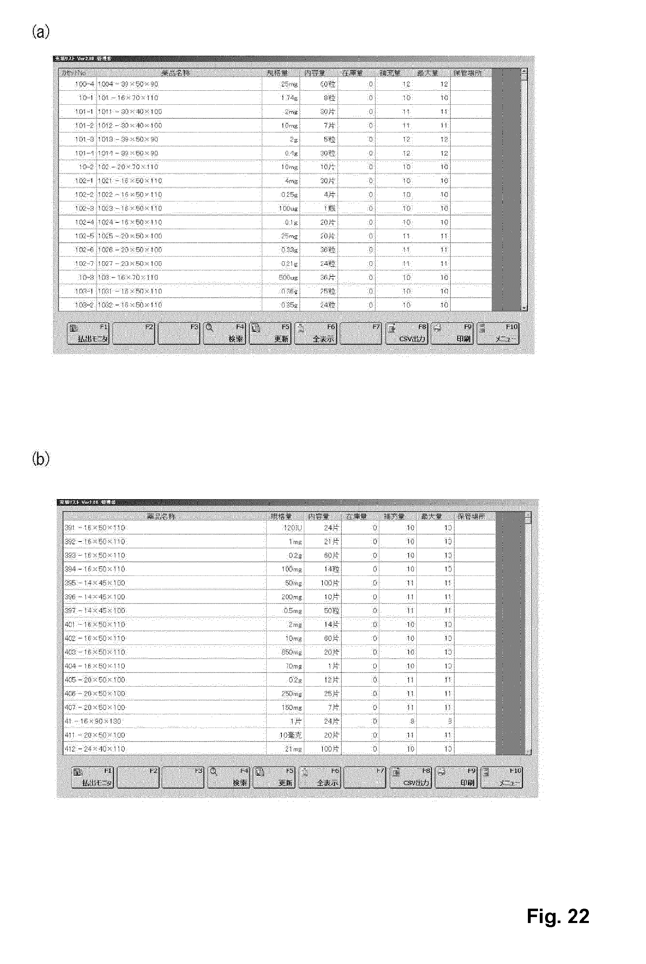

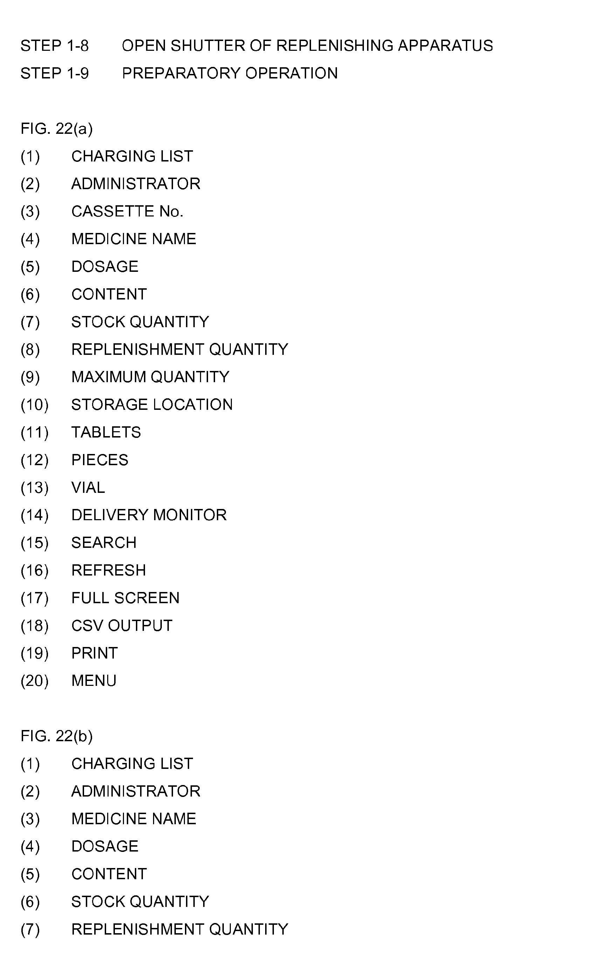

Next, referring to the flow chart of FIG. 21, description is given of an operation to be performed until the medicine boxes MB are loaded into the accommodating and delivering apparatus 20 in the medicine box delivering apparatus 10 including the medicine box identifying apparatus 250. When loading the medicine boxes MB in the medicine box delivering apparatus 10 including the medicine box identifying apparatus 250, a charging list of the medicine boxes MB as illustrated in FIG. 22(a) or 22(b) is displayed on the control apparatus 100 in the form of an interface. In this state, when one of the medicine boxes MB is set on the photographing stage 264 of the photographing apparatus 260, the medicine box MB is photographed. In this manner, the image A and the image B of the medicine box MB to be prepared are acquired.

When the photography of the medicine box MB is completed in Step 1-1, the control flow proceeds to an image processing step of Step 1-2. In the image processing step, the image processing means 292 corrects the image, and acquires the package image of the medicine box MB. Specifically, in Step 1-2, the field angle is corrected with reference to the field angle adjusting indicators 284 shown in the image A acquired in Step 1-1. Accordingly, plane distortion of the image obtained by photographing the medicine box MB is corrected. Further, the color unevenness of the image A is corrected with reference to the white color calibration member 280 shown in the image A. Still further, the illuminance of the image A is corrected with reference to the illuminance of a part of the image A corresponding to the light transmissive hole 282.

Further, in Step 1-2, the image processing means 292 clips the package image of the medicine box MB out of the image A. Specifically, the image processing means 292 recognizes the shadow region contained in the image B as a region in which the medicine box MB is placed. The image processing means 292 clips the region corresponding to the above-mentioned shadow region out of the image A acquired together with the image B in Step 1-1 as the package image of the medicine box MB. Further, the image processing means 292 corrects the package image clipped out of the image A so that the longitudinal direction of the package image is oriented horizontally. In this manner, the package image of the medicine box MB is acquired.

When the package image of the medicine box MB is acquired in Step 1-2, the control flow proceeds to Step 1-3 and subsequent steps, and the medicine box identifying means 290 identifies the type of the medicine box MB. Specifically, the type of the medicine box MB is identified through Step 1-3 as a size-based narrowing step of narrowing down the types of the medicine box MB based on the size of the medicine box MB, and through Step 1-4 as a color-based narrowing step of narrowing down the types of the medicine box MB based on the color information contained in the package image of the medicine box MB.

More specifically, when the control flow proceeds to the size-based narrowing step of Step 1-3, the medicine box identifying means 290 recognizes the shadow region contained in the image B acquired in Step 1-1 as a region in which the medicine box MB is placed, and determines the size of the medicine box MB based on the size of the shadow region. The medicine box identifying means 290 accesses the medicine box information database 302 to narrow the types of the medicine box MB down to those having a similar size.

When the narrowing of the types of the medicine box MB based on the size is completed in Step 1-3, the control flow proceeds to the color-based narrowing step of Step 1-4. In Step 1-3, the medicine box identifying means 290 analyzes the color information contained in the package image of the medicine box MB that is obtained through the image processing in Step 1-2, and accesses the medicine box information database 302 to read the color information on the candidates obtained in the size-based narrowing step, to thereby perform matching.

The analysis and the matching of the color information may be performed by various methods. For example, the analysis and the matching may be performed by dividing the package image into a plurality of regions, and confirming whether or not the types and contents of colors contained in the respective regions match with those registered in the medicine box information database 302. Further, the number of divided regions of the package image is increased and decreased depending on the phase of the narrowing, with the result that the processing time required for the analysis and the matching of the color information can be shortened and the load can be suppressed.

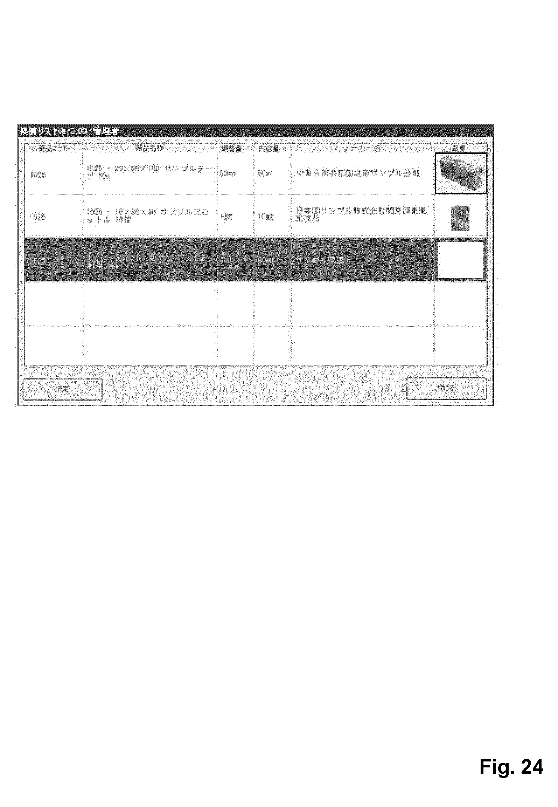

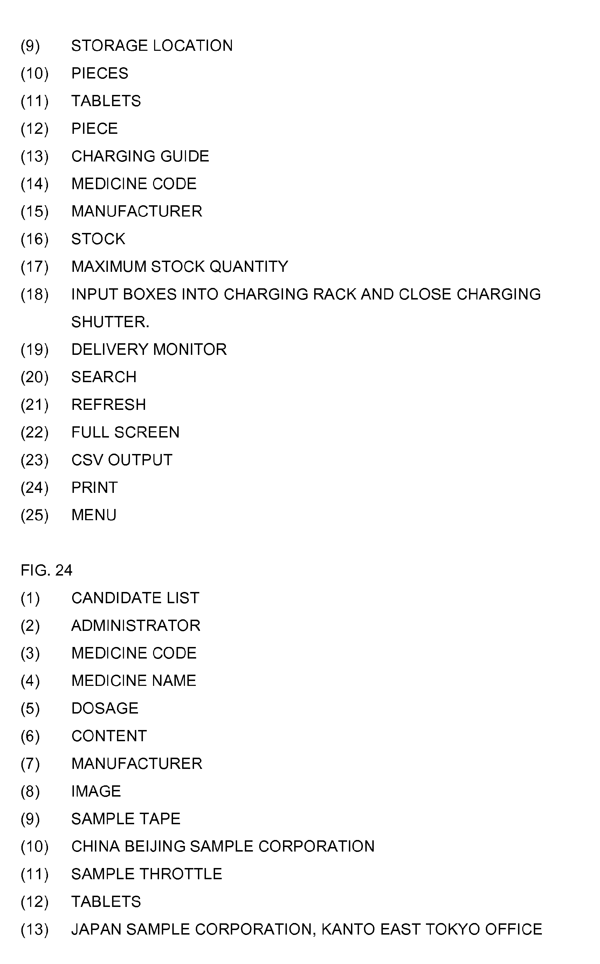

When the color-based narrowing step of Step 1-4 is completed, the control flow proceeds to Step 1-5, and an identification result is derived. When a plurality of types of the medicine box MB are obtained as candidates as a result of the narrowing in the above-mentioned color-based narrowing step, a type confirmation interface illustrated in FIG. 24 is displayed on the preparation-object medicine box displaying means 296, and all the candidates are displayed in the form of a list. After that, the control flow proceeds to Step 1-6.

When the control flow proceeds to Step 1-6, confirmation work for the type of the medicine box MB to be prepared in the replenishing apparatus 70 is performed. Specifically, when a single candidate for the medicine box MB is obtained as a result of the narrowing in Step 1-5, the type of the medicine box MB is confirmed directly. When a plurality of candidates for the type of the medicine box MB are present, on the other hand, the operator can select and confirm the type of the medicine box MB in the type confirmation interface illustrated in FIG. 24. Note that, when the type of the medicine box MB is not registered in the medicine box information database 302, the type of the medicine box MB is registered through manual input of the operator or a method of constructing the medicine box information database 302 that is described in detail later. Then, the above-mentioned flow is executed again to identify the type of the medicine box MB.

When the type of the medicine box MB is confirmed in Step 1-6, the control flow proceeds to Step 1-7. In Step 1-7, the stock condition of the accommodating and delivering apparatus 20 is confirmed, and the stock count and replenishment count of the medicine boxes MB to be replenished are derived. The result is displayed on the replenishment guide interface together with the package image of the medicine box MB as illustrated in FIGS. 23(a) to 23(c). In Step 1-8, the shutter 78 of the replenishing apparatus 70 for replenishing the medicine boxes MB is opened, and the replenishing apparatus 70 is brought into a state in which the medicine boxes MB are replenishable. When the shutter 78 of the replenishing apparatus 70 is then closed, the control flow proceeds to Step 1-9, and the preparatory operation is executed. Accordingly, the medicine boxes MB prepared in the replenishing apparatus 70 are loaded into the medicine box paths 22 of the accommodating and delivering apparatus 20 via the loading apparatus 30, and the series of operations is completed. Note that, the preparatory operation is the same as the preparatory operation described above, and detailed description thereof is therefore omitted herein.

### «Method of constructing medicine box information database»

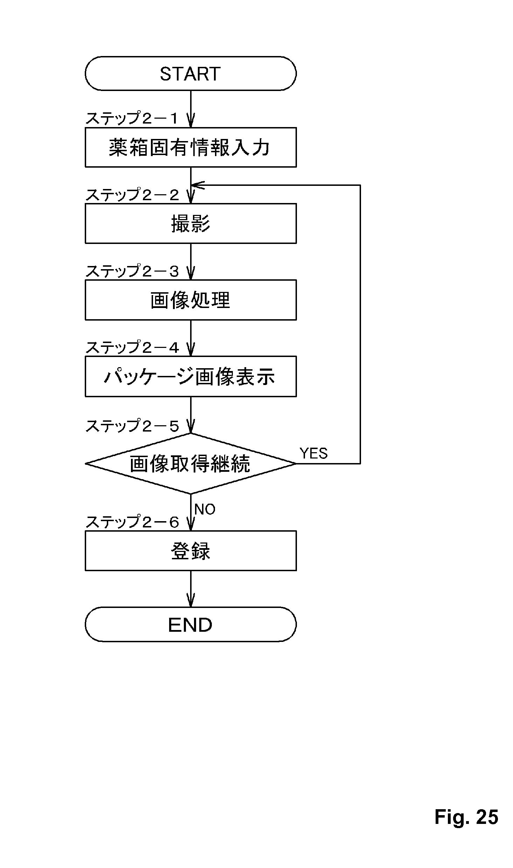

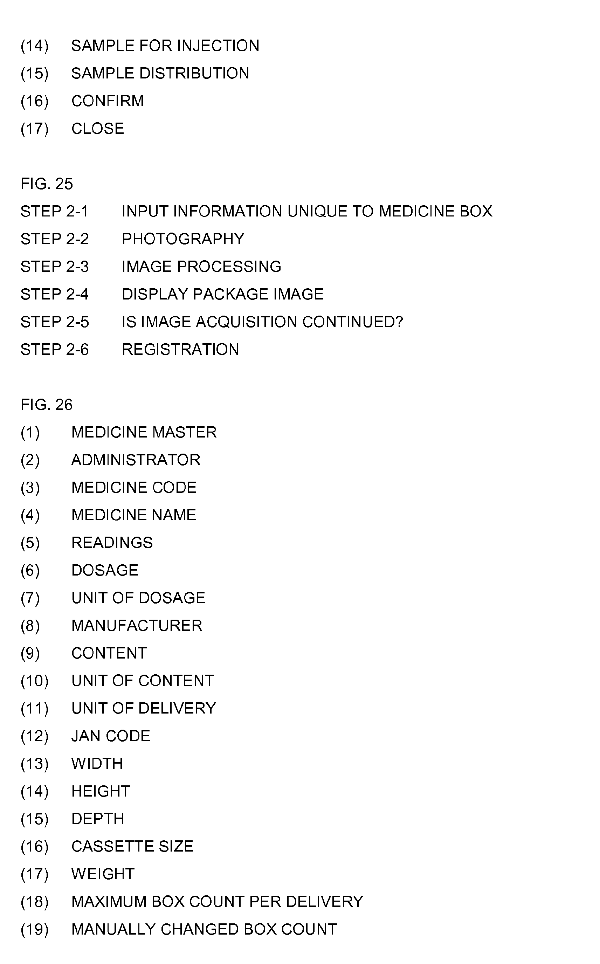

Next, description is given of the method of constructing the medicine box information database 302 through use of the above-mentioned photographing apparatus 260. A type of the medicine box MB which is not registered in the medicine box information database 302 can be registered in the medicine box information database 302 by using the package image of the medicine box MB acquired through use of the photographing apparatus 260. Specifically, the medicine box information database 302 can be constructed in accordance with the flow chart illustrated in FIG. 25. In the following, referring to FIG. 25, description is given of the method of constructing the medicine box information database 302 through use of the image obtained by the photographing apparatus 260. Note that, in the control flow illustrated in FIG. 25, detailed description is omitted for the same contents as those in the control flow for the medicine box delivering apparatus 10 that employs the medicine box identifying apparatus 250 illustrated in FIGS. 16.

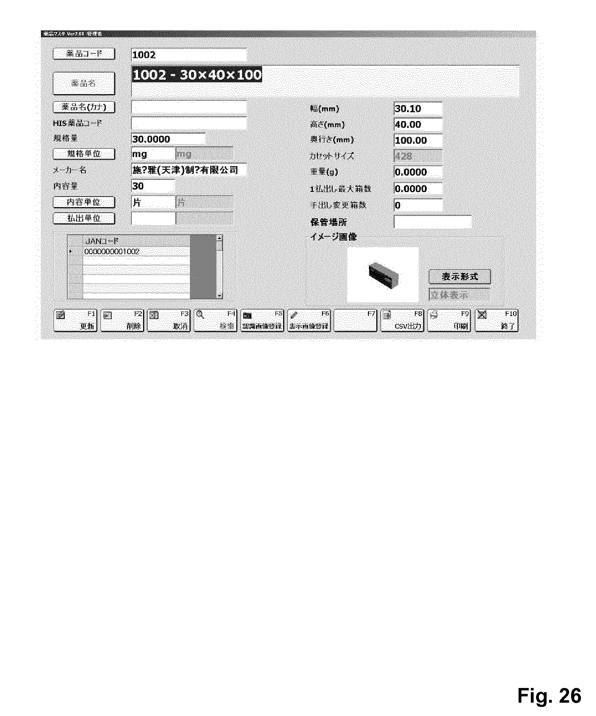

When constructing the medicine box information database 302, a registration interface as illustrated in FIG. 26 is displayed on the display apparatus including the display of the control apparatus 100. In Step 2-1, information unique to the medicine box MB is input via the registration interface. Specifically, in Step 2-1, information such as a registration name of the medicine box MB and a size of the medicine box MB is input. When the input of the information unique to the medicine box MB is completed, the control flow proceeds to Step 2-2. Specifically, when a display image registration button displayed on the registration interface of FIG. 26 is selected, the control flow proceeds to Step 2-2.

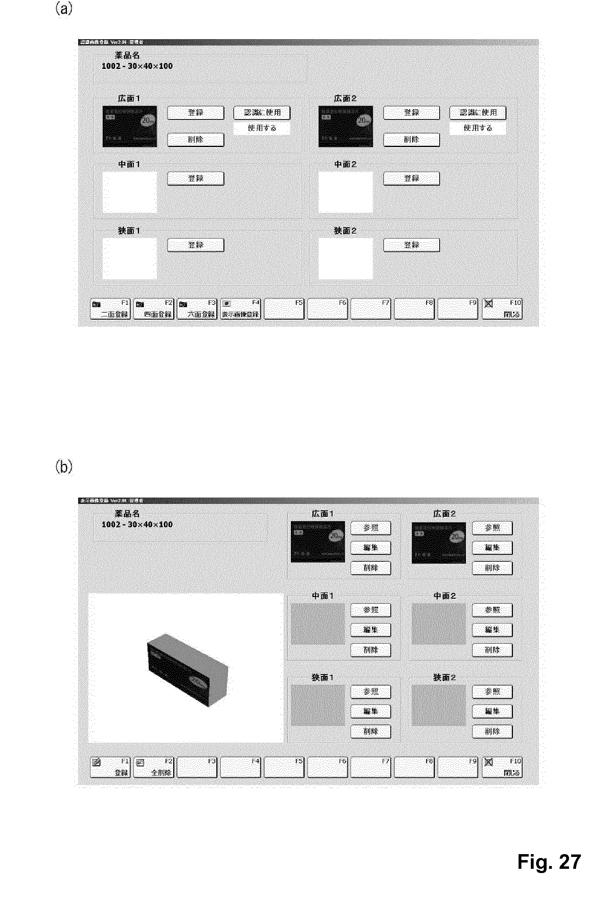

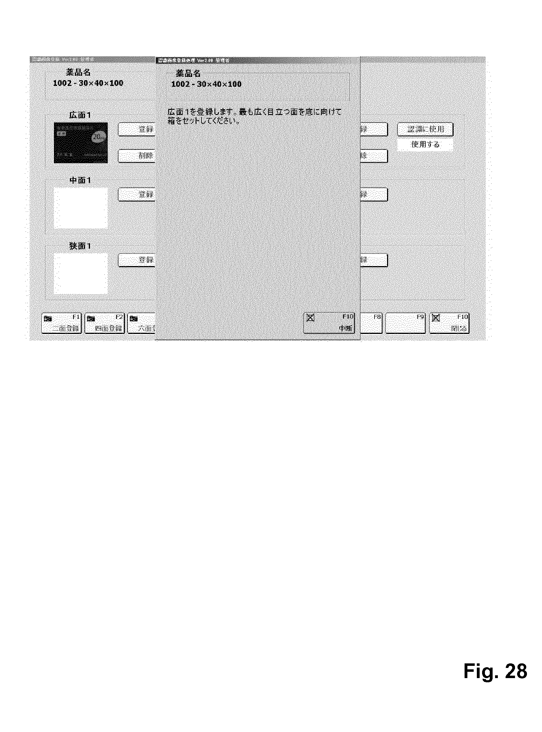

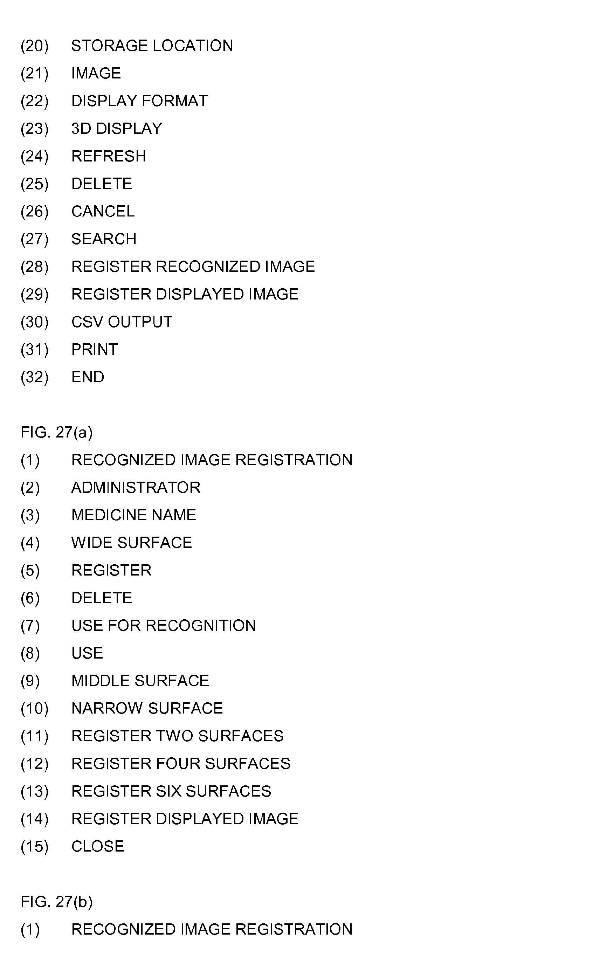

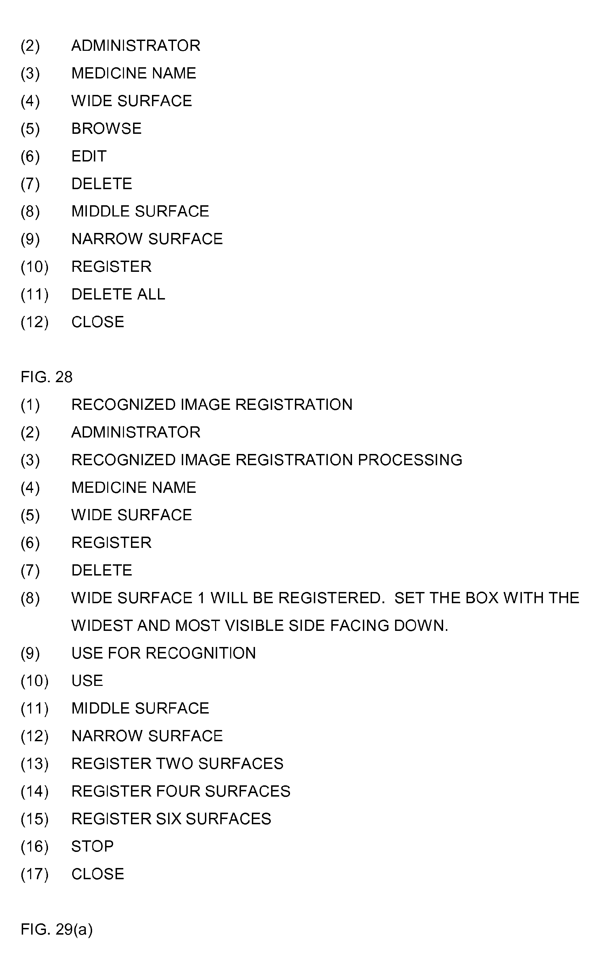

When the control flow proceeds to Step 2-2, a display image registration interface as illustrated in FIG. 27(a) is displayed. In the display image registration interface, a surface of the medicine box MB to be registered as the package image can be designated. When the surface of the medicine box MB to be registered as the package image is selected, a guidance interface as illustrated in FIG. 28 is displayed. When the medicine box MB is placed on the photographing stage 264 in such a posture that the surface to be registered as the package image is oriented to the camera 266 side, the control flow proceeds to Step 2-2, and the photography is performed. In Step 2-2, the image A and the image B are acquired in a manner similar to Step 1-1 in the control flow of FIG. 21 described above.

When the photography is completed in Step 2-2, the control flow proceeds to Step 2-3, and image processing is performed on the image acquired in Step 2-2. In Step 2-3, the image processing is performed in a manner similar to Step 1-2 described above, and the package image is acquired by clipping a region showing the medicine box MB out of the image A. The package image acquired in Step 2-3 is displayed on the display image registration interface in the form of a thumbnail as illustrated in FIGS. 27. Further, in the display image registration interface of FIGS. 27, a three-dimensional shape of a rectangular solid or a cube corresponding to the medicine box MB is formed based on the size of the medicine box MB registered in Step 2-1, and the package image acquired through the photography is displayed at a position corresponding to the surface subjected to the photography.

When the acquisition of the package image is completed for one surface of the medicine box MB in Step 2-5, the control flow proceeds to Step 2-5, and whether or not to continue the acquisition of the package image is confirmed. Specifically, when another surface of the medicine box MB is designated as a surface of the package image to be acquired in the display image registration interface or when the change of the previously acquired package image is designated, the control flow returns to Step 2-2, and the package image is acquired continuously. When the acquisition of the image is not designated in Step 2-5, specifically, when the registration button displayed on the display image registration interface is selected, on the other hand, the control flow proceeds to Step 2-6, and the package image of the medicine box MB is registered in the medicine box information database 302. Accordingly, the construction of the medicine box information database 302 is finished.

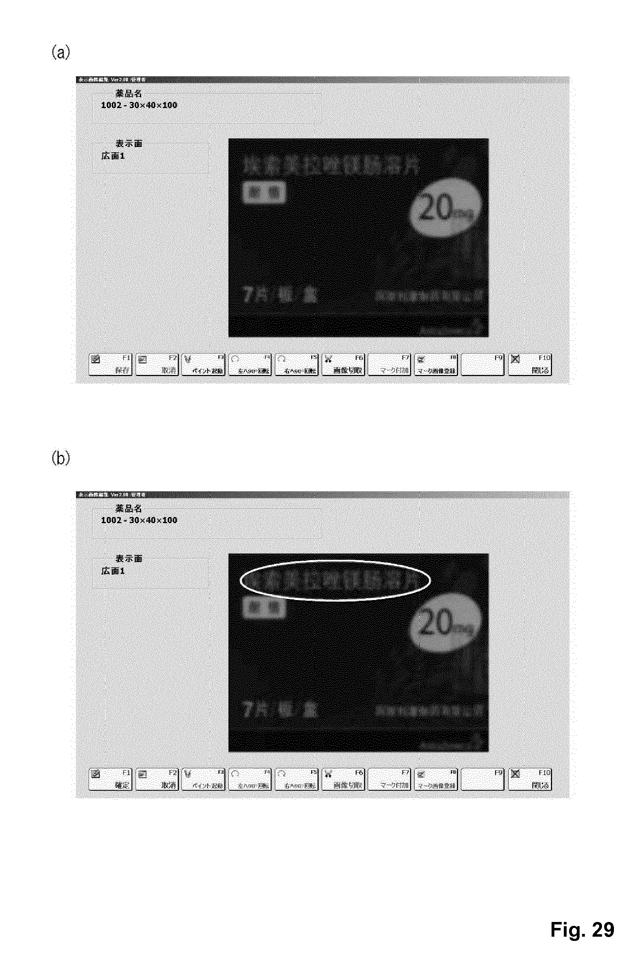

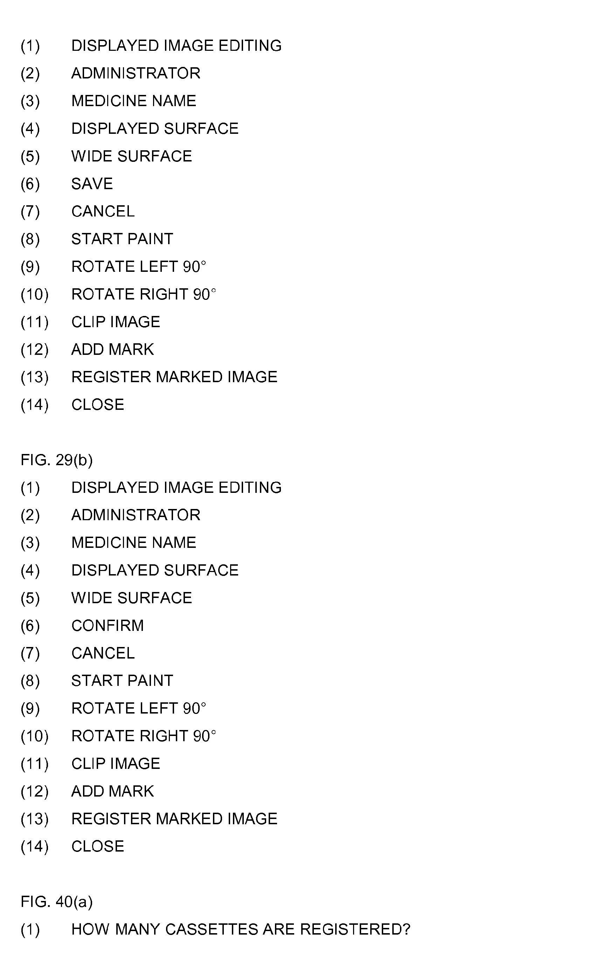

Although the description is omitted in the above-mentioned control flow, an identification indicator may be assigned to the package image of the medicine box MB during the above-mentioned control flow. Specifically, an edit button provided on the display image registration interface illustrated in FIGS. 27 is selected, and then a display image edit interface as illustrated in FIG. 29(a) is displayed. In this state, the package image to be edited is displayed, and an indicator having an arbitrary size and shape can be assigned at an arbitrary position by the above-mentioned indicator assigning means 294. When the identification indicator is assigned, the identification indicator is displayed in a state of being combined with the package image as illustrated in FIG. 29(b). After the identification indicator is assigned, a save button on the display image edit interface is selected, and then the package image is saved in a state of being assigned with the identification indicator.

According to the above-mentioned medicine box identifying apparatus 250, even for the medicine box MB having no identification indicator such as a barcode, the type of the medicine box MB can be identified by arranging, on the photographing stage 264, the medicine box MB prepared for the replenishment in the replenishing apparatus 70 or the like. Further, the types of the medicine box MB are narrowed down from the viewpoint of the size (size-based narrowing step) based on the shadow region in the image B obtained by photographing the medicine box MB, and then the candidates are further narrowed down through the matching of the color information (color-based narrowing step). Therefore, the type of the medicine box MB can be identified highly smoothly. Thus, with the above-mentioned medicine box identifying apparatus 250, the period of time required from the photography with the camera 266 until the narrowing of the types of the medicine box MB can be shortened significantly, and the load on the medicine box identifying means 290 can be minimized as well.

Note that, in the above-mentioned example, the image showing the medicine box MB as a shadow image (image B) is acquired in addition to the image acquired so that the medicine box MB can be distinguished (image A), and therefore the candidates are narrowed down from the viewpoint of the size in addition to the color, but the present invention is not limited thereto. Specifically, instead of narrowing down the candidates through use of the shadow image, the candidates for the medicine box MB may be narrowed down based on the size of the medicine box MB obtained through manual input of the operator or through use of another measurement apparatus. Alternatively, instead of providing the step of narrowing down the candidates from the viewpoint of the size, the type of the medicine box MB may be identified based on the color information or the like.

The medicine box identifying apparatus 250 recognizes the region of the shadow of the medicine box MB contained in the image B, and clips the region corresponding to the above-mentioned region of the shadow out of the image A, thereby being capable of acquiring the package image of the medicine box MB. Therefore, the labor and time required to acquire the package image of the medicine box MB can be reduced significantly. Further, with the above-mentioned configuration, the package image of the medicine box MB to be prepared in the replenishing apparatus 70 can be prevented from being displayed, and hence erroneous loading due to the misidentification of the medicine box MB can be suppressed. Still further, for the medicine box MB of the type assigned with an indicator by the indicator assigning means 294, the operator's attention can be promoted by the indicator so as to prevent the misidentification.

The photographing apparatus 260 is calibrated through use of the calibration member 286, and thus the unevenness of the image occurring due to the unevenness of illumination of the camera-side illumination apparatus 268 or the like can be eliminated. Further, in the photographing apparatus 260, the color and the illuminance can be corrected with reference to the images of the color calibration member 280 and the light transmissive hole 282 shown in the image obtained through photography. Thus, in the medicine box identifying apparatus 250, the accuracy of identification of the type of the medicine box MB does not easily decrease due to the unevenness of the image. Note that, in this modification example, the calibration member 286, the color calibration member 280, and the light transmissive hole 282 are provided, but the photographing apparatus 260 may omit any one or all of those components.

In the example of this embodiment, the brightness adjusting means 267 is capable of varying the brightness of the camera-side region 262b and the brightness of the box arrangement region 262d by turning ON and OFF the camera-side illumination apparatus 268 and the box arrangement region side 262d, but the present invention is not limited thereto. Specifically, the brightness adjusting means 267 may be capable of varying the brightness of the camera-side region 262b and the brightness of the box arrangement region 262d by varying the illuminances or the like of the camera-side illumination apparatus 268 and the box arrangement region 262d even when both the camera-side illumination apparatus 268 and the box arrangement region 262d are set in the ON state. Note that, in the case of the configuration for varying the brightness of the camera-side region 262b and the brightness of the box arrangement region 262d while setting both the camera-side illumination apparatus 268 and the box arrangement region side 262d in the ON state, it is desired that the brightness be adjusted appropriately so as to appropriately perform the acquisition of the package image of the medicine box MB and the type identification.

### «Modification example of loading apparatus 30»

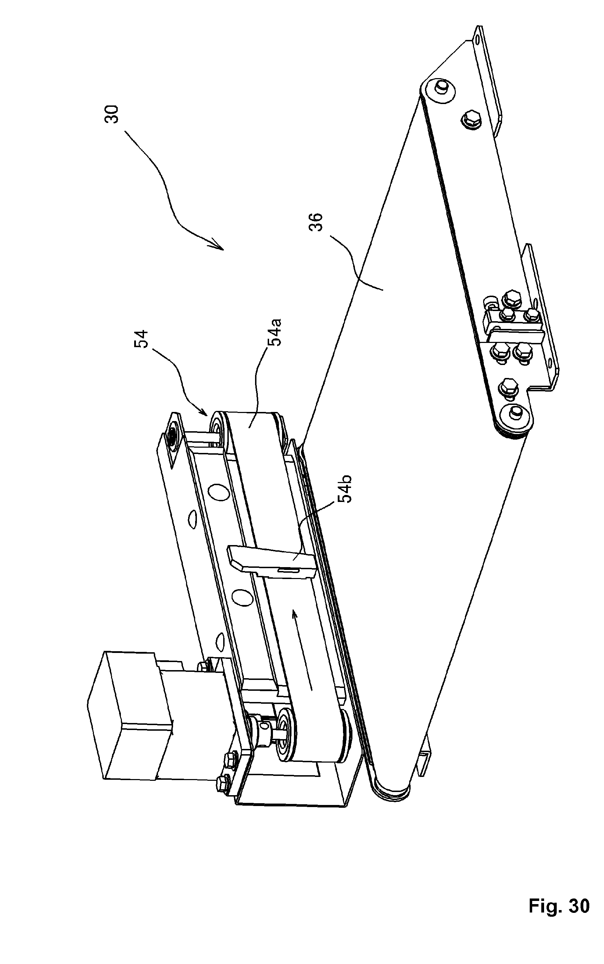

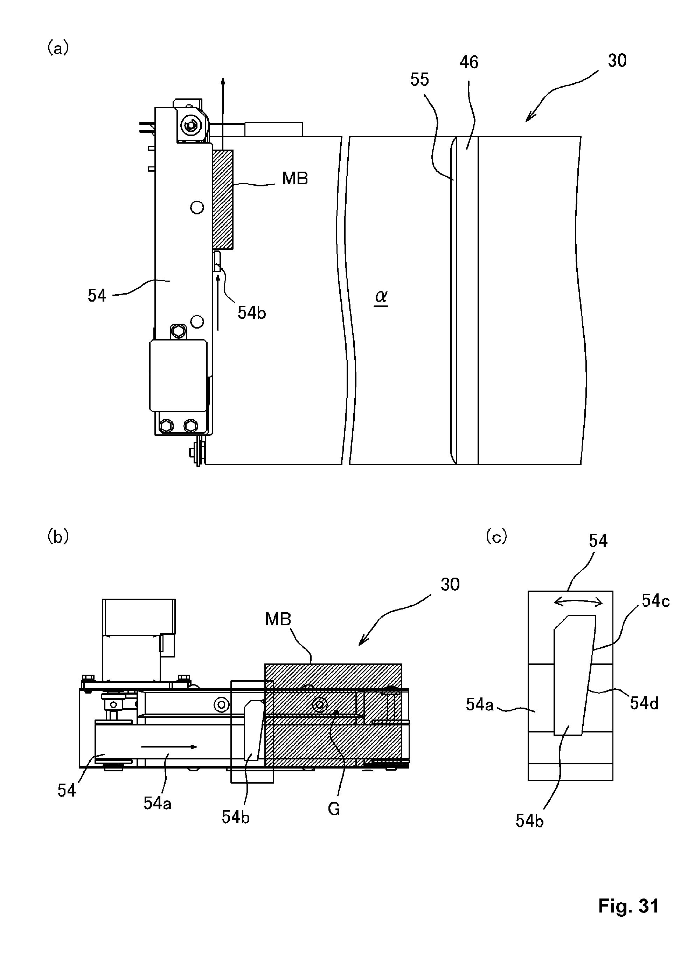

As described above, the loading apparatus 30 is configured to load each of the medicine boxes MB into the medicine box path 22 by pushing the medicine box MB with the abutment piece 54b, which is mounted on the conveying surface 54a of the endless belt 54 and is brought into abutment on the surface of the medicine box MB on the rear end side (on the upstream side in the direction of loading the medicine box MB into the medicine box path 22). In the case of this configuration, when the abutment piece 54b is brought into abutment at a position lower than a position of a gravity center G of the medicine box MB, a part of the medicine box MB on the distal end side (on the downstream side in the direction of loading the medicine box MB into the medicine box path 22) comes into a lifted state, and trouble may occur in the loading of the medicine box MB. Therefore, when such a phenomenon is expected, it is preferred that, as illustrated in FIGS. 30, 31, and other figures, the size and installation position of the abutment piece 54b be adjusted so that the abutment piece 54b reaches a position higher than the position of the gravity center G of the medicine box MB.

Further, when a similar phenomenon and trouble may be caused by inclination of the abutment piece 54b in its fore-and-aft direction due to influence such as fluctuation at the time of assembly and action of an external force, it is preferred that the abutment piece 54b be shaped as illustrated in FIG. 31(c). Specifically, it is preferred that an inclined portion 54d be provided on a surface of the abutment piece 54b which is brought into abutment on the medicine box MB (abutment surface 54c). The inclined portion 54d is inclined from the downstream side to the upstream side in the direction of loading the medicine box MB into the medicine box path 22 in a region toward a lower end of the abutment piece 54b.

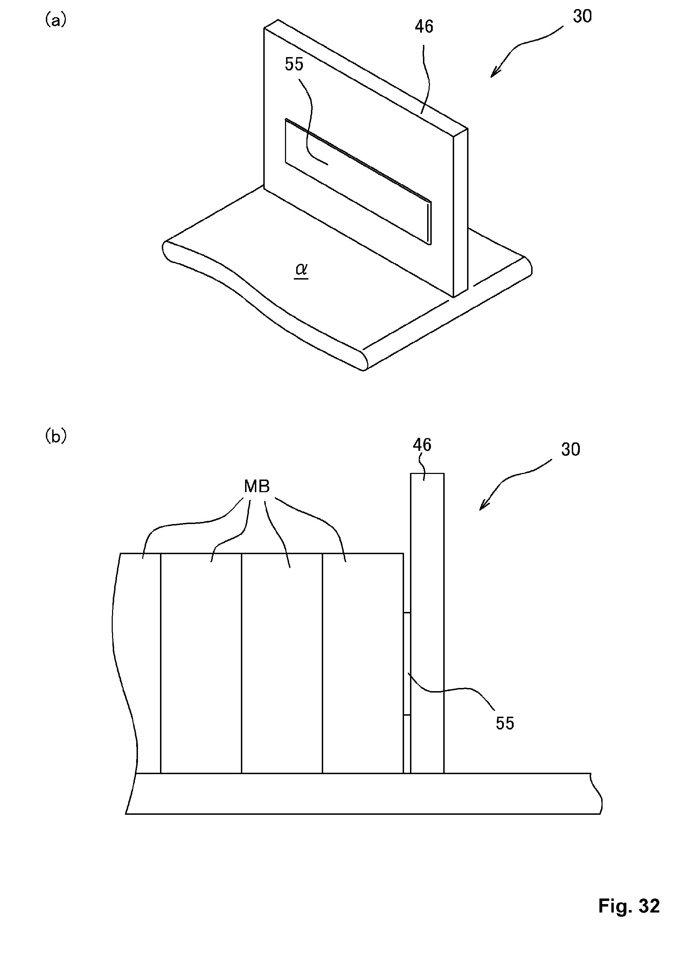

Further, as illustrated in FIGS. 31(a) and 32(a), the loading apparatus 30 may include a guide 55 provided on the loading region width adjusting member 46 serving as a wall surface opposed to the endless belt 54. The guide 55 is provided so as to slightly bulge toward the loading-object medicine box placing region α at a position (height) similar to that of the abutment piece 54b, and thus the gravity center portion of the medicine box MB is brought into a state of being lightly pressed by the guide 55 when pushing the medicine box MB with the abutment piece 54b. Accordingly, it is possible to prevent such a situation that the part of the medicine box MB on the distal end side (on the downstream side in the direction of loading the medicine box MB into the medicine box path 22) comes into the lifted state. Further, as illustrated in FIG. 32(b), gaps are formed above and below the guide 55 at a position between the loading region width adjusting member 46 and the medicine box MB located at a position adjacent to the guide 55. Accordingly, it is possible to avoid such a situation that the part of the medicine box MB on the distal end side (on the downstream side in the direction of loading the medicine box MB into the medicine box path 22) comes into the lifted state due to the abutment of the abutment piece 54b.

### «Modification example of replenishing apparatus 70»

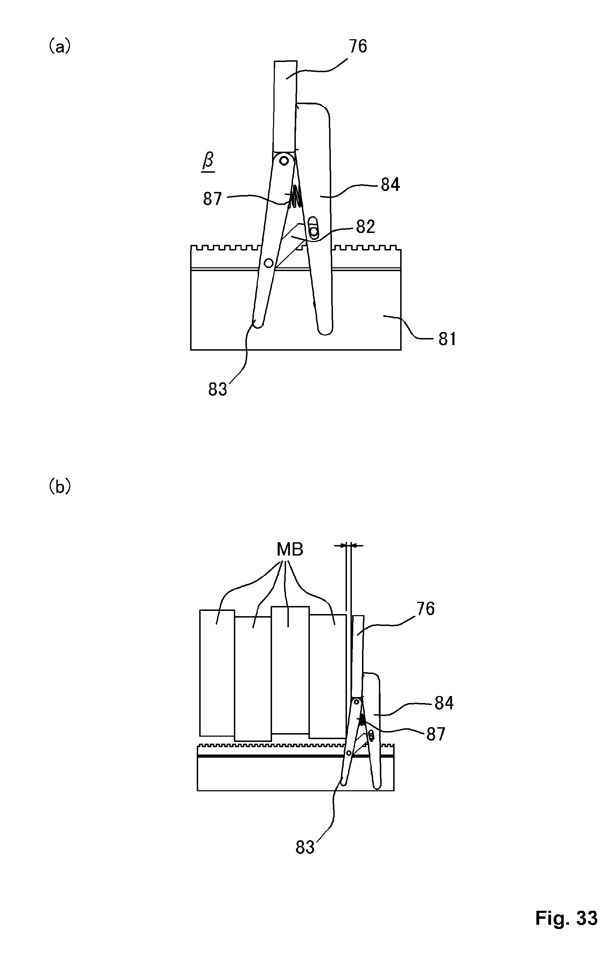

In order to prevent such a situation that the replenishing region width adjusting member 76 is excessively pressed against the medicine box MB and therefore the medicine box MB is, for example, distorted so that the medicine box MB cannot smoothly be transferred to the loading apparatus 30, the above-mentioned replenishing apparatus 70 may have another structure to solve a similar problem. Specifically, as illustrated in FIGS. 33, the unfixing piece 83 for unfixing the replenishing region width adjusting member 76 may be biased by the spring 87, and under a state in which the replenishing region width adjusting member 76 is fixed, the unfixing piece 83 may protrude toward the replenishing-object medicine box placing region β with respect to the plate member serving as the replenishing region width adjusting member 76.

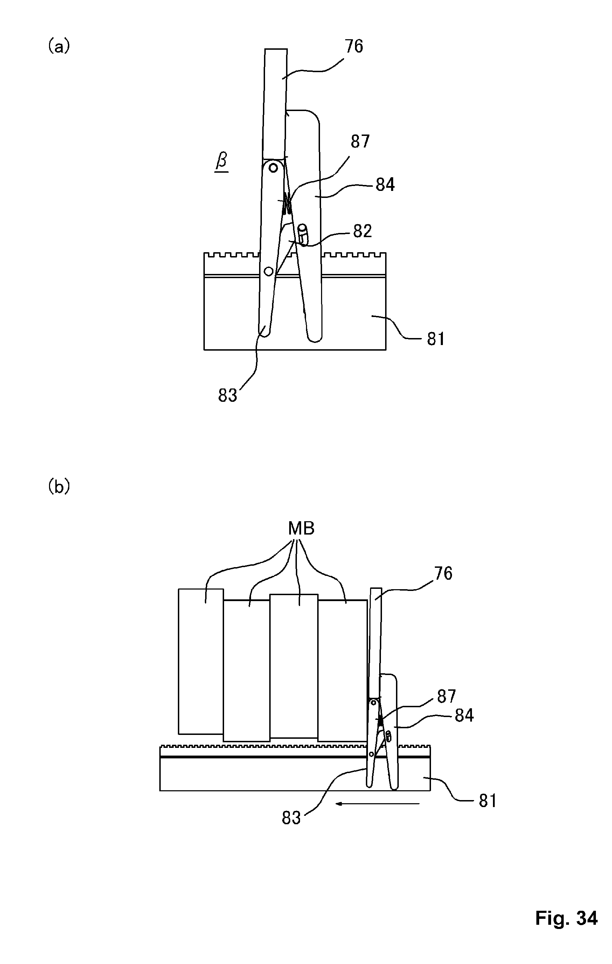

In the case of the above-mentioned structure, when the unfixing piece 83 is pressed to a position on an extension line of the replenishing region width adjusting member 76 as illustrated in FIG. 34(a), the replenishing region width adjusting member 76 is brought into the unfixed state. When the unfixing piece 83 is released after the replenishing region width adjusting member 76 is moved toward the medicine box MB so as to come into surface contact with the medicine box MB placed in the replenishing-object medicine box placing region β as illustrated in FIG. 34(b), the unfixing piece 83 returns to a state of protruding toward the medicine box placing region β due to the biasing force of the spring 87 as illustrated in FIGS. 33. At this time, as illustrated in FIG. 33(b), the unfixing piece 83 abuts on the medicine box MB which is located at a position closest to the replenishing region width adjusting member 76 on the medicine box placing region β side. Along with this, the replenishing region width adjusting member 76 moves in a direction in which the positioning means 80 is spaced away from the medicine box MB due to the biasing force of the spring 87, that is, in a direction in which the medicine box placing region β is enlarged, and after that, the replenishing region width adjusting member 76 is brought into the fixed state. Accordingly, a gap is securely formed between the replenishing region width adjusting member 76 and the medicine box MB. Thus, the medicine boxes MB can smoothly be transferred from the replenishing apparatus 70 toward the loading apparatus 30 by biasing the unfixing piece 83 with biasing means such as the spring 87 so as to protrude toward the replenishing-object medicine box placing region β with respect to the replenishing region width adjusting member 76.

In order to reliably prevent such a situation that the replenishing region width adjusting member 76 is excessively pressed against the medicine box MB, it is preferred that the replenishing apparatus 70 have a structure in which the above-mentioned movable piece 90 (see FIGS. 7 and 8) is provided, and further, the unfixing piece 83 is biased so as to protrude toward the replenishing-object medicine box placing region β. However, the present invention is not limited thereto, and the replenishing apparatus 70 may have only one of the structure in which the movable piece 90 is provided and the structure in which the unfixing piece 83 protrudes toward the replenishing-object medicine box placing region β.

### «Modification example of medicine box paths 22»

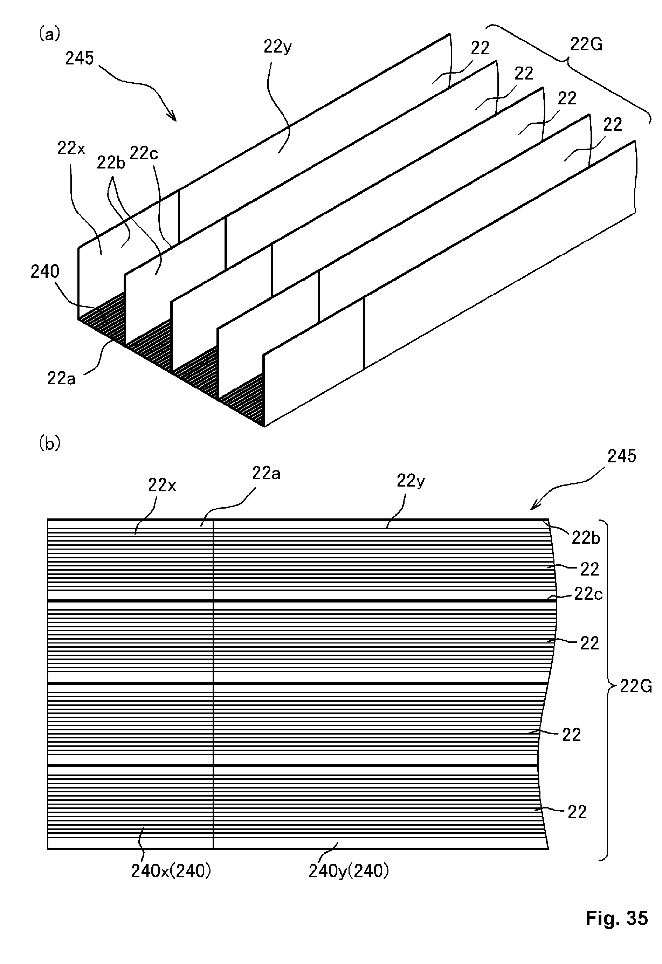

Each of the above-mentioned medicine box paths 22 may be formed integrally over the entire length, but as illustrated in FIGS. 35, a member that forms a portion corresponding to the inlet 22d (hereinafter referred to also as "inlet forming portion 22x") may be manufactured as a member separate from the other portion (hereinafter referred to also as "path forming portion 22y"). Accordingly, even when the loading rack 32 or any one of the medicine boxes MB which are being conveyed by the loading rack 32 collides with the inlet 22d of the medicine box path 22 and therefore the inlet 22d is, for example, deformed or chipped, the inlet forming portion 22x that forms the portion corresponding to the inlet 22d only needs to be replaced.

Further, the bottom surface and the side surfaces of the medicine box path 22 may be formed as smooth surfaces, but for example, projections and depressions extending in a straight line shape from the inlet 22d side to the outlet 22e side may be formed in a bottom surface 22a and side surfaces 22b and 22c. Accordingly, a contact area and frictional resistance between the medicine box and the medicine box path 22 can be minimized, and thus the medicine box can be dropped smoothly from the inlet 22d side to the outlet 22e side of the medicine box path 22. Further, as illustrated in FIGS. 35, a member having projections and depressions extending in a straight line shape which are formed in a surface thereof (hereinafter referred to also as "slide promoting member" 240) may be prepared separately, and the slide promoting member 240 may be fixed to any one of the bottom surface 22a and the side surfaces 22b and 22c of the medicine box path 22 (surfaces oriented to the medicine box side).

It is preferred that the above-mentioned slide promoting member 240 be made of a material different from steel of the medicine box path 22. Specifically, a material having a dynamic friction coefficient smaller than steel may be employed as the material for the slide promoting member 240. More specifically, polyethylene or the like impregnated with a silicone resin may be employed suitably as the material for the slide promoting member 240. As described above, when a material having a small dynamic friction coefficient is employed as the material for the slide promoting member 240, the dropping speed and the delivery speed of the medicine box in the medicine box path 22 can further be increased, and thus the efficiency of the entire delivery task for the medicine boxes can further be enhanced.

When the medicine box path 22 is formed of the combination of the inlet forming portion 22x and the path forming portion 22y as described above, assuming the replacement of the inlet forming portion 22x and the like, it is desired that a slide promoting member 240 to be mounted on the bottom surface 22a of the inlet forming portion 22x (hereinafter referred to also as "inlet-side slide promoting member 240x") and a slide promoting member 240 to be mounted on the bottom surface 22a of the path forming portion 22y (hereinafter referred to also as "path-side slide promoting member 240y") be formed as separate members.

When the slide promoting member 240 is formed as a member separate from the medicine box path 22 as described above, it is expected that a center portion of the slide promoting member 240 in its width direction is distorted into a curved state like a bump. Further, when the inlet-side slide promoting member 240x and the path-side slide promoting member 240y are formed as separate members, the lengths of the inlet-side slide promoting member 240x and the path-side slide promoting member 240y are different from each other, and hence it is expected that amounts of distortion occurring in the inlet-side slide promoting member 240x and the path-side slide promoting member 240y are also different from each other. When the amounts of distortion of the inlet-side slide promoting member 240x and the path-side slide promoting member 240y are different from each other, a step is formed in a boundary portion between the inlet-side slide promoting member 240x and the path-side slide promoting member 240y, and hence a risk of such a problem that the medicine box MB is caught on the step cannot be eliminated completely. Further, depending on a temperature condition or the like, the slide promoting members 240 contract in their longitudinal direction, and a gap may be formed between the inlet-side slide promoting member 240x and the path-side slide promoting member 240y. When a gap is formed between the two promoting members 240x and 240y, the gap may hinder smooth passage of the medicine box MB.

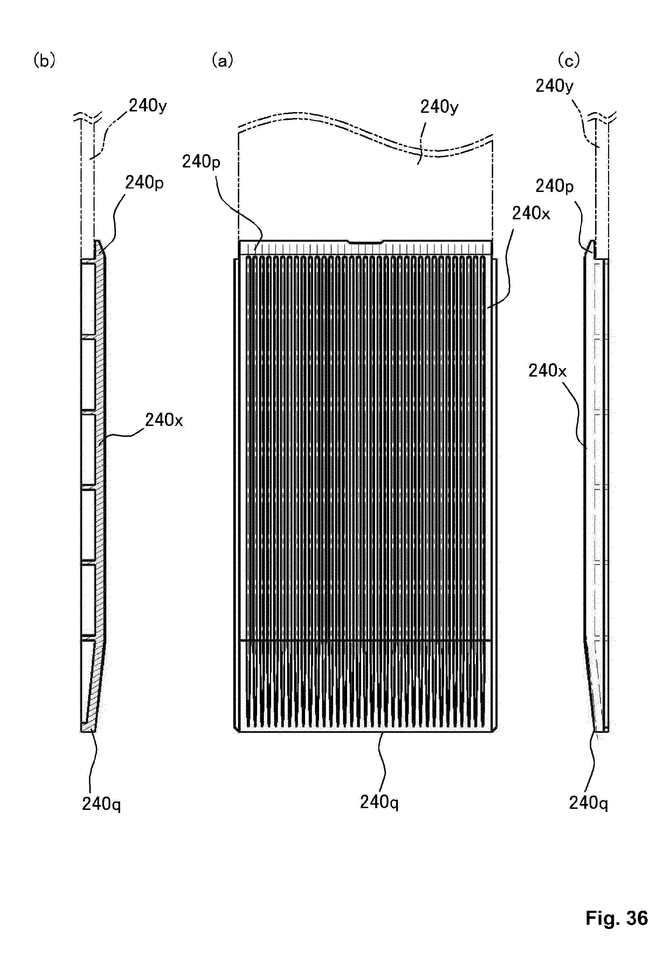

In order to eliminate the above-mentioned risk expected from the structure of the slide promoting members 240 including the inlet-side slide promoting member 240x and the path-side slide promoting member 240y, it is desired that the inlet-side slide promoting member 240x be formed as illustrated in FIGS. 36. Specifically, the inlet-side slide promoting member 240x illustrated in FIGS. 36 includes a boundary portion 240p oriented toward the boundary between the inlet-side slide promoting member 240x and the path-side slide promoting member 240y, and an inlet portion 240q oriented toward a terminal end of the inlet 22d of the medicine box path 22. As illustrated in FIGS. 36, the boundary portion 240p is formed into a step shape and is thinner on the back surface side of the inlet-side slide promoting member 240x than the other portion. At the boundary portion 240p, the inlet-side slide promoting member 240x is thinner by an amount corresponding to the thickness of the path-side slide promoting member 240y. The part of the boundary portion 240p on which the step is formed has a length equal to or larger than an amount of contraction expected in the inlet-side slide promoting member 240x and the path-side slide promoting member 240y. Further, the inlet portion 240q of the inlet-side slide promoting member 240x is gently inclined from an end portion toward a center portion in the longitudinal direction, and is formed continuous with the center portion in the longitudinal direction.

When the inlet-side slide promoting member 240x is formed as described above, the inlet-side slide promoting member 240x is mounted so that the boundary portion 240p overlaps with an upstream end of the path-side slide promoting member 240y (end portion on the inlet 22d side). When the inlet-side slide promoting member 240x and the path-side slide promoting member 240y are mounted in this manner, the formation of the step or the like along with the distortion and contraction of the slide promoting members 240 can be prevented. Accordingly, when the slide promoting members 240 are mounted, it is possible to prevent such a situation that the medicine box MB is caught on the boundary portion between the inlet-side slide promoting member 240x and the path-side slide promoting member 240y.

### «Modification example of discharge regulating means 26»

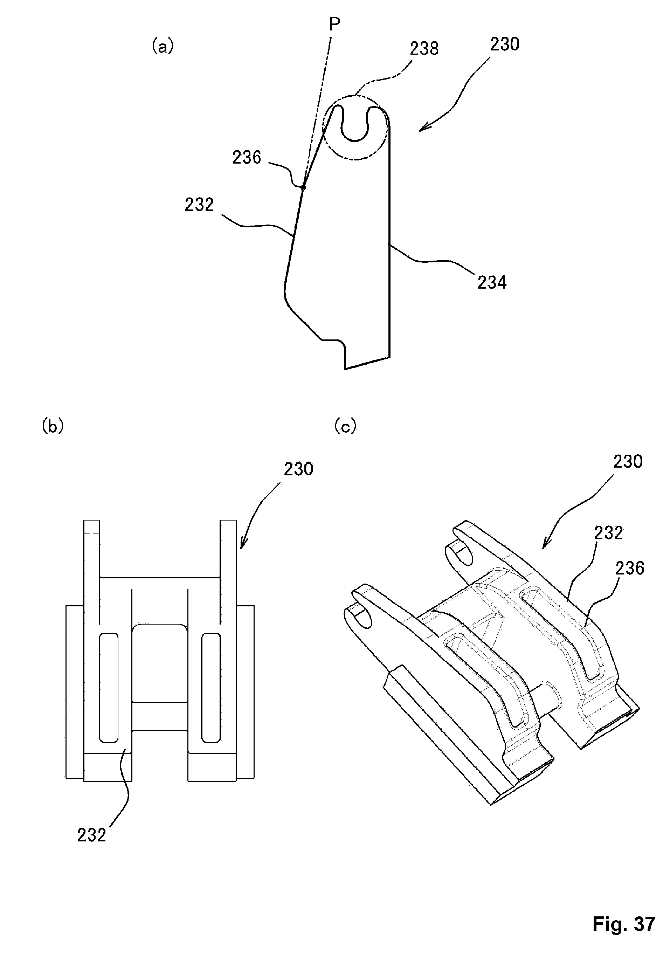

As described above, the discharge regulating means 26 includes the push-up piece 26b, the receiving piece 26c, the coupling piece 26d, and the power source 26e that are provided to the main body portion 26a, but the shapes, structures, and the like of the respective components may be changed appropriately without departing from the spirit of the present invention. Specifically, as illustrated in FIGS. 3, in the receiving piece 26c employed in the above-mentioned discharge regulating means 26, a roller 26g is mounted at a distal end portion of the piece-like member having a substantially flat exterior shape. Therefore, in a delivery standby state of the medicine box MB, the roller 26g is held in contact with the medicine box MB which is located at the head of the medicine box path 22. That is, in the above-mentioned discharge regulating means 26, the receiving piece 26c is formed so that the roller 26g is located at a position beyond extension lines of the surfaces of the receiving piece 26c. In the discharge regulating means 26, a receiving piece 230 having a shape as illustrated in FIGS. 37 may be employed instead of the receiving piece 26c having the above-mentioned structure.

Specifically, as illustrated in FIGS. 37, the receiving piece 230 is formed into a tapered shape. The receiving piece 230 includes a front portion 232 serving as a surface oriented toward a front surface of the medicine box MB in its conveying direction, which is under the delivery standby state in the medicine box path 22, and a back portion 234 serving as a surface opposite to the front portion 232. In side view, the back portion 234 of the receiving piece 230 is formed into a substantially flat shape, and the front portion 232 of the receiving piece 230 is formed into a shape in which the front portion 232 is inclined or curved to approach the back portion 234 in a region toward a distal end of the receiving piece 230.

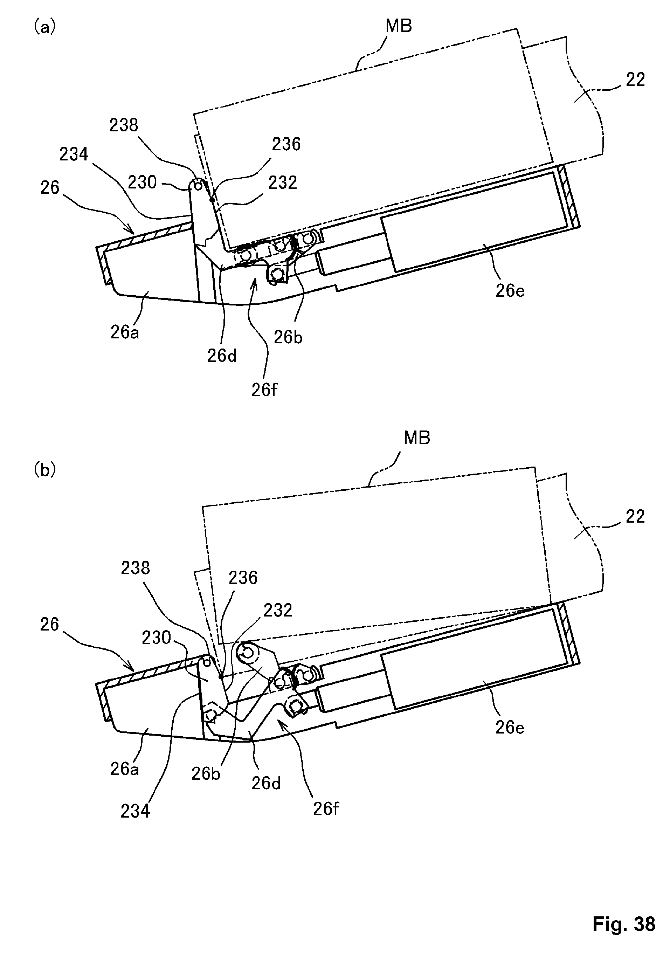

Further, the inclination or curvature of the front portion 232 changes at a middle portion in a direction from the proximal end side to the distal end side of the receiving piece 230 (hereinafter referred to also as "vertical direction"), more specifically, at a position away from the center portion of the receiving piece 230 in the vertical direction toward the distal end side thereof (hereinafter referred to also as "inflection portion 236"). That is, the front portion 232 is inclined or curved so that, with the inflection portion 236 as a boundary, the portion on the distal end side is further inclined toward the back portion 234 than the portion on the proximal end side. Further, assuming an imaginary plane P, which is held in surface contact with the portion on the proximal end side with respect to the inflection portion 236 in the side view of the receiving piece 230, a roller 238 mounted at the distal end of the receiving piece 230 is located within a region on the back portion 234 side with respect to the imaginary plane P. Therefore, as illustrated in FIG. 38(a), when the receiving piece 230 is employed for the discharge regulating means 26, the front surface of the medicine box MB in its conveying direction, which is under the delivery standby state, is brought into surface contact with the portion on the proximal end side of the front portion 232 with the inflection portion 236 as a boundary. On the other hand, the roller 238 and the portion on the distal end side of the receiving piece 230 with respect to the inflection portion 236 are spaced away from the side surface of the medicine box MB. Thus, when the above-mentioned receiving piece 230 is used for the discharge regulating means 26, the roller 238 is not brought into direct contact with the front surface of the medicine box MB in its conveying direction, which is moved down along the medicine box path 22, and the front surface of the medicine box MB is brought into surface contact with the portion on the proximal end side with respect to the inflection portion 236. Accordingly, it is possible to prevent the deformation of the medicine box MB due to an impact of collision with the roller 238 or the like. Further, there is no secondary failure along with the deformation of the medicine box MB, specifically, there is no such failure that the roller 238 is caught on the deformed portion and therefore the receiving piece 230 cannot be lowered at the time of the delivery operation for the medicine box MB.

Further, when the above-mentioned receiving piece 230 is employed for the discharge regulating means 26, the medicine box MB can be delivered reliably and smoothly. That is, when the receiving piece 230 is employed, a gap is formed between the portion on the distal end side of the front portion 232 with respect to the inflection portion 236 and the front surface of the medicine box MB in its conveying direction. In this state, when the medicine box MB is pushed up by the push-up piece 26b and the receiving piece 230 is lowered, as illustrated in FIG. 38(b), the bottom surface of the medicine box MB comes into a state of being lifted up to the height of the roller 238. Also during the lift of the medicine box MB, the roller 238 is not brought into contact with the front surface of the medicine box MB in its conveying direction. Under a state in which the medicine box MB is lifted and the receiving piece 230 is retreated, the roller provided at the distal end of the push-up piece 26b and the roller 238 provided at the distal end of the receiving piece 230 are brought into contact with the bottom surface of the medicine box MB, and the medicine box MB is delivered.

### «Bounce suppressing means 220»

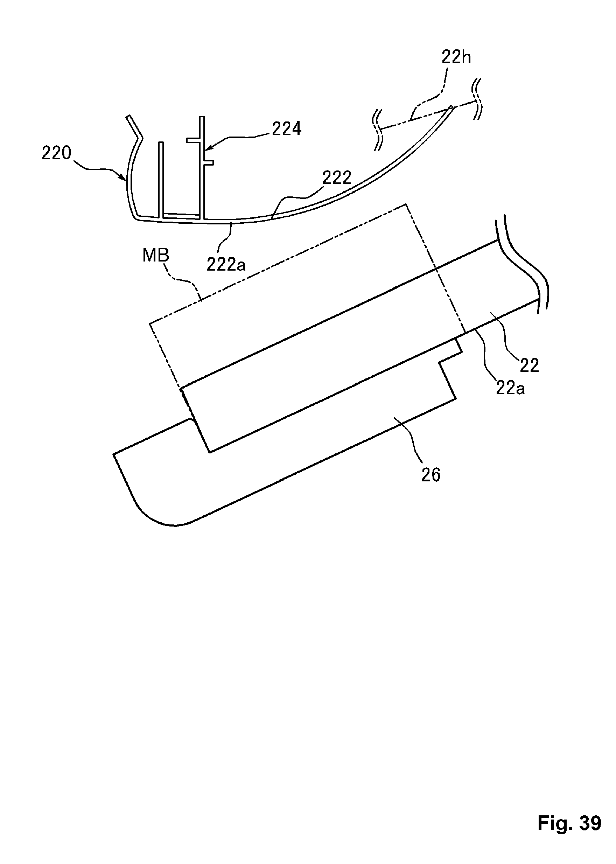

When the medicine box MB is delivered by the discharge regulating means 26 as described above, the medicine box MB is pushed up and bounced from the bottom side. At this time, from the factors such as a relationship between the height of the medicine box path 22 and the height of the medicine box MB and the degree of bounce of the medicine box MB, there may occur such a phenomenon that the medicine box MB is pushed back to the upstream side of the medicine box path 22. In order to suppress such a phenomenon, it is desired that, for example, bounce regulating means 220 illustrated in FIG. 39 can be mounted on a top surface 22 side of the medicine box path 22.

The bounce regulating means 220 may have any shape, but is preferred to have a shape in consideration of such an effect that the medicine box MB passing along the medicine box path 22 is not caught thereon. Specifically, the bounce regulating means 220 illustrated in FIG. 39 includes a bounce suppressing plate 222, and a support portion 224 for supporting the bounce suppressing plate 222. The bounce suppressing plate 222 is a plate member having a curved surface 222a that is gently curved from one end side to the other end side in a longitudinal direction thereof.

The bounce regulating means 220 integrally includes the support portion 224 on one end side of the bounce suppressing plate 222 in the longitudinal direction, and the support portion 224 is mounted to another member so that the bounce suppressing plate 222 can be supported in a cantilever manner. The support portion 224 is mounted on the top surface side of the medicine box path 22 for which the bounce regulating means 220 is provided (bottom surface side of an upper medicine box path 22) so that the curved surface 222a is oriented toward the medicine box path 22 and the bounce suppressing plate 222 is brought into a suspended state. The curved surface 222a has such a shape that a portion on an opposite side (free end side) to the support portion 24 side is further arched up to the support portion 224 side (in the upward direction) as compared to a portion on the support portion 24 side. The bounce regulating means 220 is mounted in such a posture that, under a state in which the medicine box path 22 is seen from the outlet 22e side, the portion on the support portion 224 side of the bounce regulating means 220 is oriented to the front side (outlet 22e side) and the portion on the free end side of the bounce regulating means 220 is oriented to the rear side (inlet 22d side). Accordingly, a distance enough to allow the passage of the medicine box MB is secured between the curved surface 222a and the bottom surface 22a of the medicine box path 22.

When the bounce regulating means 220 is installed on the outlet 22e side of the medicine box path 22, even if the medicine box MB is pushed up from the bottom side by the discharge regulating means 26, the medicine box MB is regulated by the bounce regulating means 220 and is not bounced excessively. Further, the length of the bounce suppressing plate 222 is set so that, under the state in which the bounce regulating means 220 is installed, a terminal portion of the bounce suppressing plate 222 abuts on the top surface of the medicine box path 22 without a gap. Therefore, the medicine box MB passing along the medicine box path 22 is not caught on the end portion of the bounce regulating means 220.

### «Method of adding or changing medicine box paths 22»

As described above, a large number of medicine box paths 22 may be installed in the accommodating and delivering apparatus 20 of the medicine box delivering apparatus 10. The medicine box paths 22 may be added or changed independently of each other, and the medicine box path group 22G including a plurality of medicine box paths 22 as a unit may be added or changed. Specifically, as illustrated in FIGS. 35, the medicine box path group 22G including a plurality of medicine box paths 22 as a unit (hereinafter referred to also as "medicine box rack 245") may be used in the medicine box delivering apparatus 10.

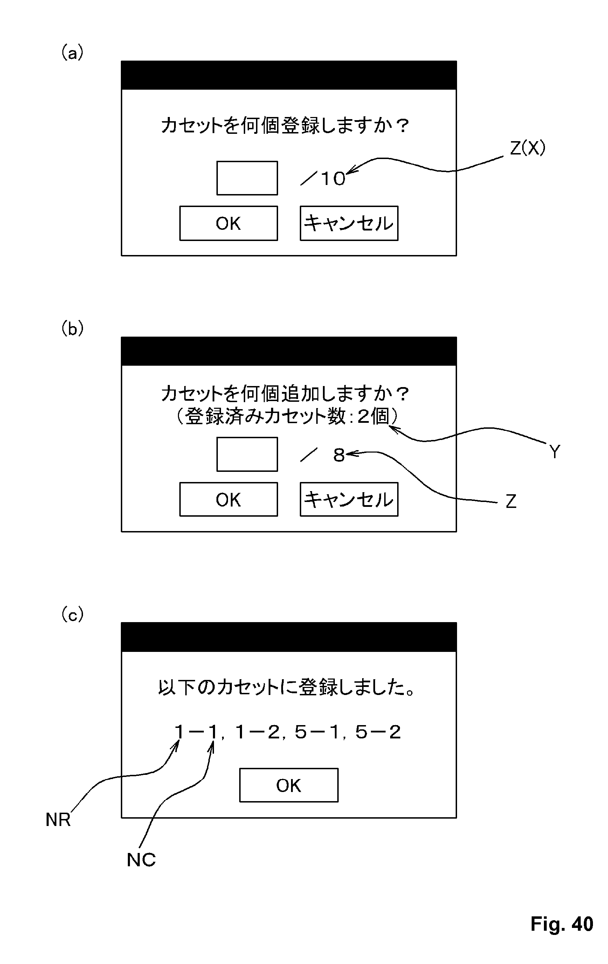

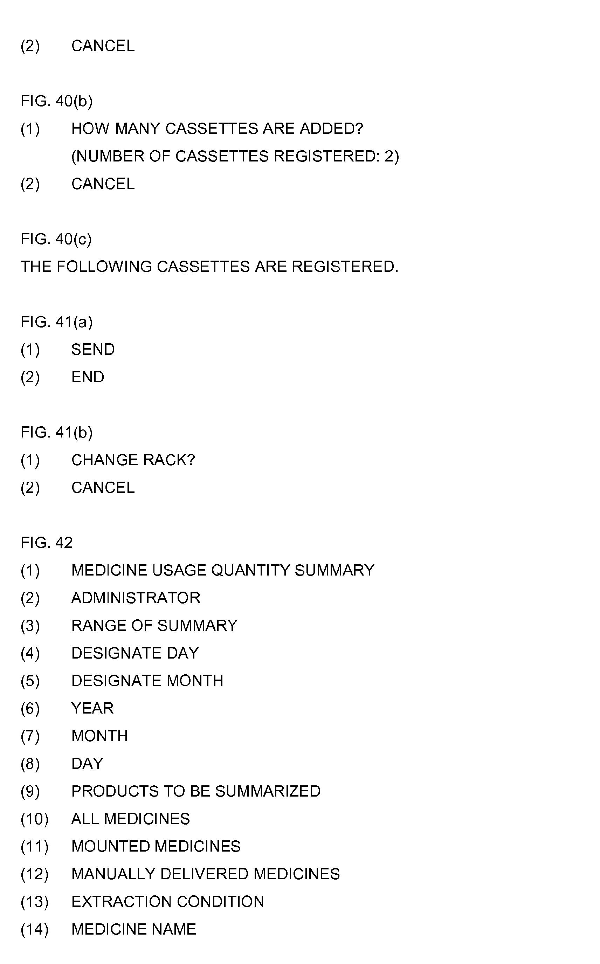

In a case of performing work of increasing and decreasing the quantity of the medicine box paths 22 to be prepared in the accommodating and delivering apparatus 20, it is desired that a control system capable of deriving, as an increasable and decreasable quantity Z, the quantity of the medicine box paths 22 which can be increased and decreased, and notifying the operator of the increasable and decreasable quantity Z be mounted to the control apparatus 100 or the like. Specifically, when an upper limit installation quantity X is defined as an upper limit value of the quantity of the medicine box paths 22 which can be allocated for the medicine boxes MB of a single type, and a registered quantity Y is defined as the quantity of the medicine box paths 22 which are already registered in the accommodating and delivering apparatus 20 for the medicine boxes MB of the same type as that of the medicine box paths 22 for which the quantity is to be increased and decreased, the increasable and decreasable quantity Z is derived by subtracting the registered quantity Y from the upper limit installation quantity X (Z=X-Y). At this time, it is desired that an interface as illustrated in FIG. 40(a) or 40(b) be displayed on the display that is used by the operator who performs the work of increasing and decreasing the quantity of the medicine box paths 22, to thereby notify the operator of the increasable and decreasable quantity Z and display one or both of the upper limit installation quantity X and the registered quantity Y as necessary.

Further, it is desired that empty medicine box paths 22 can be searched for in the accommodating and delivering apparatus 20 by inputting the quantity of the medicine box paths 22 to be newly added (registered) on the interface as illustrated in FIG. 40(a) or 40(b). Still further, it is desired that the empty medicine box paths 22 can newly be registered in an automatic or manual manner based on a search result. Still further, as illustrated in FIG. 40 (c), it is desired that the positions of the newly registered medicine box paths 22 can be displayed by a method of displaying addresses or the like.

Specifically, when a large number of medicine box paths 22 are installed in the accommodating and delivering apparatus 20 through the installation of the above-mentioned medicine box rack 245 in the accommodating and delivering apparatus 20, the positions of the newly registered medicine box paths 22 can be displayed as addresses by combining a rack number NR assigned to each medicine box rack 245 with a path number NC of the medicine box path 22 in each medicine box rack 245, for example, in the form of "NR-NC". Through the display as in the example illustrated in FIG. 40(c), the operator can recognize that medicine box paths 22 having a rack number of "1" and path numbers of "1" and "2" and medicine box paths 22 having a rack number of "5" and path numbers of "1" and "2" are newly registered.

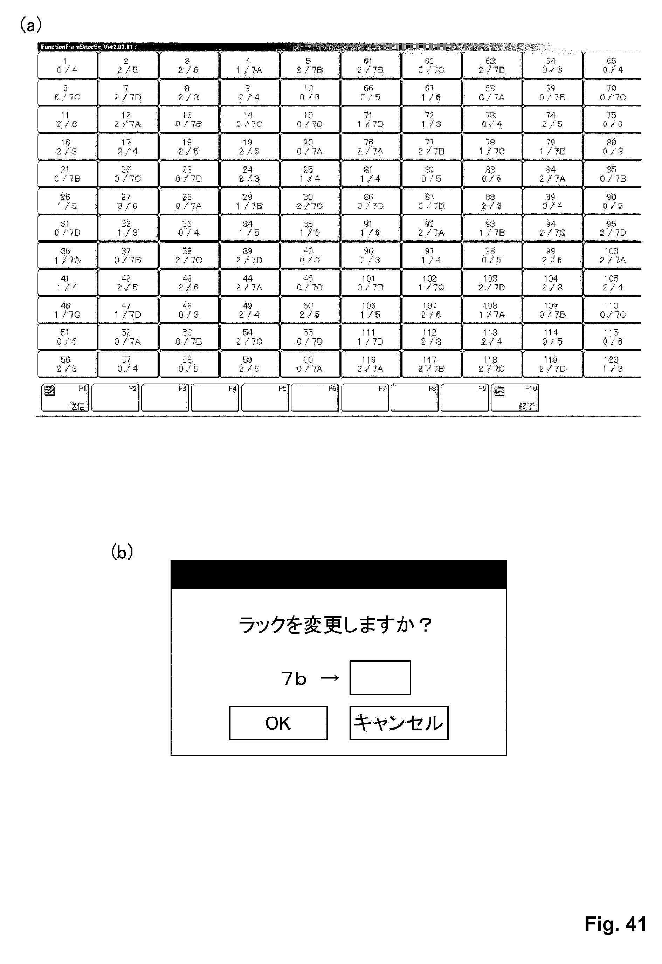

As illustrated in FIGS. 41, an interface for allowing the operator to view at a glance an installation status of each medicine box rack 245 that is installed in the accommodating and delivering apparatus 20, and a usage status (registration status) of the medicine box paths 22 in each medicine box rack 245 may be displayed on the display that is used by the operator. Further, when the statuses are displayed in the form of a matrix as illustrated in FIGS. 41 so as to correspond to the arrangement of each medicine box rack 245 in the accommodating and delivering apparatus 20, it is possible to intuitively grasp the usage status of the medicine box rack 245 by comparing the display with the accommodating and delivering apparatus 20.

Specifically, in the example illustrated in FIGS. 41, cells allocated to the respective medicine box racks 245 are displayed in different display forms depending on the usage statuses of the medicine box racks 245. Specifically, display colors of the cells corresponding to the medicine box racks 245 are changed depending on presence and absence of the medicine box paths 22 having the medicine boxes MB mounted thereon. Further, cells corresponding to a newly installed medicine box rack 245 may be displayed in a color different from those of the cells indicating the already installed medicine box racks 245.

Further, in the example illustrated in FIGS. 41, in the cells allocated to each medicine box rack 245, it is also possible to grasp at a glance, in addition to the rack number NR, information on the quantity of the medicine box paths 22 of each medicine box rack 245 (total path count Pa), the quantity of the medicine box paths having the medicine boxes MB mounted thereon (box-mounted path count Pb), and additional information on, for example, presence and absence of attachments such as spacers (additional information Pc). That is, in the example illustrated in FIGS. 41, in a field below the rack number NR, the total path count Pa, the box-mounted path count Pb, and the additional information Pc are displayed in a display form of "(Pb/Pa·Pc)". Further, in the additional information Pc of this embodiment, the types of attachments are defined by symbols (in the example of FIGS. 41, "A", "B", and "C"), and the additional information Pc is not displayed when no attachments are provided.

In the example illustrated in FIGS. 41, the information on each medicine box rack 245 is displayed in the form of a matrix, and the cells corresponding to each medicine box rack 245 function as operation buttons. Further, when any medicine box rack 245 is replaced, for example, the cells allocated to each medicine box rack 245 (operation buttons) are selected so that the total path count Pa and the additional information Pc of the newly installed medicine box rack 245 can be registered or changed (see FIG. 41(b)).

### «Method of confirming long-term remaining item»

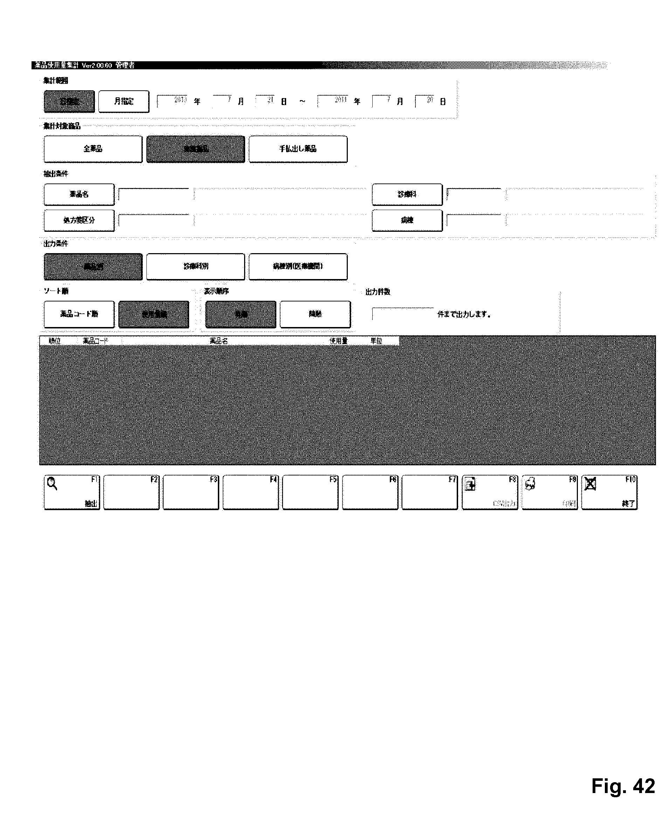

The above-mentioned medicine box delivering apparatus 10 includes a large number of medicine box paths 22 in the accommodating and delivering apparatus 20. From the viewpoint of achieving, for example, higher efficiency of the delivery task for the medicine boxes MB and effective use of the accommodating and delivering apparatus 20, it is preferred to confirm presence and absence of a medicine box MB remaining for a long period of time, and to take appropriate measures of, for example, changing the type of the medicine box MB to be handled as necessary. From the above-mentioned viewpoint, it is preferred that the medicine box delivering apparatus 10 include a control system including long-term remaining item detecting means capable of confirming presence and absence of a long-term remaining item by confirming a delivery history of the medicine boxes MB for each medicine box path 22 that forms the accommodating and delivering apparatus 20. Specifically, as illustrated in FIG. 42, it is desired to prepare an interface having a button for executing an operation of confirming the presence and absence of a long-term remaining item, to thereby enable listing when any long-term remaining item is present.

### «Method of displaying charging list»

As described above, when charging the medicine boxes MB in the medicine box delivering apparatus 10, the charging list as illustrated in FIGS. 22 is displayed. Further, as a method of identifying the medicine boxes MB to be charged when charging the medicine boxes MB, there is conceived, for example, a method of reading identification indicators such as barcodes assigned to the medicine boxes MB, as well as a method of executing image recognition through use of the above-mentioned medicine box identifying apparatus 250. When the medicine box identifying apparatus 250 is provided, the types of the medicine boxes MB can be identified irrespective of presence and absence of the barcodes, but the identification using the barcodes may sometimes be preferred from the viewpoint of the speed, the scheme, or the like. In this case, when the medicine boxes MB listed in the charging list can be sorted based on the presence and absence of the barcodes, it is expected that the work efficiency can further be enhanced.

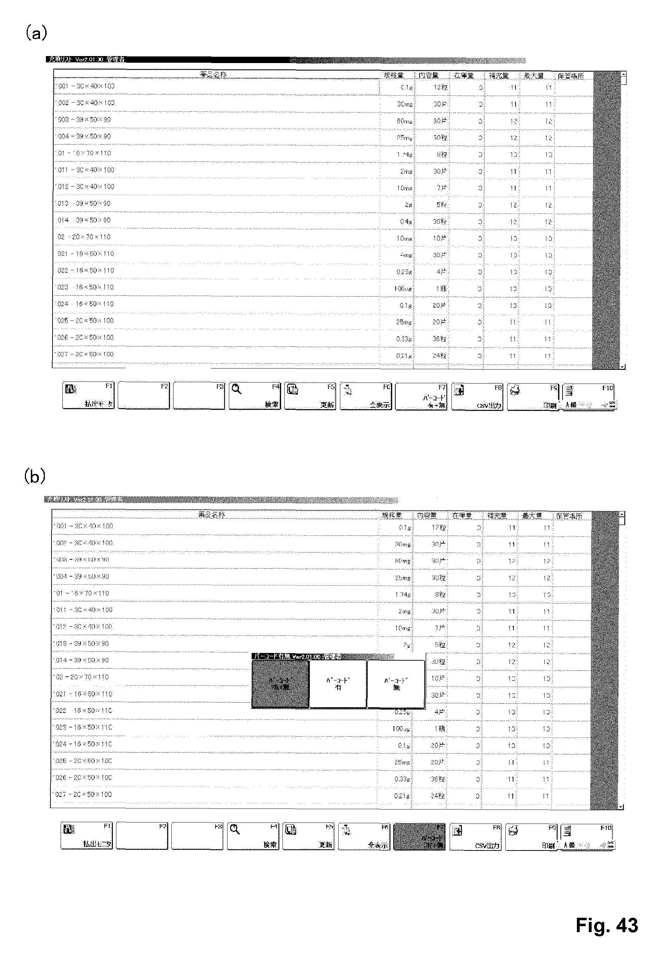

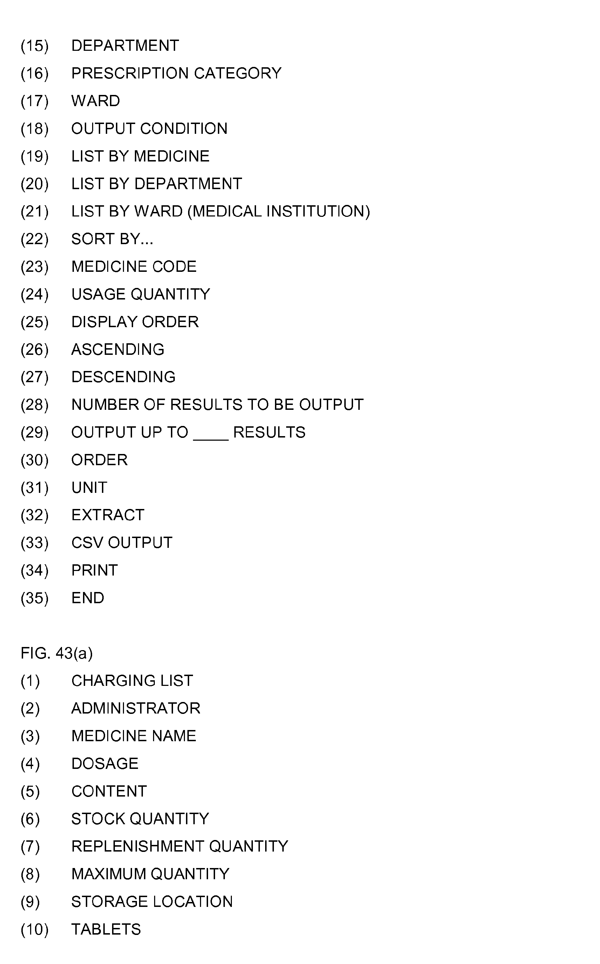

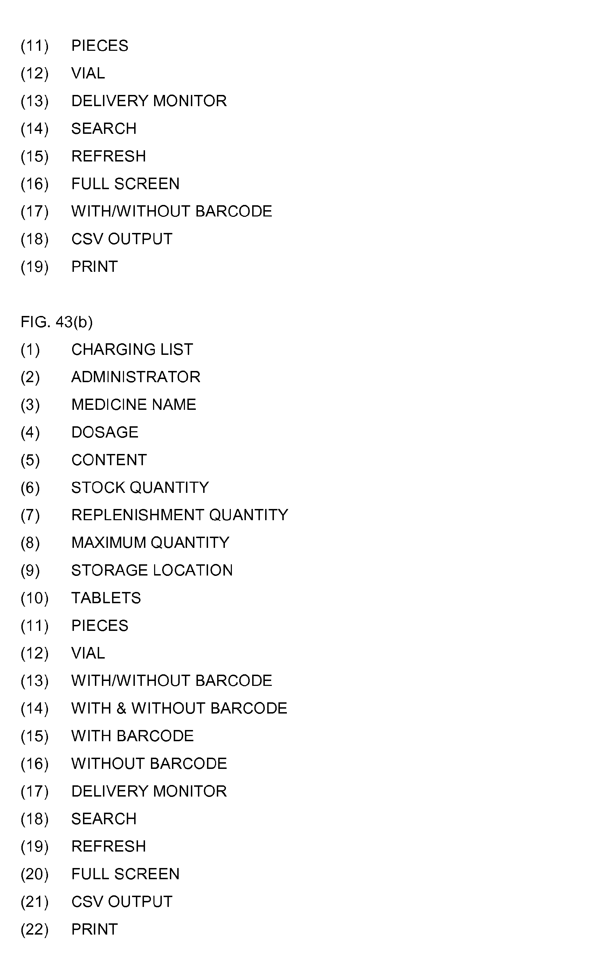

Based on such finding as described above, it is desired that the medicine box delivering apparatus 10 include, in the control apparatus 100, a control system capable of sorting or filtering the medicine boxes MB listed in the charging list based on the presence and absence of the barcodes. Specifically, as illustrated in FIG. 43(a), the interface of the charging list is provided with a button for executing a control program for sorting or filtering the medicine boxes MB based on the presence and absence of the barcodes. Thus, the sorting or filtering can be executed by an execution method which is selected on a menu displayed by clicking on this button (see FIG. 43 (b)).

The present invention is not limited to the embodiments, examples, or modification examples described above, and it is easily understood for those skilled in the art that other embodiments may be provided from the teaching and spirit of the present invention without departing from the scope of claims.

### Reference Signs List

- 10: medicine box delivering apparatus
- 20: accommodating and delivering apparatus
- 22: medicine box path
- 23: loading count detecting means
- 24: delivery count detecting means
- 30: loading apparatus
- 32: loading rack
- 36: loading-object medicine box placing portion
- 38: loading mechanism
- 40: position detecting means
- 42: push-out apparatus
- 44: conveying apparatus
- 46: loading region width adjusting member
- 54: endless belt
- 54a: conveying surface
- 54b: abutment piece (abutment portion)
- 55: spacer guide
- 70: replenishing apparatus
- 72: medicine box accommodating box
- 72c: side wall (opposing wall)
- 74: replenishing-object medicine box placing portion
- 75: belt conveyor (transfer mechanism)
- 76: replenishing region width adjusting member
- 78: shutter
- 80: positioning means
- 83: unfixing piece
- 87: spring (biasing means)
- 90: movable piece
- 100: control apparatus
- 200: stock management means
- 202: preparation count deriving means
- 204: loading control means
- 206: delivery control means
- 208: maximum placement count deriving means
- 210: replenishment control means
- 250: medicine box identifying apparatus
- 260: photographing apparatus
- 264: photographing stage
- 266: camera
- 268: camera-side illumination apparatus
- 270: box arrangement region-side illumination apparatus
- 276: placement portion
- 278: frame
- 279: placement position indicating mark
- 280: color calibration member
- 282: light transmissive hole
- 284: field angle adjusting indicator
- 286: calibration member
- 290: medicine box identifying means
- 292: image processing means
- 294: indicator assigning means
- 296: preparation-object medicine box displaying means
- 298: calibration means
- 300: medicine box information registering means
- 302: medicine box information database
- MB: medicine box
- α: loading-object medicine box placing region
- β: replenishing-object medicine box placing region

## Claims

1. A medicine box delivering apparatus (10), comprising:
an accommodating and delivering apparatus (20) capable of accommodating a large number of medicine boxes (MB) containing medicines, and delivering the large number of medicine boxes (MB) for each prescription;
a loading apparatus (30) capable of loading the large number of medicine boxes (MB) into the accommodating and delivering apparatus (20); and
a replenishing apparatus (70) capable of replenishing the large number of medicine boxes (MB) into the loading apparatus (30),
wherein the accommodating and delivering apparatus (20) comprises a plurality of medicine box paths (22) capable of accommodating the large number of medicine boxes (MB) under a state in which the large number of medicine boxes (MB) are arranged in series, and sequentially delivering the large number of medicine boxes (MB),
wherein the loading apparatus (30) comprises a loading rack (32) movable at a position adjacent to a medicine box input side of the plurality of medicine box paths (22),
wherein the replenishing apparatus (70) comprises:
a replenishing-object medicine box placing portion (74) on which the large number of medicine boxes (MB) are placeable in a parallel state; and
a transfer mechanism capable of transferring the large number of medicine boxes (MB), which are placed on the replenishing-object medicine box placing portion (74), to the loading rack (32) while maintaining the parallel state, and
wherein the loading rack (32) comprises:
a loading-object medicine box placing portion (36) on which the large number of medicine boxes (MB) conveyed from the replenishing apparatus (70) are placeable in the parallel state; and
a loading mechanism (38) capable of loading the large number of medicine boxes (MB) by conveying, toward the plurality of medicine box paths (22), each of the large number of medicine boxes (MB) placed on the loading-object medicine box placing portion (36).

2. A medicine box delivering apparatus (10) according to claim 1,
wherein the loading mechanism (38) comprises:
a conveying apparatus (44) comprising a conveying surface (54a) capable of coming into contact with a side surface of the each of the large number of medicine boxes (MB) placed on the loading-object medicine box placing portion (36), the conveying apparatus (44) being capable of conveying the each of the large number of medicine boxes (MB) in contact with the conveying surface (54a) in a direction crossing a direction in which the large number of medicine boxes (MB) are arranged on the loading-object medicine box placing portion (36); and
a push-out apparatus (42) capable of moving, toward the conveying surface (54a), the each of the large number of medicine boxes (MB) placed on the loading-object medicine box placing portion (36), and sequentially bringing the large number of medicine boxes (MB) into contact with the conveying surface (54a), and
wherein the each of the large number of medicine boxes (MB) in contact with the conveying surface (54a) is conveyed from the loading-object medicine box placing portion (36) to the accommodating and delivering apparatus (20).

3. A medicine box delivering apparatus (10) according to claim 2,
wherein the conveying apparatus (44) comprises:
an endless belt (54) serving as the conveying surface (54a) configured to move in a direction along the side surface of the each of the large number of medicine boxes (MB) placed on the loading-object medicine box placing portion (36); and
an abutment portion (54b) movable integrally with the conveying surface (54a) of the endless belt (54), and protruding from the conveying surface (54a), and
wherein, when the conveying surface (54a) is moved in the direction along the side surface of the each of the large number of medicine boxes (MB) under a state in which the each of the large number of medicine boxes (MB) placed on the loading-object medicine box placing portion (36) is moved toward the conveying surface (54a), the abutment portion (54b) abuts on an end surface (94) of one of the large number of medicine boxes (MB) on an upstream side in a conveying direction, the one of the large number of medicine boxes (MB) being located at a position adjacent to the endless belt (54), and the one of the large number of medicine boxes (MB) located at the position adjacent to the endless belt (54) is conveyed to the accommodating and delivering apparatus (20).

4. A medicine box delivering apparatus (10) according to any one of claims 1 to 3,
wherein the conveying apparatus (44) comprises a loading region width adjusting member (46) movable in the direction in which the large number of medicine boxes (MB) are arranged on the loading-object medicine box placing portion (36), the loading region width adjusting member (46) being capable of delimiting a loading-object medicine box placing region (α) of the loading-object medicine box placing portion (36), in which the large number of medicine boxes (MB) are to be placed,
wherein the replenishing apparatus (70) comprises a replenishing region width adjusting member (76) capable of delimiting a replenishing-object medicine box placing region (β) of the replenishing-object medicine box placing portion (74), in which the large number of medicine boxes (MB) are to be placed,
wherein the medicine box delivering apparatus (10) further comprises:
a control apparatus (100) capable of controlling an operation of the loading apparatus (30); and
position detecting means (40) for detecting a position of the replenishing region width adjusting member (76) of the replenishing apparatus (70), and
wherein the control apparatus (100) is configured to:
grasp the replenishing-object medicine box placing region (β) based on the position of the replenishing region width adjusting member (76) that is grasped based on a detection result from the position detecting means (40); and
operate the loading apparatus (30) so that the loading-object medicine box placing region (α) reaches a position adjacent to the replenishing-object medicine box placing region (β).

5. A medicine box delivering apparatus (10) according to claim 4,
wherein the position detecting means (40) comprises a sensor mounted to the loading rack (32), the sensor being capable of detecting the replenishing region width adjusting member (76), and
wherein the control apparatus (100) is capable of grasping the position of the replenishing region width adjusting member (76) by causing the position detecting means (40) to detect the replenishing region width adjusting member (76) at a position adjacent to the replenishing apparatus (70).

6. A medicine box delivering apparatus (10) according to claim 4,
wherein the replenishing region width adjusting member (76) is freely movable in a direction in which the large number of medicine boxes (MB) are arranged on the replenishing-object medicine box placing portion (74),
wherein the position detecting means (40) comprises a sensor capable of detecting a moving distance of the replenishing region width adjusting member (76), and
wherein the control apparatus (100) is capable of grasping the position of the replenishing region width adjusting member (76) based on the moving distance of the replenishing region width adjusting member (76) that is detected by the position detecting means (40).

7. A medicine box delivering apparatus (10) according to any one of claims 4 to 6,
wherein the replenishing apparatus (70) comprises:
an opposing wall (72c) arranged so as to be opposed to the replenishing region width adjusting member (76); and
positioning means (80) capable of positioning and fixing the replenishing region width adjusting member (76) at an arbitrary position, the positioning means (80) comprising an unfixing piece (83) for bringing the replenishing region width adjusting member (76) into an unfixed state,
wherein the unfixing piece (83) is integrally mounted to the replenishing region width adjusting member (76), and
wherein the replenishing region width adjusting member (76) is capable of coming into the unfixed state by pressing the unfixing piece (83) in a direction in which the replenishing-object medicine box placing region (β) is enlarged.

8. A medicine box delivering apparatus (10) according to claim 7,
wherein the unfixing piece (83) is provided so as to protrude toward the replenishing-object medicine box placing region (β) by biasing means (87),
wherein the replenishing region width adjusting member (76) comes into the unfixed state when the unfixing piece (83) is pressed against a biasing force of the biasing means (87), and
wherein, when the unfixed state is achieved by pressing the unfixing piece (83) and a force of the pressing is released after the unfixing piece (83) comes into contact with one of the large number of medicine boxes (MB) placed in the replenishing-object medicine box placing region (β), the biasing force of the biasing means (87) acts on the unfixing piece (83) so as to move the unfixing piece (83) and the replenishing region width adjusting member (76) in the direction in which the replenishing-object medicine box placing region (β) is enlarged, and then the unfixing piece (83) protrudes so as to bring the replenishing region width adjusting member (76) into a fixed state.

9. A medicine box delivering apparatus (10) according to any one of claims 4 to 7,
wherein the replenishing apparatus (70) comprises:
a medicine box accommodating box (72) having the replenishing-object medicine box placing portion (74) and the replenishing region width adjusting member (76) arranged inside;
a shutter (78) capable of opening and closing the medicine box accommodating box (72);
an opposing wall (72c) arranged so as to be opposed to the replenishing region width adjusting member (76); and
a movable piece (90) to be actuated in association with opening and closing of the shutter (78),
wherein, when the shutter (78) is in an opened state, the movable piece (90) protrudes from the opposing wall (72c), and the replenishing-object medicine box placing region (β) is formed between the movable piece (90) and the replenishing region width adjusting member (76), and
wherein, when the shutter (78) is brought into a closed state, the movable piece (90) becomes flush with the opposing wall (72c) or retreats in a direction farther away from the replenishing region width adjusting member (76) with respect to the opposing wall (72c).

10. A medicine box delivering apparatus (10) according to any one of claims 1 to 9, further comprising:
stock management means (200) for managing a stock of the large number of medicine boxes (MB) in the accommodating and delivering apparatus (20);
delivery count detecting means (24) capable of detecting a delivery count (Y) of the large number of medicine boxes (MB) for each of the plurality of medicine box paths (22); and
loading count detecting means (23) capable of detecting a loading count (X) of the large number of medicine boxes (MB) loaded into the each of the plurality of medicine box paths (22) of the accommodating and delivering apparatus (20) based on an actuation state of the loading mechanism (38),
wherein the stock management means (200) is configured to derive a stock count (Z) of the large number of medicine boxes (MB) in the each of the plurality of medicine box paths (22) based on the loading count (X) of the large number of medicine boxes (MB) loaded into the each of the plurality of medicine box paths (22) that is detected by the loading count detecting means (23), and the delivery count (Y) of the large number of medicine boxes (MB) in the each of the plurality of medicine box paths (22) that is detected by the delivery count detecting means (24).

11. A medicine box delivering apparatus (10) according to claim 10, wherein the stock management means (200) is configured to:
recognize, as a medicine box path group (22G), a plurality of medicine box paths (22) provided so as to accommodate and deliver medicine boxes (MB) of the same type in the accommodating and delivering apparatus (20); and
derive a stock count (ZG) of the medicine boxes (MB) in the medicine box path group (22G) by deriving and summing stock counts (Z) of the medicine boxes (MB) in the plurality of medicine box paths (22) of the medicine box path group (22G).

12. A medicine box delivering apparatus (10) according to any one of claims 1 to 10, further comprising preparation count deriving means (202) capable of deriving a preparation count (J) of the large number of medicine boxes (MB) to be prepared in the replenishing apparatus (70),
wherein the preparation count deriving means (202) is configured to:
recognize, as a medicine box path group (22G), a plurality of medicine box paths (22) provided so as to accommodate and deliver medicine boxes (MB) of the same type in the accommodating and delivering apparatus (20); and
when a type of the large number of medicine boxes (MB) to be prepared in the replenishing apparatus (70) is a type of the medicine boxes (MB) corresponding to the medicine box path group (22G), derive a number obtained by summing numbers of medicine boxes (MB) loadable into the plurality of medicine box paths (22) of the medicine box path group (22G) as a preparation count (JG) of the large number of medicine boxes (MB) to be prepared in the replenishing apparatus (70).

13. A medicine box delivering apparatus (10) according to any one of claims 1 to 12, further comprising loading control means (204) for controlling a loading operation for loading the large number of medicine boxes (MB) into the accommodating and delivering apparatus (20) by the loading apparatus (30),
wherein the loading control means (204) is configured to:
recognize, as the medicine box path group (22G), the plurality of medicine box paths (22) provided so as to accommodate and deliver the medicine boxes (MB) of the same type in the accommodating and delivering apparatus (20); and
when medicine boxes (MB) of a type corresponding to the medicine box path group (22G) are prepared in the replenishing apparatus (70), distribute the medicine boxes (MB) prepared in the replenishing apparatus (70) to the plurality of medicine box paths (22) of the medicine box path group (22G) by the loading apparatus (30).

14. A medicine box delivering apparatus (10) according to any one of claims 1 to 13, further comprising delivery control means (206) capable of controlling a delivery operation for the large number of medicine boxes (MB) in the medicine box delivering apparatus (10),
wherein the delivery control means (206) is configured to:
recognize, as the medicine box path group (22G), the plurality of medicine box paths (22) provided so as to accommodate and deliver the medicine boxes (MB) of the same type in the accommodating and delivering apparatus (20); and
when delivering medicine boxes (MB) corresponding to the medicine box path group (22G), switch the plurality of medicine box paths (22) for delivering the medicine boxes (MB) in a predetermined order.

15. A medicine box delivering apparatus (10) according to any one of claims 1 to 14,
wherein the replenishing apparatus (70) comprises a plurality of replenishing apparatus (70),
wherein the medicine box delivering apparatus (10) further comprises:
preparation count deriving means (202) capable of deriving a preparation count (J) of the large number of medicine boxes (MB) to be prepared in the plurality of replenishing apparatus (70); and
maximum placement count deriving means (208) for deriving, as a maximum placement count (M), a number of medicine boxes (MB) maximally placeable on the replenishing-object medicine box placing portion (74) in one of the plurality of replenishing apparatus (70), and
wherein n+1 of the plurality of replenishing apparatus (70) are used for replenishment of the large number of medicine boxes (MB) when the preparation count (J) is larger than the maximum placement count (M) and a relationship of J=n·M+α is established, where "n" and "α" represent natural numbers.

16. A medicine box delivering apparatus (10) according to any one of claims 1 to 15, further comprising a medicine box identifying apparatus (250) capable of identifying a type of the large number of medicine boxes (MB),
wherein the medicine box identifying apparatus (250) comprises:
a photographing apparatus (260) capable of photographing one of the large number of medicine boxes (MB); and
medicine box identifying means (290) for identifying the large number of medicine boxes (MB) based on an image obtained by the photographing apparatus (260),
wherein the photographing apparatus (260) comprises:
a photographing stage (264) having light transmissive properties and having a placement surface on which the one of the large number of medicine boxes (MB) is placeable; and
a camera (266) capable of photographing the one of the large number of medicine boxes (MB) placed on the photographing stage (264) from a region opposite to the placement surface across the photographing stage (264),
wherein the medicine box identifying means (290) comprises a medicine box information database (302) that accumulates, for each type of the large number of medicine boxes (MB), size information on a size of each of the large number of medicine boxes (MB), and color information on a color contained in a surface of the each of the large number of medicine boxes (MB), and
wherein the medicine box identifying means (290) is capable of identifying the type of the large number of medicine boxes (MB) through:
a size-based narrowing step of recognizing, based on the image obtained by the camera (266), a size of a medicine box image region corresponding to the one of the large number of medicine boxes (MB) placed on the photographing stage (264) as the size of the each of the large number of medicine boxes (MB), and narrowing down candidates for the large number of medicine boxes (MB) based on the medicine box information database (302); and
a color-based narrowing step of performing matching between information on a color contained in the medicine box image region and the color information on the each of the large number of medicine boxes (MB) which are narrowed down as the candidates in the size-based narrowing step, and further narrowing down the candidates for the large number of medicine boxes (MB).

17. A medicine box delivering apparatus (10) according to claim 16,
wherein the photographing apparatus (260) comprises:
a camera-side region (262b) on the camera (266) side; and
a box arrangement-side region (262d) on a side on which the one of the large number of medicine boxes (MB) to be photographed is arranged,
the camera-side region (262b) and the box arrangement-side region (262d) being separated from each other across the photographing stage (264) as a boundary,
wherein the photographing apparatus (260) further comprises brightness adjusting means (267) capable of adjusting a brightness of the camera-side region (262b) and a brightness of the box arrangement-side region (262d) independently,
wherein the photographing apparatus (260) is capable of acquiring:
an image (A) to be obtained by photographing the one of the large number of medicine boxes (MB) under a state in which the camera-side region (262b) is brighter than the box arrangement-side region (262d); and
an image (B) to be obtained by photographing the one of the large number of medicine boxes (MB) under a state in which the box arrangement-side region (262d) is brighter than the camera-side region (262b),
wherein, in the size-based narrowing step, the medicine box identifying means (290) is capable of recognizing the size of the each of the large number of medicine boxes (MB) based on a size of a shadow of the one of the large number of medicine boxes (MB) that is contained in the image (B), and
wherein, in the color-based narrowing step, the medicine box identifying means (290) is capable of narrowing down the large number of medicine boxes (MB) based on information on a color contained in a region of the image (A) corresponding to the shadow of the one of the large number of medicine boxes (MB) that is contained in the image (B).

18. A medicine box delivering apparatus (10) according to claim 17,
wherein the brightness adjusting means (267) comprises:
a camera-side illumination apparatus (268) provided in the camera-side region (262b); and
a box arrangement region-side illumination apparatus (270) provided on the box arrangement region (262d) side,
wherein the photographing apparatus (260) is capable of acquiring the image (B) by photographing the one of the large number of medicine boxes (MB) with the camera (266) under an ON state of the box arrangement region-side illumination apparatus (270) and an OFF state of the camera-side illumination apparatus (268), and
wherein the photographing apparatus (260) is capable of acquiring the image (A) by photographing the one of the large number of medicine boxes (MB) with the camera (266) under an OFF state of the box arrangement region-side illumination apparatus (270) and an ON state of the camera-side illumination apparatus (268).

19. A medicine box delivering apparatus (10) according to any one of claims 1 to 18, further comprising:
a photographing apparatus (260) capable of photographing one of the large number of medicine boxes (MB);
image processing means (292) for processing an image obtained by the photographing apparatus (260); and
preparation-object medicine box displaying means (296) capable of displaying an image corresponding to the type of the large number of medicine boxes (MB) to be prepared in the replenishing apparatus (70),
wherein the photographing apparatus (260) comprises:
a camera-side region (262b) on the camera (266) side; and
a box arrangement-side region (262d) on a side on which the one of the large number of medicine boxes (MB) to be photographed is arranged,
the camera-side region (262b) and the box arrangement-side region (262d) being separated from each other across the photographing stage (264) as a boundary,
wherein the photographing apparatus (260) further comprises brightness adjusting means (267) capable of adjusting a brightness of the camera-side region (262b) and a brightness of the box arrangement-side region (262d) independently,
wherein the photographing apparatus (260) is capable of acquiring:
an image (A) to be obtained by photographing the one of the large number of medicine boxes (MB) under a state in which the camera-side region (262b) is brighter than the box arrangement-side region (262d); and
an image (B) to be obtained by photographing the one of the large number of medicine boxes (MB) under a state in which the box arrangement-side region (262d) is brighter than the camera-side region (262b),
wherein the image processing means (292) is capable of acquiring an image of the one of the large number of medicine boxes (MB) by clipping, out of the image (A), a region corresponding to a shadow of the one of the large number of medicine boxes (MB) that is contained in the image (B), and
wherein the preparation-object medicine box displaying means (296) is capable of displaying the image of the one of the large number of medicine boxes (MB) that is obtained by the image processing means (292).

20. A medicine box delivering apparatus (10) according to claim 19,
wherein the brightness adjusting means (267) comprises:
a camera-side illumination apparatus (268) provided in the camera-side region (262b); and
a box arrangement region-side illumination apparatus (270) provided on the box arrangement region (262d) side,
wherein the photographing apparatus (260) is capable of acquiring the image (B) by photographing the one of the large number of medicine boxes (MB) with the camera (266) under an ON state of the box arrangement region-side illumination apparatus (270) and an OFF state of the camera-side illumination apparatus (268), and
wherein the photographing apparatus (260) is capable of acquiring the image (A) by photographing the one of the large number of medicine boxes (MB) with the camera (266) under an OFF state of the box arrangement region-side illumination apparatus (270) and an ON state of the camera-side illumination apparatus (268).

21. A medicine box delivering apparatus (10) according to any one of claims 16 to 20, further comprising:
a medicine box information database (302) in which the image of the one of the large number of medicine boxes (MB) is registered for the each type of the large number of medicine boxes (MB);
indicator assigning means (294) for assigning an indicator to a predetermined region of the image of the one of the large number of medicine boxes (MB); and
preparation-object medicine box displaying means (296) capable of displaying an image corresponding to the type of the large number of medicine boxes (MB) to be prepared in the replenishing apparatus (70),
wherein, when the type of the large number of medicine boxes (MB) to be prepared in the replenishing apparatus (70) is a type assigned with the indicator by the indicator assigning means (294), the preparation-object medicine box displaying means (296) displays the image of the one of the large number of medicine boxes (MB) in a state of being assigned with the indicator.

22. A medicine box delivering apparatus (10) according to any one of claims 16 to 21, further comprising a calibration member (286) having a calibration surface (286a) capable of covering the photographing stage (264), the calibration surface (286a) having at least one of a lightness, a saturation, and a hue which is uniform over an entire range of the calibration surface (286a),
wherein the at least one of the lightness, the saturation, and the hue is calibrated with reference to an image obtained by photographing the one of the large number of medicine boxes (MB) with the camera (266) under a state in which the photographing stage (264) is covered by the calibration surface (286a).

23. A medicine box delivering apparatus (10) according to any one of claims 16 to 22,
wherein the photographing stage (264) comprises a placement portion (276) provided to a frame (278) thereof, the placement portion (276) having light transmissive properties and being configured so that the one of the large number of medicine boxes (MB) is placeable thereon,
wherein the frame (278) comprises a color calibration member (280) having a reference color, the color calibration member (280) being provided on a surface (278a) of the frame (278) on the camera (266) side,
wherein the camera (266) is capable of performing photography so that a single image contains the color calibration member (280) and the one of the large number of medicine boxes (MB) placed on the photographing stage (264), and
wherein a color of the single image obtained through the photography is corrected with reference to the reference color of the color calibration member (280) that is contained in the single image.

24. A medicine box delivering apparatus (10) according to any one of claims 16 to 23,
wherein the photographing stage (264) comprises a placement portion (276) provided to a frame (278) thereof, the placement portion (276) having light transmissive properties and being configured so that the one of the large number of medicine boxes (MB) is placeable thereon,
wherein the frame (278) comprises a light transmissive hole (282) that allows light to pass from a region opposite to the camera (266) toward a region on the camera (266) side through the photographing stage (264), and
wherein an illuminance of the image obtained by photographing the one of the large number of medicine boxes (MB) is corrected with reference to an illuminance of a region corresponding to the light transmissive hole (282) that is contained in an image obtained by photographing the one of the large number of medicine boxes (MB) under the ON state of the box arrangement region-side illumination apparatus (270).

25. A medicine box delivering apparatus (10) according to any one of claims 16 to 24,
wherein the photographing stage (264) comprises a placement portion (276) provided to a frame (278) thereof, the placement portion (276) having light transmissive properties and being configured so that the one of the large number of medicine boxes (MB) is placeable thereon,
wherein the frame (278) comprises a field angle adjusting indicator (284) provided at a position adjacent to a corner of the placement portion (276), and
wherein calibration of the camera (266) is executable by using a coordinate value of the field angle adjusting indicator (284) that is set through measurement.

26. A medicine box delivering apparatus (10) according to any one of claims 1 to 25,
wherein the each of the plurality of medicine box paths (22) comprises discharge regulating means (26) provided on an outlet (22e) side thereof,
wherein the discharge regulating means (26) comprises:
a push-up piece (26b) for pushing up the each of the large number of medicine boxes (MB) from a bottom surface (22a) side of the each of the plurality of medicine box paths (22); and
a receiving piece (26c) configured to operate in association with the push-up piece (26b),
wherein, under a delivery standby state of the each of the large number of medicine boxes (MB), the receiving piece (26c) protrudes upward from the bottom surface (22a) side of the each of the plurality of medicine box paths (22) so that the each of the large number of medicine boxes (MB) is retained in the each of the plurality of medicine box paths (22),
wherein, when discharging the each of the large number of medicine boxes (MB), the push-up piece (26b) is actuated to push up the each of the large number of medicine boxes (MB), and the receiving piece (26c) retreats toward the bottom surface (22a) of the each of the plurality of medicine box paths (22),
wherein the receiving piece (26c) comprises:
an opposing portion (232) to be opposed to the each of the large number of medicine boxes (MB) in the delivery standby state in the each of the plurality of medicine box paths (22);
a back portion (234) located opposite to the opposing portion (232); and
a roller (238) provided at a distal end of the receiving piece (26c),
wherein the opposing portion (232) comprises:
a contact portion on a proximal end side of the receiving piece (26c); and
a non-contact portion on the distal end side of the receiving piece (26c),
the contact portion and the non-contact portion being provided across a middle portion of the receiving piece (26c) as a boundary,
the non-contact portion being further inclined toward the back portion (234) than the contact portion, and
wherein, under a state in which the contact portion is held in surface contact with the each of the large number of medicine boxes (MB) in the delivery standby state, a gap is formed between the each of the large number of medicine boxes (MB) and the non-contact portion.

27. A medicine box delivering apparatus (10) according to any one of claims 1 to 26, further comprising long-term remaining item detecting means capable of deriving a remaining period of the each of the large number of medicine boxes (MB) in the accommodating and delivering apparatus (20), and detecting a type of medicine boxes (MB) corresponding to the remaining period which is a predetermined period or longer.
